# EUROPEAN PATENT SPECIFICATION

(11) **EP 3 328 107 B1**
(45) Date of publication and mention of the grant of the patent: **09.10.2019**
(21) Application number: 15900777.2
(22) Date of filing: 13.08.2015
(51) Int. Cl.: H04W 12/02, H04W 12/10, H04L 29/06, H04W 12/06, H04W 12/04, G09C 1/00, H04L 9/08, H04L 9/14

(54) **METHOD, RELEVANT DEVICE AND SYSTEM FOR MESSAGE PROTECTION**
VERFAHREN, RELEVANTE VORRICHTUNG UND SYSTEM ZUM NACHRICHTENSCHUTZ
PROCÉDÉ, DISPOSITIF ET SYSTÈME CORRESPONDANTS DE PROTECTION DE MESSAGE

(43) Date of publication of application: 30.05.2018
(73) Proprietor: Huawei Technologies Co., Ltd., Longgang District Shenzhen, Guangdong 518129 (CN)
(72) Inventor: YING, Jiangwei, Shenzhen Guangdong 518129 (CN); ZHANG, Lijia, Shenzhen Guangdong 518129 (CN); CHEN, Jing, Shenzhen Guangdong 518129 (CN)
(74) Representative: Epping - Hermann - Fischer
(86) International application number: PCT/CN2015/086836
(87) International publication number: WO 2017/024579

(56) References cited:
- WO-A1-2007/138430
- CN-A- 1 762 127
- CN-A- 101 588 579
- US-A1- 2013 165 077
- "3rd Generation Partnership Project; Technical Specification Group Services and System Aspects Study on EGPRS Access Security Enhancements with relation to cellular IoT (Release 13)", 3GPP STANDARD; 3GPP TR 33.860, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V0.2.0, 13 May 2015 (2015-05-13), pages 1-14, XP050966408, [retrieved on 2015-05-13]
- ERICSSON ET AL: "Access security related functions for enhanced General Packet Radio Service in relation to Cellular Internet of Things", 3GPP DRAFT; 43020_CR0036R1_(REL-13)_S3-160285, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Dubrovnik, Croatia; 20160201 - 20160205 6 March 2016 (2016-03-06), XP051077667, Retrieved from the Internet: URL:http://www.3gpp.org/ftp/Meetings_3GPP_ SYNC/SA/Docs/ [retrieved on 2016-03-06]
- '3RD GENERATION PARTNERSHIP PROJECT; TECHNICAL SPECIFICATION GROUP SERVICES AND SYSTEM ASPECTS; ''General Packet Radio Service (GPRS); Service Description' 3GPPTS 23.060 V13.3.0 30 June 2015, pages 102 - 121, XP055363623

## Description

### TECHNICAL FIELD

The present invention relates to the communications field, and in particular, to a message protection method, a related device, and a system.

### BACKGROUND

User equipment (User Equipment, UE for short) communication in the cellular Internet of Things (Internet of Things, IoT for short) has characteristics of small data volume and low data sending frequency. Moreover, in a mobile communications system, information is transferred by using a radio channel. As a result, the information is easily eavesdropped, intercepted, or tampered by an attacker. Data in the cellular IoT involves much data that is highly sensitive, is highly private, and has a high security level requirement. Therefore, people are seeking a better way to ensure security of cellular IoT communication.

In the prior art, it is considered to improve security of a general packet radio service (General Packet Radio Service, GPRS for short) technology to ensure the security of the cellular IoT communication, which specifically includes: improving unidirectional authentication algorithm agreement (Authentication Key Agreement, AKA for short) between UE and a network side to bidirectional authentication; and generating an integrity protection key to protect security of signaling between the UE and a serving GPRS support node (Serving GPRS Support Node, SGSN for short).

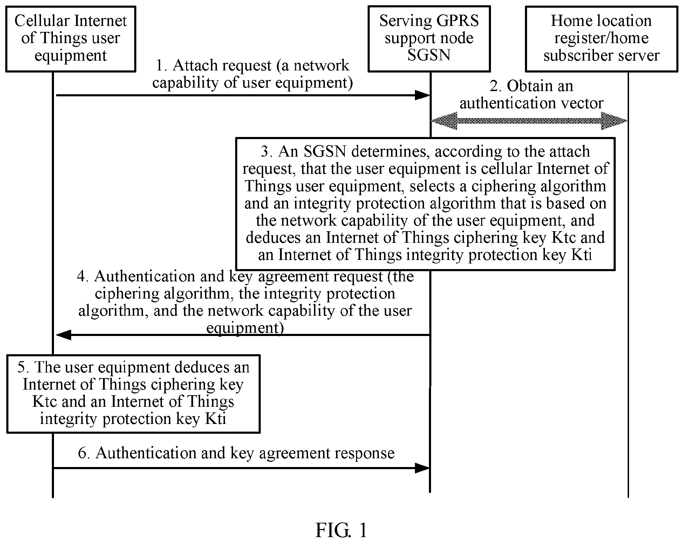

Referring to FIG. 1, FIG. 1 is a schematic flowchart of GPRS based signaling integrity protection in the prior art, where authentication and key agreement are implemented in one procedure, and according to a security requirement, an authentication and key agreement request message needs to be protected by using an Internet of Things integrity protection key (Session key of Gb based cellular IoT for integrity protection, Kti for short) and an integrity protection algorithm. UE receives the authentication and key agreement request message and verifies integrity of the message. After the verification succeeds, the UE and an SGSN separately enable ciphering protection of a data plane and ciphering and integrity protection of a signaling plane.

However, in the prior art, how to implement protection for an entire key and algorithm agreement signaling procedure is not specifically defined. Protection of the signaling plane between the UE and the SGSN needs to be implemented on a logical link control (Logical Link Control, LLC for short) protocol layer, but a key and an algorithm need to be agreed on a GPRS mobility management (GPRS Mobility Management, GMM for short) protocol layer/session management (Session Management, SM for short) protocol layer. When the UE receives, on the LLC protocol layer, the authentication and key agreement request message sent by the SGSN, the UE has not obtained the key and the algorithm from the GMM/SM protocol layer, and cannot verify the integrity of the authentication and key agreement request message. Therefore, the prior art lacks a supportable implementation solution, leading to operation difficulties in an actual application.

"3rd Generation Partnership Project; Technical Specification Group Services and System Aspects Study on EGPRS Access Security Enhancements with relation to cellular IoT (Release 13)" 3GPP TR33.860 v0.2.0 discloses an algorithm negotiation method including that an SGSN sends an authentication and ciphering request including the chosen cipher algorithm and integrity algorithm and MS network capability to Cellular IoT UE. The Cellular IoT UE derives Ktc and Kti, and sends an authentication and ciphering response to the SGSN. It also discloses that the authentication and ciphering request is integrity protected.

### SUMMARY

Embodiments of the present invention provide a message protection method, a related device, and a system, to obtain support in an actual application, thereby improving security of a solution and preventing a downgrade-attack from an attacker to an algorithm.

In view of this, a first aspect of the present invention provides a message protection method, including:
receiving, by user equipment UE by using a GPRS mobility management GMM/session management SM protocol layer of the UE, an authentication and key agreement request message sent by a serving GPRS support node SGSN, where the authentication and key agreement request message carries a first message authentication code and a first algorithm identifier, and the first algorithm identifier is used to indicate a first algorithm;
obtaining, by the UE, the first algorithm identifier on the GMM/SM protocol layer of the UE according to the authentication and key agreement request message and generating a first key;
verifying, by the UE, the first message authentication code on the GMM/SM protocol layer of the UE according to the first key and the first algorithm;
generating, by the UE if the UE determines that the verification of the first message authentication code succeeds, an authentication and key agreement response message on the GMM/SM protocol layer of the UE according to the first key and the first algorithm, where the authentication and key agreement response message carries a second message authentication code; and
sending, by the UE, the authentication and key agreement response message to the SGSN by using the GMM/SM protocol layer of the UE, so that the SGSN verifies the second message authentication code;
where after the sending, by the UE, the authentication and key agreement response message to the SGSN by using the GMM/SM protocol layer of the UE, the method further includes:
   sending, by the UE, the first key and the first algorithm identifier to a logical link control LLC protocol layer of the UE by using the GMM/SM protocol layer of the UE;
   ciphering, by the UE, user plane data and control plane signaling on the LLC protocol layer of the UE by using the first ciphering key and the first ciphering algorithm indicated by the first ciphering algorithm identifier; and
   performing, by the UE, integrity protection for the control plane signaling on the LLC protocol layer of the UE by using the first integrity key and the first integrity protection algorithm indicated by the first integrity protection algorithm identifier.

With reference to the first aspect of the embodiments of the present invention, in a first possible implementation manner,
the first key includes a first ciphering key, and the first algorithm includes a first ciphering algorithm; or
the first key includes a first integrity key, and the first algorithm includes a first integrity protection algorithm; or
the first key includes a first ciphering key and a first integrity key, and the first algorithm includes a first ciphering algorithm and a first integrity protection algorithm.

With reference to the first possible implementation manner of the first aspect of the embodiments of the present invention, in a second possible implementation manner, after the generating an authentication and key agreement response message on the GMM/SM protocol layer of the UE according to the first key and the first algorithm, the method further includes:
ciphering, by the UE, the authentication and key agreement response message on the GMM/SM protocol layer of the UE by using the first ciphering key and the first ciphering algorithm indicated by a first ciphering algorithm identifier; or
performing, by the UE, integrity protection for the authentication and key agreement response message on the GMM/SM protocol layer of the UE by using the first integrity key and the first integrity protection algorithm indicated by a first integrity protection algorithm identifier; or
ciphering, by the UE, the authentication and key agreement response message on the GMM/SM protocol layer of the UE by using the first ciphering key and the first ciphering algorithm indicated by a first ciphering algorithm identifier, and performing integrity protection for the authentication and key agreement response message on the GMM/SM protocol layer of the UE by using the first integrity key and the first integrity protection algorithm indicated by a first integrity protection algorithm identifier.

With reference to the first aspect of the embodiments of the present invention or the first or the second implementation manner of the first aspect, in a third possible implementation manner, before the receiving, by UE by using a GMM/SM protocol layer of the UE, an authentication and key agreement request message sent by an SGSN, the method further includes:
sending, by the UE, an attach request message to a GMM/SM protocol layer of the SGSN by using the GMM/SM protocol layer of the UE, where the attach request message carries an identifier of the UE and network capability information of the UE, so that the SGSN generates the authentication and key agreement request message on the GMM/SM protocol layer of the SGSN according to the attach request message.

A second aspect of the present invention provides a message protection method, including:
obtaining, by a serving GPRS support node SGSN, a second algorithm identifier on a GPRS mobility management GMM/session management SM protocol layer of the SGSN and generating a second key, where the second algorithm identifier is used to indicate a second algorithm;
generating, by the SGSN, an authentication and key agreement request message on the GMM/SM protocol layer of the SGSN by using the second key and the second algorithm, and sending the authentication and key agreement request message to user equipment UE, where the authentication and key agreement request message carries a first message authentication code and the second algorithm identifier;
receiving, by the SGSN by using the GMM/SM protocol layer of the SGSN, an authentication and key agreement response message sent by the UE, where the authentication and key agreement response message carries a second message authentication code; and
verifying, by the SGSN, the second message authentication code on the GMM/SM protocol layer of the SGSN by using the second key and the second algorithm;
where after the verifying, by the SGSN, the second message authentication code on the GMM/SM protocol layer of the SGSN by using the second key and the second algorithm, the method further includes:
   sending, by the SGSN if the SGSN determines that the verification of the second message authentication code succeeds, the second key and the second algorithm identifier to a logical link control LLC protocol layer of the SGSN by using the GMM/SM protocol layer of the SGSN;
   ciphering, by the SGSN, user plane data and control plane signaling on the LLC protocol layer of the SGSN by using the second ciphering key and the second ciphering algorithm indicated by a second ciphering algorithm identifier; and
   performing, by the SGSN, integrity protection for the control plane signaling on the LLC protocol layer of the SGSN by using the second integrity key and the second integrity protection algorithm indicated by a second integrity protection algorithm identifier.

With reference to the second aspect of the embodiments of the present invention, in a first possible implementation manner,
the second key includes a second ciphering key, and the second algorithm includes a second ciphering algorithm; or
the second key includes a second integrity key, and the second algorithm includes a second integrity protection algorithm; or
the second key includes a second ciphering key and a second integrity key, and the second algorithm includes a second ciphering algorithm and a second integrity protection algorithm.

With reference to the second aspect of the embodiments of the present invention or the first possible implementation manner of the second aspect, in a second possible implementation manner, before the generating an authentication and key agreement request message on the GMM/SM protocol layer of the SGSN, and sending the authentication and key agreement request message to user equipment UE, the method further includes:
receiving, by the SGSN by using the GMM/SM protocol layer of the SGSN, an attach request message sent by the UE, where the attach request message carries an identifier of the UE and network capability information of the UE; and
the obtaining, by an SGSN, a second algorithm identifier on a GMM/SM protocol layer of the SGSN and generating a second key includes:
   obtaining, by the SGSN, the second algorithm according to the network capability information of the UE; and
   obtaining, by the SGSN, authorization vector information of the UE according to the identifier of the UE and generating the second key according to the authorization vector information.

With reference to the second aspect of the embodiments of the present invention or the first or the second possible implementation manner of the second aspect, in a third possible implementation manner, after the verifying, by the SGSN, the second message authentication code on the GMM/SM protocol layer of the SGSN by using the second key and the second algorithm, the method further includes:
sending, by the SGSN if the SGSN determines that the verification of the second message authentication code succeeds, the second key and the second algorithm identifier to a logical link control LLC protocol layer of the SGSN by using the GMM/SM protocol layer of the SGSN.

With reference to the third possible implementation manner of the second aspect of the embodiments of the present invention, in a fourth possible implementation manner, after the sending, by the SGSN if the SGSN determines that the verification of the second message authentication code succeeds, the second key and the second algorithm identifier to a logical link control LLC protocol layer of the SGSN by using the GMM/SM protocol layer of the SGSN, the method further includes:
ciphering, by the SGSN, user plane data and control plane signaling on the LLC protocol layer of the SGSN by using the second ciphering key and the second ciphering algorithm indicated by a second ciphering algorithm identifier; or
ciphering, by the SGSN, user plane data and control plane signaling on the LLC protocol layer of the SGSN by using the second ciphering key and the second ciphering algorithm indicated by a second ciphering algorithm identifier, and performing integrity protection for the control plane signaling on the LLC protocol layer of the SGSN by using the second integrity key and the second integrity protection algorithm indicated by a second integrity protection algorithm identifier.

A fifth aspect of the present invention provides user equipment, including:
a receiving module, configured to receive, by using a GPRS mobility management GMM/session management SM protocol layer of the UE, an authentication and key agreement request message sent by a serving GPRS support node SGSN, where the authentication and key agreement request message carries a first message authentication code and a first algorithm identifier, and the first algorithm identifier is used to indicate a first algorithm;
an obtaining module, configured to obtain the first algorithm identifier on the GMM/SM protocol layer of the UE according to the authentication and key agreement request message received by the receiving module and generate a first key;
an verification module, configured to verify the first message authentication code on the GMM/SM protocol layer of the UE according to the first key obtained by and the first algorithm generated by the obtaining module;
a generation module, configured to generate, if the verification module determines that the verification of the first message authentication code succeeds, an authentication and key agreement response message on the GMM/SM protocol layer of the UE according to the first key and the first algorithm, where the authentication and key agreement response message carries a second message authentication code; and
a first sending module, configured to send the authentication and key agreement response message generated by the generation module to the SGSN by using the GMM/SM protocol layer of the UE;
where the user equipment further includes:
   a third sending module, configured to: after the first sending module sends the authentication and key agreement response message to the SGSN by using the GMM/SM protocol layer of the UE, send the first key and the first algorithm identifier to a logical link control LLC protocol layer of the UE by using the GMM/SM protocol layer of the UE;
   a ciphering module, configured to: after the third sending module sends the first key and the first algorithm identifier to the logical link control LLC protocol layer of the UE by using the GMM/SM protocol layer of the UE, cipher user plane data and control plane signaling on the LLC protocol layer of the UE by using the first ciphering key and the first ciphering algorithm indicated by a first ciphering algorithm identifier, and perform integrity protection for the control plane signaling on the LLC protocol layer of the UE by using the first integrity key and the first integrity protection algorithm indicated by a first integrity protection algorithm identifier.

With reference to the fifth aspect of the embodiments of the present invention, in a first possible implementation manner,
the first key includes a first ciphering key, and the first algorithm includes a first ciphering algorithm; or
the first key includes a first integrity key, and the first algorithm includes a first integrity protection algorithm; or
the first key includes a first ciphering key and a first integrity key, and the first algorithm includes a first ciphering algorithm and a first integrity protection algorithm.

With reference to the first possible implementation manner of the fifth aspect of the embodiments of the present invention, in a second possible implementation manner, the user equipment further includes:
a message processing module, configured to: after the generation module generates the authentication and key agreement response message on the GMM/SM protocol layer of the UE according to the first key and the first algorithm, cipher the authentication and key agreement response message on the GMM/SM protocol layer of the UE by using the first ciphering key and the first ciphering algorithm indicated by a first ciphering algorithm identifier; or
perform integrity protection for the authentication and key agreement response message on the GMM/SM protocol layer of the UE by using the first integrity key and the first integrity protection algorithm indicated by a first integrity protection algorithm identifier; or
cipher the authentication and key agreement response message on the GMM/SM protocol layer of the UE by using the first ciphering key and the first ciphering algorithm indicated by a first ciphering algorithm identifier, and perform integrity protection for the authentication and key agreement response message on the GMM/SM protocol layer of the UE by using the first integrity key and the first integrity protection algorithm indicated by a first integrity protection algorithm identifier.

With reference to the fifth aspect of the embodiments of the present invention or the first or the second implementation manner of the fifth aspect, in a third possible implementation manner, the user equipment further includes:
a second sending module, configured to: before the receiving module receives, by using the GMM/SM protocol layer of the UE, the authentication and key agreement request message sent by the SGSN, send an attach request message to a GMM/SM protocol layer of the SGSN by using the GMM/SM protocol layer of the UE, where the attach request message carries an identifier of the UE and network capability information of the UE, so that the SGSN generates the authentication and key agreement request message on the GMM/SM protocol layer of the SGSN according to the attach request message.

A sixth aspect of the present invention provides a serving GPRS support node, including:
an obtaining module, configured to obtain a second algorithm identifier on a GPRS mobility management GMM/session management SM protocol layer of the SGSN and generate a second key, where the second algorithm identifier is used to indicate a second algorithm;
a generation module, configured to generate an authentication and key agreement request message on the GMM/SM protocol layer of the SGSN by using the second key and the second algorithm that are obtained by the obtaining module, and send the authentication and key agreement request message to user equipment UE, where the authentication and key agreement request message carries a first message authentication code and the second algorithm identifier;
a first receiving module, configured to receive, by using the GMM/SM protocol layer of the SGSN, an authentication and key agreement response message sent by the generation module, where the authentication and key agreement response message carries a second message authentication code; and
an verification module, configured to verify the second message authentication code, received by the first receiving module, on the GMM/SM protocol layer of the SGSN by using the second key and the second algorithm;
where the device further includes:
   a sending module, configured to send, if the verification module determines that the verification of the second message authentication code succeeds, the second key and the second algorithm identifier to a logical link control LLC protocol layer of the SGSN by using the GMM/SM protocol layer of the SGSN; and
   a ciphering module, configured to: after the sending module sends the second key and the second algorithm to the logical link control LLC protocol layer of the SGSN by using the GMM/SM protocol layer of the SGSN, cipher user plane data and control plane signaling on the LLC protocol layer of the SGSN by using the second ciphering key and the second ciphering algorithm indicated by a second ciphering algorithm identifier, and perform integrity protection for the control plane signaling on the LLC protocol layer of the SGSN by using the second integrity key and the second integrity protection algorithm indicated by a second integrity protection algorithm identifier.

With reference to the sixth aspect of the embodiments of the present invention, in a first possible implementation manner,
the second key includes a second ciphering key, and the second algorithm includes a second ciphering algorithm; or
the second key includes a second integrity key, and the second algorithm includes a second integrity protection algorithm; or
the second key includes a second ciphering key and a second integrity key, and the second algorithm includes a second ciphering algorithm and a second integrity protection algorithm.

With reference to the sixth aspect of the embodiments of the present invention or the first possible implementation manner of the sixth aspect, in a second possible implementation manner, the device further includes:
a second receiving module, configured to: before the generation module generates the authentication and key agreement request message on the GMM/SM protocol layer of the SGSN, and sends the authentication and key agreement request message to the user equipment UE, receive, by using the GMM/SM protocol layer of the SGSN, an attach request message sent by the UE, where the attach request message carries an identifier of the UE and network capability information of the UE; and
the obtaining module includes:
   an obtaining unit, configured to obtain the second algorithm according to the network capability information of the UE; and
   a generation unit, configured to obtain authorization vector information of the UE according to the identifier of the UE and generate the second key according to the authorization vector information.

A thirteenth aspect of the present invention provides a message protection system, including: a user terminal and a serving GPRS support node, where
the user terminal is the user terminal in any one of the fifth aspect and the first to the fifth possible implementation manners of the fifth aspect; and
the serving GPRS support node is the serving GPRS support node in any one of the sixth aspect and the first to the fourth possible implementation manners of the sixth aspect.

It can be seen from the foregoing technical solutions that, the embodiments of the present invention have the following advantages:
In the embodiments of the present invention, an implementation solution for message protection between UE and an SGSN is provided, which is specifically about integrity protection for an authentication and key agreement request message and an authentication and key agreement response message on GMM/SM protocol layers, and resolves a problem in the prior art that an integrity protection function cannot be implemented on LLC protocol layers of the UE and the SGSN. Integrity protection is respectively performed for the authentication and key agreement request message and the authentication and key agreement response message on GMM/SM protocol layers of the UE and the SGSN. Support can be obtained in an actual application, thereby improving security of the solution and preventing a downgrade-attack from an attacker to an algorithm.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a schematic flowchart of GPRS based signaling integrity protection in the prior art;
FIG. 2 is a schematic diagram of an embodiment of a message protection method according to the embodiments of the present invention;
FIG. 3 is a schematic diagram of another embodiment of the message protection method according to the embodiments of the present invention;
FIG. 4 is a schematic diagram of an embodiment of another message protection method according to the embodiments of the present invention;
FIG. 5 is a schematic diagram of another embodiment of the another message protection method according to the embodiments of the present invention;
FIG. 6A and FIG. 6B are a schematic flowchart of a message protection method in an application scenario according to an embodiment of the present invention;
FIG. 7A and FIG. 7B are another schematic flowchart of the message protection method in an application scenario according to an embodiment of the present invention;
FIG. 8 is a schematic diagram of an embodiment of a user terminal according to the embodiments of the present invention;
FIG. 9 is a schematic diagram of another embodiment of the user terminal according to the embodiments of the present invention;
FIG. 10 is a schematic diagram of another embodiment of the user terminal according to the embodiments of the present invention;
FIG. 11 is a schematic diagram of another embodiment of the user terminal according to the embodiments of the present invention;
FIG. 12 is a schematic diagram of another embodiment of the user terminal according to the embodiments of the present invention;
FIG. 13 is a schematic diagram of an embodiment of a serving GPRS support node according to the embodiments of the present invention;
FIG. 14 is a schematic diagram of another embodiment of the serving GPRS support node according to the embodiments of the present invention;
FIG. 15 is a schematic diagram of another embodiment of the serving GPRS support node according to the embodiments of the present invention;
FIG. 16 is a schematic diagram of another embodiment of the serving GPRS support node according to the embodiments of the present invention;
FIG. 17 is a schematic diagram of an embodiment of another user terminal according to the embodiments of the present invention;
FIG. 18 is a schematic diagram of another embodiment of the another user terminal according to the embodiments of the present invention;
FIG. 19 is a schematic diagram of another embodiment of the another user terminal according to the embodiments of the present invention;
FIG. 20 is a schematic diagram of an embodiment of another serving GPRS support node according to the embodiments of the present invention;
FIG. 21 is a schematic diagram of another embodiment of the another serving GPRS support node according to the embodiments of the present invention;
FIG. 22 is a schematic structural diagram of a user terminal according to an embodiment of the present invention;
FIG. 23 is a schematic structural diagram of a serving GPRS support node according to an embodiment of the present invention; and
FIG. 24 is a schematic diagram of a message protection system according to the embodiments of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

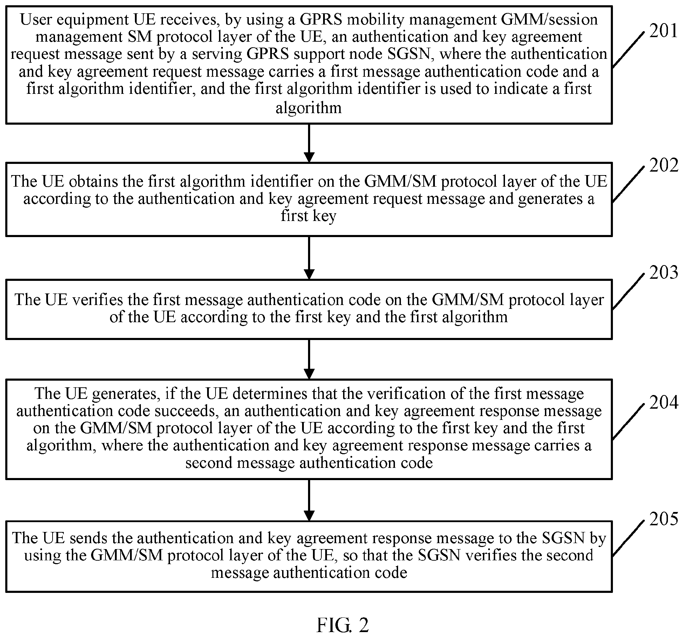

The embodiments of the present invention provide a message protection method, to obtain support in an actual application, thereby improving security of a solution and preventing a downgrade-attack from an attacker to an algorithm. Besides, a corresponding message protection system and a related apparatus are further provided. Referring to FIG. 2 to FIG. 24, the following separately provides detailed descriptions by using specific embodiments.

The message protection method provided in the embodiments of the present invention is applicable to a wireless communications system. In the embodiments of the present invention, the method is analyzed and described by using an example in which the method is applied to a Long Term Evolution (Long Term Evolution, LTE for short)/Long Term Evolution-Advanced (LTE-Advanced, LTE-A for short) wireless communications system, which does not limit the present invention.

The message protection method in the embodiments of the present invention is mainly applied to protection for information on a GMM/SM protocol layer or protection for information on an LLC protocol layer. The two solutions are separately described in detail in this specification.

### 1. Protection for a message on a GMM/SM protocol layer:

The embodiments of the present invention provide a message protection method. For ease of description, the method is described from the perspective of UE.

Referring to FIG. 2, FIG. 2 is a schematic diagram of an embodiment of the message protection method according to the embodiments of the present invention. The message protection method may include the following steps.

201: User equipment UE receives, by using a GPRS mobility management GMM/session management SM protocol layer of the UE, an authentication and key agreement request message sent by a serving GPRS support node SGSN, where the authentication and key agreement request message carries a first message authentication code and a first algorithm identifier, and the first algorithm identifier is used to indicate a first algorithm.

In this embodiment, UE receives, by using a GMM/SM protocol layer of the UE, an authentication and key agreement request message sent by an SGSN, where the authentication and key agreement request message carries a first message authentication code, and the first message authentication code may be a message authentication code-integrity (message authentication code-Integrity, MAC-I for short). The authentication and key agreement request message may further carry a first algorithm identifier, the first algorithm identifier is used to indicate a type of a first algorithm, and a specific first algorithm may be determined according to the first algorithm identifier.

A GMM protocol used on the GMM protocol layer is mainly used to support mobility management functions, for example, GPRS attachment and detachment, security, location area (Location Area, LA for short) update, and routing area (Routing Area, RA for short) update. An SM protocol used on the SM protocol layer is mainly used to support a packet data protocol (Packet Data Protocol, PDP for short), deactivation, PDP context modification, and the like.

202: The UE obtains the first algorithm identifier on the GMM/SM protocol layer of the UE according to the authentication and key agreement request message and generates a first key.

In this embodiment, the UE receives the authentication and key agreement request message on the GMM/SM protocol layer of the UE, obtains the carried first algorithm identifier from the authentication and key agreement request message to determine the first algorithm according to the identifier, and generates a first key.

It should be noted that, there are multiple manners for generating the first key. When a universal subscriber identity module (Universal Subscriber Identity Module, USIM for short) card accesses a third generation mobile communications technology (3rd-Generation, 3G for short) network, the first key is obtained by performing function calculation on a root key in the USIM card and a random number; or an intermediate key is obtained after function calculation is performed on a root key in the USIM card and a random number, the intermediate key and the first algorithm identifier are used as input, and the first key is generated by using a key generation function, where the key generation function may be a hash algorithm (hash message authentication code-Secure Hash Algorith-256, HMAC-SHA-256 for short). Herein, a specific manner for generating the first key is not specifically limited.

203: The UE verifies the first message authentication code on the GMM/SM protocol layer of the UE according to the first key and the first algorithm.

In this embodiment, the UE verifies the first message authentication code MAC-I on the GMM/SM protocol layer of the UE by using the obtained first algorithm and the generated first key.

204: The UE generates, if the UE determines that the verification of the first message authentication code succeeds, an authentication and key agreement response message on the GMM/SM protocol layer of the UE according to the first key and the first algorithm, where the authentication and key agreement response message carries a second message authentication code.

In this embodiment, when the UE determines that the verification of the first message authentication code succeeds, the UE generates, on the GMM/SM protocol layer of the UE, an authentication and key agreement response message corresponding to the authentication and key agreement request message, and generates a second message authentication code MAC-I for the authentication and key agreement response message by using the first key and the first algorithm.

A method for verifying the first message authentication code may be specifically: verifying, by the UE, a network-to-terminal authentication token (Authentication Token, AUTN for short) in an authentication quintet on the GMM/SM protocol layer according to the prior art, and generating a terminal-to-network authentication parameter (response, RES for short). For example, a USIM card calculates an expected MAC-I value XMAC-I according to a stored root key K, and the AUTN and a random number (Random, RAND for short) that are sent from an SGSN side, verifies, the first message authentication code MAC-I carried in the authentication and key agreement request message. If MAC-I=XMAC-I, and a home subscriber server (Home Subscriber Server, HSS for short) synchronization sequence number (sequence number, SQN for short) is within a correct value range, the USIM card generates and returns RES to the SGSN side. The SGSN determines whether RES is equal to expected RES (Expected RES, XRES for short), to implement authentication of the USIM card by a network side. If RES=XRES, the USIM card and the SGSN perform data transmission by using a ciphering key (Ciphering Key, CK for short) and an integrity key (Integrity Key, IK for short). In this way, bidirectional authentication between the USIM card and the network side is completed.

205: The UE sends the authentication and key agreement response message to the SGSN by using the GMM/SM protocol layer of the UE, so that the SGSN verifies the second message authentication code.

In this embodiment, the UE sends the authentication and key agreement response message to a GMM/SM protocol layer of the SGSN by using the GMM/SM protocol layer of the UE, and after receiving the authentication and key agreement response message, the SGSN verifies the second message authentication code MAC-I in the message.

In this embodiment of the present invention, an implementation solution for message protection between UE and an SGSN is provided, which is specifically about integrity protection for an authentication and key agreement request message and an authentication and key agreement response message on GMM/SM protocol layers, and resolves a problem in the prior art that an integrity protection function cannot be implemented on LLC protocol layers of the UE and the SGSN. Integrity protection is respectively performed for the authentication and key agreement request message and the authentication and key agreement response message on GMM/SM protocol layers of the UE and the SGSN. Support can be obtained in an actual application, thereby improving security of the solution and preventing a downgrade-attack from an attacker to an algorithm.

Optionally, based on the embodiment corresponding to FIG. 2, in a first optional embodiment of the message protection method provided in the embodiments of the present invention,
the first key includes a first ciphering key, and the first algorithm includes a first ciphering algorithm; or
the first key includes a first integrity key, and the first algorithm includes a first integrity protection algorithm; or
the first key includes a first ciphering key and a first integrity key, and the first algorithm includes a first ciphering algorithm and a first integrity protection algorithm.

In this embodiment, the first key may include the first ciphering key and the first integrity key, or may include only the first ciphering key or the first integrity key.

Herein, the first ciphering key is an Internet of Things ciphering key (Session key of Gb based cellular IoT for confidentiality protection, Ktc for short), and the first integrity key is an Internet of Things integrity protection key (Session key of Gb based cellular IoT for integrity protection, Kti for short).

The first algorithm includes the first ciphering algorithm and the first integrity protection algorithm, or may include only the first ciphering algorithm or the first integrity protection algorithm.

The integrity protection algorithm is mainly used to protect integrity of to-be-sent data on a sending end and check on a receiving end whether integrity of received data is destroyed. A message authentication code MAC-I and an expected message authentication code XMAC-I are respectively obtained by performing an operation on data of the sending end and the receiving end by using the integrity protection algorithm, and data integrity can be determined through comparison of the two.

Then, in this embodiment of the present invention, a first key and a first algorithm are made concrete, so as to support the solution of the present invention in an actual application scenario and improve flexibility of the solution, and a specific algorithm is selected in a specific scenario for data inclusion, which also improves plasticity of the solution.

Optionally, based on the first embodiment corresponding to FIG. 2, in a second optional embodiment of the message protection method provided in the embodiments of the present invention, after the generating an authentication and key agreement response message on the GMM/SM protocol layer of the UE according to the first key and the first algorithm, the method may further include:
ciphering, by the UE, the authentication and key agreement response message on the GMM/SM protocol layer of the UE by using the first ciphering key and the first ciphering algorithm indicated by a first ciphering algorithm identifier; or
performing, by the UE, integrity protection for the authentication and key agreement response message on the GMM/SM protocol layer of the UE by using the first integrity key and the first integrity protection algorithm indicated by a first integrity protection algorithm identifier; or
ciphering, by the UE, the authentication and key agreement response message on the GMM/SM protocol layer of the UE by using the first ciphering key and the first ciphering algorithm indicated by a first ciphering algorithm identifier, and performing integrity protection for the authentication and key agreement response message on the GMM/SM protocol layer of the UE by using the first integrity key and the first integrity protection algorithm indicated by a first integrity protection algorithm identifier.

In this embodiment, after the UE generates the authentication and key agreement response message on the GMM/SM protocol layer of the UE according to the first key and the first algorithm, the UE further needs to protect the authentication and key agreement response message. Specifically, there may be the following three protection manners:
the UE ciphers the authentication and key agreement response message on the GMM/SM protocol layer of the UE by using the first ciphering key Ktc and a corresponding first ciphering algorithm, which is understood as message ciphering, whose objective is to ensure security of the message, where the first ciphering algorithm is determined according to a first ciphering algorithm identifier, and the first ciphering algorithm identifier may be a sequence number of the ciphering algorithm; or
the UE may perform integrity protection for the authentication and key agreement response message on the GMM/SM protocol layer of the UE by using the first integrity key Kti and a corresponding first integrity protection algorithm, whose objective is to ensure continuity and integrity of a message transmitted on an air interface, where the first integrity protection algorithm is determined according to a first integrity protection algorithm identifier, and the first integrity protection algorithm identifier may be a sequence number of the integrity protection algorithm; or
the UE performs both ciphering protection and integrity protection for the authentication and key agreement response message, whose implementation manner is similar to the above-mentioned implementation manners, that is, ciphering the authentication and key agreement response message on the GMM/SM protocol layer of the UE by using Ktc and a first ciphering algorithm, and performing integrity protection for the authentication and key agreement response message on the GMM/SM protocol layer of the UE by using Kti and a first integrity protection algorithm.

Then, in this embodiment of the present invention, a specific solution for protecting an authentication and key agreement response message is provided, where ciphering protection or integrity protection can be performed, and both ciphering protection and integrity protection also can be performed, thereby greatly improving security, continuity, and integrity of a transmitted message, and achieving a better practical effect in a specific implementation of the solution.

Optionally, based on the embodiment corresponding to FIG. 2, in a third optional embodiment of the message protection method provided in the embodiments of the present invention, before the receiving, by UE by using a GMM/SM protocol layer of the UE, an authentication and key agreement request message sent by an SGSN, the method may further include:
sending, by the UE, an attach request message to the GMM/SM protocol layer of the SGSN by using the GMM/SM protocol layer of the UE, where the attach request message carries an identifier of the UE and network capability information of the UE, so that the SGSN generates the authentication and key agreement request message on the GMM/SM protocol layer of the SGSN according to the attach request message.

In this embodiment, the UE sends an attach request message to the GMM/SM protocol layer of the SGSN by using the GMM/SM protocol layer of the UE, where the attach request message carries an identifier of the UE, for example, a temporary logical link identifier (Temporary Logical Link Identifier, TLLI for short) or an international mobile subscriber identification number (International Mobile Subscriber Identification Number, IMSI for short) of the UE, and the attach request message also carries network capability information of the UE. The SGSN generates the authentication and key agreement request message on the GMM/SM protocol layer of the SGSN according to the identifier of the UE and the network capability information of the UE in the attach request message.

Generally, when the SGSN sends the authentication and key agreement request message to the UE, a timer T3360 is started, and if no response is received after the timer times out, the SGSN re-sends an authentication and key agreement request message, where a quantity of times of re-sending is N, and N is a positive integer greater than or equal to 1.

It should be noted that, a time configured on the timer T3360 may be 6 seconds or another time value, and the quantity N of times of re-sending may be 4 or may be configured to another value according to an actual situation. No limitations are set herein.

Further, in this embodiment of the present invention, UE sends an attach request message to an SGSN, so that the SGSN may obtain an authentication related parameter according to the attach request message, which provides a specific implementation basis for an actual application of the solution of the present invention, and is also a manner of interaction between the UE and a network side. Information exchange between the UE and a network is completed by using an attach request, which improves practicability of the solution.

Optionally, based on FIG. 2 and the first to the third embodiments corresponding to FIG. 2, in a fourth optional embodiment of the message protection method provided in the embodiments of the present invention, after the sending, by the UE, the authentication and key agreement response message to the SGSN by using the GMM/SM protocol layer of the UE, the method may further include:
sending, by the UE, the first key and the first algorithm identifier to a logical link control LLC protocol layer of the UE by using the GMM/SM protocol layer of the UE.

In this embodiment, after the UE sends the authentication and key agreement response message to the SGSN by using the GMM/SM protocol layer of the UE, the UE further sends the first key and the first algorithm identifier to an LLC protocol layer of the UE by using the GMM/SM protocol layer of the UE, so that the UE may process user plane data and control plane signaling on the LLC protocol layer by using the first key and the first algorithm, where the first algorithm identifier is used to indicate the specific algorithm that needs to be used.

Furthermore, in this embodiment of the present invention, after UE sends an authentication and key agreement response message to an SGSN by using a GMM/SM protocol layer, the UE may further send a first algorithm and a first key to an LLC protocol layer of the UE, so that the UE may perform corresponding processing on data and signaling on the LLC protocol layer, thereby improving reliability of the solution and further improving the practicability of the solution.

Optionally, based on the fourth embodiment corresponding to FIG. 2, in a fifth optional embodiment of the message protection method provided in the embodiments of the present invention, after the sending, by the UE, the first key and the first algorithm identifier to a logical link control LLC protocol layer of the UE by using the GMM/SM protocol layer of the UE, the method may further include:
ciphering, by the UE, user plane data and control plane signaling on the LLC protocol layer of the UE by using the first ciphering key and the first ciphering algorithm indicated by the first ciphering algorithm identifier; or
ciphering, by the UE, user plane data and control plane signaling on the LLC protocol layer of the UE by using the first ciphering key and the first ciphering algorithm indicated by the first ciphering algorithm identifier, and performing integrity protection for the control plane signaling on the LLC protocol layer of the UE by using the first integrity key and the first integrity protection algorithm indicated by the first integrity protection algorithm identifier.

In this embodiment, the UE sends the first key and the first algorithm identifier to the LLC protocol layer of the UE by using the GMM/SM protocol layer of the UE, where the first algorithm identifier is also used to indicate the type of the algorithm that needs to be used. Both user plane data and control plane signaling exist on the LLC protocol layer of the UE. The user plane data may be a message, for example, a message or a notification, and the signaling refers to a signal on a control plane, for example, audio or a data packet.

The UE ciphers both the data and the signaling on the LLC protocol layer of the UE by using the first ciphering key and the first ciphering algorithm, which improves security of the data and the signaling in a transmission process; or
the UE ciphers the data on the LLC protocol layer of the UE by using the first ciphering key and the first ciphering algorithm, and performs both ciphering protection and integrity protection for the signaling on the LLC protocol layer of the UE.

Generally, the UE does not perform integrity protection for the data, and does not perform only integrity protection for the signaling, but such implementation manners are not precluded, and the description herein should not be construed as a limitation to the solution of this aspect.

Furthermore, in this embodiment of the present invention, because data and signaling keep coexisting on an LLC protocol layer of UE, ciphering protection may be performed for the data, and both ciphering protection and integrity protection may be performed for the signaling. A corresponding protection manner may be selected according to an actual situation, thereby implementing feasibility of the solution of the present invention in an application process. In addition, the ciphering protection can improve security of the data and the signaling, and the integrity protection improves integrity of the signaling, thereby greatly ensuring reliability of the data and the signaling in a transmission process.

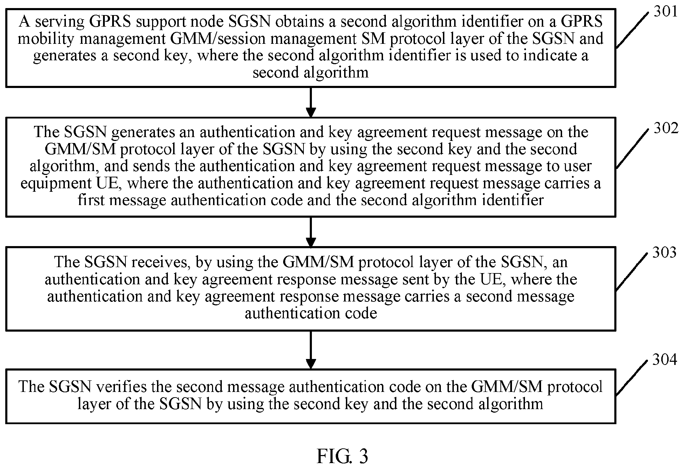

The message protection method in the embodiments of the present invention is described above from the perspective of UE, and the message protection method in the embodiments of the present invention is described below from the perspective of an SGSN on a peer side. Referring to FIG. 3, another embodiment of the message protection method in the embodiments of the present invention includes the following steps.

301: A serving GPRS support node SGSN obtains a second algorithm identifier on a GPRS mobility management GMM/session management SM protocol layer of the SGSN and generates a second key, where the second algorithm identifier is used to indicate a second algorithm.

In this embodiment, when an SGSN determines that UE is cellular IoT UE, the SGSN may obtain a second algorithm identifier on a GMM/SM protocol layer, and generate a second key on the GMM/SM protocol layer of the SGSN, where the second algorithm identifier is used to indicate a type of a second algorithm.

A manner for generating the second key is similar to the manner for generating the first key mentioned in the foregoing embodiment, and details are not described herein.

302: The SGSN generates an authentication and key agreement request message on the GMM/SM protocol layer of the SGSN by using the second key and the second algorithm, and sends the authentication and key agreement request message to user equipment UE, where the authentication and key agreement request message carries a first message authentication code and the second algorithm identifier.

In this embodiment, the SGSN generates an authentication and key agreement request message on the GMM/SM protocol layer of the SGSN by using the second key and the second algorithm, where the authentication and key agreement request message carries a first message authentication code and the second algorithm identifier, the first message authentication code is generated by the SGSN after the SGSN performs integrity protection for the authentication and key agreement request message on the GMM/SM protocol layer of the SGSN, and the second algorithm identifier is used to indicate the type of the second algorithm. After the SGSN generates the authentication and key agreement request message on the GMM/SM protocol layer of the SGSN, the SGSN first sends the message to an LLC protocol layer of the SGSN, and then the SGSN sends the authentication and key agreement request message to an LLC protocol layer of the UE on the LLC protocol layer of the SGSN.

It may be understood that, the second algorithm herein and the first algorithm mentioned in FIG. 2 and the first to the fifth embodiments corresponding to FIG. 2 are actually a same algorithm, and the "first" and the "second" herein are mainly used to indicate a difference between protocol layers on which the algorithms are located.

303: The SGSN receives, by using the GMM/SM protocol layer of the SGSN, an authentication and key agreement response message sent by the UE, where the authentication and key agreement response message carries a second message authentication code.

In this embodiment, if the UE determines that verification of the first message authentication code succeeds, the UE generates, on a GMM/SM protocol layer of the UE, an authentication and key agreement response message corresponding to an authentication and key agreement request message. The SGSN receives, by using the GMM/SM protocol layer of the SGSN, the authentication and key agreement response message sent by the UE, where the authentication and key agreement response message carries a second message authentication code.

304: The SGSN verifies the second message authentication code on the GMM/SM protocol layer of the SGSN by using the second key and the second algorithm.

In this embodiment, the SGSN verifies, on the GMM/SM protocol layer of the SGSN by using the generated second key and the obtained second algorithm, whether the second message authentication code is accurate.

In this embodiment of the present invention, an implementation solution for performing integrity protection for a key and algorithm agreement procedure between UE and an SGSN is provided, which is specifically about integrity protection for an authentication and key agreement request message and an authentication and key agreement response message on GMM/SM protocol layers, and resolves a problem in the prior art that an integrity protection function cannot be implemented on LLC protocol layers of the UE and the SGSN. Integrity protection is respectively performed for the authentication and key agreement request message and the authentication and key agreement response message on GMM/SM protocol layers of the UE and the SGSN. Support can be obtained in an actual application, thereby improving security of the solution and preventing a downgrade-attack from an attacker to an algorithm.

Optionally, based on the embodiment corresponding to FIG. 3, in a first optional embodiment of the message protection method provided in the embodiments of the present invention,
the second key includes a second ciphering key, and the second algorithm includes a second ciphering algorithm; or
the second key includes a second integrity key, and the second algorithm includes a second integrity protection algorithm; or
the second key includes a second ciphering key and a second integrity key, and the second algorithm includes a second ciphering algorithm and a second integrity protection algorithm.

In this embodiment, the second key may include the second ciphering key and the second integrity key, or may include only the second ciphering key or the second integrity key.

Herein, the second ciphering key is Ktc, and the second integrity key is Kti.

The second algorithm includes the second ciphering algorithm and the second integrity protection algorithm, or may include only the second ciphering algorithm or the second integrity protection algorithm.

The integrity protection algorithm is mainly used to protect integrity of to-be-sent data on a sending end and check on a receiving end whether integrity of received data is destroyed. A message authentication code MAC-I and an expected message authentication code XMAC-I are respectively obtained by performing an operation on data of the sending end and the receiving end by using the integrity protection algorithm, and data integrity can be determined through comparison of the two.

Then, in this embodiment of the present invention, a second key and a second algorithm are made concrete, so as to support the solution of the present invention in an actual application scenario and improve flexibility of the solution, and a specific algorithm is selected in a specific scenario for data inclusion, which also improves plasticity of the solution.

Optionally, based on FIG. 3 or the first embodiment corresponding to FIG. 3, in a second optional embodiment of the message protection method provided in the embodiments of the present invention, before the generating an authentication and key agreement request message on the GMM/SM protocol layer of the SGSN, and sending the authentication and key agreement request message to user equipment UE, the method may further include:
receiving, by the SGSN by using the GMM/SM protocol layer of the SGSN, an attach request message sent by the UE, where the attach request message carries an identifier of the UE and network capability information of the UE; and
the obtaining, by an SGSN, a second algorithm identifier on a GMM/SM protocol layer of the SGSN and generating a second key may include:
   obtaining, by the SGSN, the second algorithm according to the network capability information of the UE; and
   obtaining, by the SGSN, authorization vector information of the UE according to the identifier of the UE and generating the second key according to the authorization vector information.

In this embodiment, before the SGSN sends the authentication and key agreement request message to the UE by using the GMM/SM protocol layer of the SGSN, the SGSN receives an attach request message that is sent by the UE by using a GMM/SM protocol, where the attach request message carries an identifier of the UE and network capability information of the UE.

Specifically, the UE sends a GPRS attach request message to the SGSN, and after receiving the attach request message sent by the UE, the SGSN obtains an authentication vector (Authentication Vector, AV for short) from a home location register (Home Location Register, HLR for short) or a home subscriber server (Home Subscriber Server, HSS for short), where the AV may include RAND, XRES, AUTN, CK, and IK.

The obtaining, by an SGSN, a second algorithm on a GPRS mobility management GMM/session management SM protocol layer of the SGSN and generating a second key according to the second algorithm may be specifically: after receiving the attach request message sent by the UE, obtaining, by the SGSN, the AV from the HLR or the HSS according to the identifier of the UE carried in the attach request message, and obtaining the second algorithm according to the network capability information of the UE and an algorithm supported by the SGSN; and generating, by the SGSN, the second key on the GMM/SM protocol layer according to the AV.

It should be noted that, the network capability information of the UE refers to network performance of the UE, for example, an index such as a retransmission rate, a throughput, or signal strength, or may be comprehensive performance information about multiple network capabilities, which is not limited herein.

Then, in this embodiment of the present invention, an SGSN receives an attach request message sent by UE, and obtains an authentication related parameter according to the attach request message, which provides a specific implementation basis for an actual application of the solution of the present invention, and is also a manner of interaction between the UE and the SGSN. Information exchange between the UE and a network is completed by using an attach request, which improves practicability of the solution. When the SGSN receives attach request message carrying an identifier of the UE and network capability information of the UE, the SGSN selects an appropriate algorithm according to the network capability information of the UE, and determines, according to the identifier of the UE, authorization vector information corresponding to the UE, so that the solution is more appropriate in an actual application. A specific algorithm and key are selected for specific UE, which improves feasibility of the entire solution.

Optionally, based on FIG. 3 and the first and the second embodiments corresponding to FIG. 3, in a third optional embodiment of the message protection method provided in the embodiments of the present invention, after the verifying, by the SGSN, the second message authentication code on the GMM/SM protocol layer of the SGSN by using the second key and the second algorithm, the method may further include:
sending, by the SGSN if the SGSN determines that the verification of the second message authentication code succeeds, the second key and the second algorithm identifier to a logical link control LLC protocol layer of the SGSN by using the GMM/SM protocol layer of the SGSN.

In this embodiment, the SGSN verifies the second message authentication code in the authentication and key agreement response message on the GMM/SM protocol layer of the SGSN by using the second key and the second algorithm, and when the SGSN determines that the verification of the second message authentication code succeeds, the SGSN sends the second key and the second algorithm identifier to an LLC protocol layer of the SGSN by using the GMM/SM protocol layer of the SGSN, where the second algorithm identifier may be used to determine the corresponding second algorithm, so that the SGSN processes data and signaling on the LLC protocol layer by using the second key and the second algorithm.

Further, in this embodiment of the present invention, after an SGSN determines that verification of a second message authentication code succeeds, the SGSN sends a second key and a second algorithm identifier to an LLC protocol layer of the SGSN by using a GMM/SM protocol layer of the SGSN, so that the SGSN may perform corresponding processing on data and signaling on the LLC protocol layer, thereby improving reliability of the solution and further improving the practicability of the solution.

Optionally, based on the third embodiment corresponding to FIG. 3, in a fourth optional embodiment of the message protection method provided in the embodiments of the present invention, after the sending, by the SGSN if the SGSN determines that the verification of the second message authentication code succeeds, the second key and the second algorithm identifier to a logical link control LLC protocol layer of the SGSN by using the GMM/SM protocol layer of the SGSN, the method may further include:
ciphering, by the SGSN, user plane data and control plane signaling on the LLC protocol layer of the SGSN by using the second ciphering key and the second ciphering algorithm indicated by a second ciphering algorithm identifier; or
ciphering, by the SGSN, user plane data and control plane signaling on the LLC protocol layer of the SGSN by using the second ciphering key and the second ciphering algorithm indicated by a second ciphering algorithm identifier, and performing integrity protection for the control plane signaling on the LLC protocol layer of the SGSN by using the second integrity key and the second integrity protection algorithm indicated by a second integrity protection algorithm identifier.

In this embodiment, the SGSN sends the second key and the second algorithm identifier to the LLC protocol layer of the SGSN by using the GMM/SM protocol layer of the SGSN, and both user plane data and control plane signaling exist on the LLC protocol layer of the SGSN. In this case, the data and the signaling may be processed by using the second key and the second algorithm, and a specific processing manner may be:
the SGSN ciphers the data and the signaling on the LLC protocol layer of the SGSN by using the second ciphering key and the second ciphering algorithm, which improves security of the data and the signaling in a transmission process; or
the SGSN ciphers the data on the LLC protocol layer of the SGSN by using the second ciphering key and the second ciphering algorithm, and performs both ciphering protection and integrity protection for the signaling on the LLC protocol layer of the SGSN.

Generally, the SGSN does not perform integrity protection for the data, and does not perform only integrity protection for the signaling, but such implementation manners are not precluded, and the description herein should not be construed as a limitation to the solution of this aspect.

Furthermore, in this embodiment of the present invention, because data and signaling keep coexisting on an LLC protocol layer of an SGSN, ciphering protection may be performed for the data, and both ciphering protection and integrity protection may be performed for the signaling. A corresponding protection manner may be selected according to an actual situation, thereby implementing feasibility of the solution of the present invention in an application process. In addition, the ciphering protection can improve security of the data and the signaling, and the integrity protection improves integrity of the signaling, thereby greatly ensuring reliability of the data and the signaling in a transmission process.

### 2. Protection for information on an LLC protocol layer:

The embodiments of the present invention provide a message protection method. For ease of description, the method is described from the perspective of UE.

401: User equipment UE receives, by using a logical link control LLC protocol layer of the UE, a first authentication and key agreement request message sent by a serving GPRS support node SGSN, where the first authentication and key agreement request message carries a first message authentication code and a first algorithm identifier, and the first algorithm identifier is used to indicate a first algorithm.

In this embodiment, after an SGSN generates a first authentication and key agreement request message on a GMM/SM protocol layer of the SGSN, the GMM/SM protocol layer of the SGSN sends the first authentication and key agreement request message to an LLC protocol layer of the SGSN, and the SGSN performs integrity protection on the LLC protocol layer and then sends the first authentication and key agreement request message to an LLC protocol layer of UE by using the LLC protocol layer of the SGSN.

After the integrity protection is performed for the first authentication and key agreement request message, a first message authentication code MAC-I is generated. The first authentication and key agreement request message may carry the first message authentication code, and the message may further carry a first algorithm identifier. The first algorithm identifier is used to indicate a type of a first algorithm, and a specific first algorithm is obtained according to the first algorithm identifier.

402: The UE processes the first authentication and key agreement request message on the LLC protocol layer to obtain a second authentication and key agreement request message, and sends the second authentication and key agreement request message to a GPRS mobility management GMM/session management SM protocol layer of the UE.

In this embodiment, the UE sends a second authentication and key agreement request message to a GMM/SM protocol layer of the UE by using the LLC protocol layer of the UE, where the second authentication and key agreement request message is obtained by the UE after the UE processes the first authentication and key agreement request message on the LLC protocol layer, and a specific processing manner is removing the first message authentication code MAC-I from the first authentication and key agreement request message, or making no modification.

The first message authentication code may be located at the end of the first authentication and key agreement request message. If the first message authentication code needs to be removed, a packet header part in the first authentication and key agreement request message may be processed directly.

If the first authentication and key agreement request message is not processed, the second authentication and key agreement request message still includes the first message authentication code. When the first message authentication code is retained, the first message authentication code may be sent to the GMM/SM protocol layer of the UE as a part of a service data unit (Service Data Unit, SDU for short). The SDU is a data set of a user service on a specified layer, and when the SDU is transferred to a receiving party, no data changes.

If the first authentication and key agreement request message is processed, the second authentication and key agreement request message does not include the first message authentication code. When the SGSN sends, to the UE, the first authentication and key agreement request message carrying the first message authentication code, the UE may store the first authentication and key agreement request message on the LLC protocol layer of the UE, which may be understood as: the LLC protocol layer of the UE stores a currently received protocol data unit (Protocol Data Unit, PDU for short). The PDU is a data unit of transfer between peer layers. For example, a PDU transmitted by a physical layer is a data bit, a PDU transmitted by a data link layer is a data frame, a PDU transmitted by a network layer is a data packet, a PDU transmitted by a data layer is a data segment, and a PDU transmitted between other higher layers is a packet.

403: The UE obtains the first algorithm identifier on the GMM/SM protocol layer of the UE according to the second authentication and key agreement request message, generates a first key, and sends the first key and the first algorithm identifier to the LLC protocol layer of the UE.

In this embodiment, the UE verifies AUTN on the GMM/SM protocol layer of the UE according to the prior art and generates RES.

The UE verifies AUTN on the GMM/SM protocol layer. If the verification of AUTN succeeds, authentication of a network side succeeds, that is, it is determined that data is sent from a home network. The UE calculates RES on the GMM/SM protocol layer, to verify whether user authentication succeeds.

When the authentication processes both succeed, the UE generates a corresponding first key according to a network capability of the UE, and determines a corresponding first algorithm according to the first algorithm identifier, where the first algorithm identifier is obtained from the second authentication and key agreement request message. It should be noted that, when the first authentication and key agreement request message is processed, the first algorithm identifier in the message is not removed. The UE sends the first key and the first algorithm identifier to the LLC protocol layer of the UE by using the GMM/SM protocol layer of the UE.

404: The UE generates, if the UE determines on the LLC protocol layer of the UE that verification of the first message authentication code succeeds, a first authentication and key agreement response message on the GMM/SM protocol layer of the UE.

In this embodiment, the UE compares the first message authentication code with an expected message authentication code obtained through calculation. When the first message authentication code is consistent with the expected message authentication code obtained through calculation, it indicates that verification of the first message authentication code succeeds. In this case, the UE generates a corresponding first authentication and key agreement response message on the GMM/SM protocol layer of the UE.

On the contrary, if the verification of the first message authentication code fails, the UE sends a first message authentication code verification failure result to the GMM/SM protocol layer of the UE by using the LLC protocol layer of the UE. According to the verification failure result, the UE may re-verify the first message authentication code, or omit a subsequent operation and receive a newly generated first message authentication code.

405: The UE performs ciphering and/or integrity protection for the first authentication and key agreement response message on the LLC protocol layer of the UE to obtain a second authentication and key agreement response message, where the second authentication and key agreement response message carries a second message authentication code.

In this embodiment, the first authentication and key agreement response message is generated by the UE on the GMM/SM protocol layer of the UE, the UE sends the first authentication and key agreement response message to the LLC protocol layer of the UE by using the GMM/SM protocol layer of the UE, and the UE obtains a second authentication and key agreement response message after performing ciphering and/or integrity protection for the first authentication and key agreement response message on the LLC protocol layer of the UE.

Similar to the process of performing integrity protection for the first authentication and key agreement request message, after performing the integrity protection for the first authentication and key agreement response message on the LLC protocol layer, the UE generates a second message authentication code MAC-I.

406: The UE sends the second authentication and key agreement response message to the SGSN by using the LLC protocol layer of the UE, so that the SGSN verifies the second message authentication code.

In this embodiment, the UE sends the second authentication and key agreement response message to the LLC protocol layer of the SGSN by using the LLC protocol layer of the UE, where the second authentication and key agreement response message carries the second message authentication code, so that after determining that verification of the second message authentication code succeeds, the SGSN performs ciphering and/or integrity protection for to-be-processed data on the LLC protocol layer of the SGSN by using a second key and a second algorithm that are obtained by the SGSN side.

In this embodiment of the present invention, an implementation solution for message protection between UE and an SGSN is provided, which is specifically about integrity protection for an authentication and key agreement request message and an authentication and key agreement response message on LLC protocol layers, and enhances interaction between an LLC protocol layer and a GMM/SM protocol layer on a UE side, to obtain a key on the GMM/SM protocol layer of the UE and then verify integrity of a message on the LLC protocol layer, thereby improving security of the solution and preventing a downgrade-attack from an attacker to an algorithm.

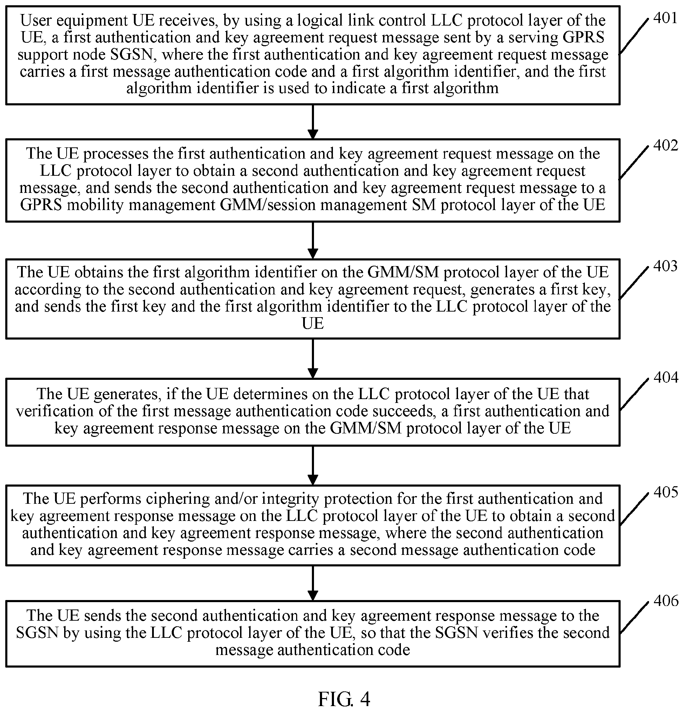

Optionally, based on the embodiment corresponding to FIG. 4, in a first optional embodiment of the message protection method provided in the embodiments of the present invention,
the first key includes a first ciphering key, and the first algorithm includes a first ciphering algorithm; or
the first key includes a first integrity key, and the first algorithm includes a first integrity protection algorithm; or
the first key includes a first ciphering key and a first integrity key, and the first algorithm includes a first ciphering algorithm and a first integrity protection algorithm.

In this embodiment, the first key may include the first ciphering key and the first integrity key, or may include only the first ciphering key or the first integrity key.

Herein, the first ciphering key is Ktc, and the first integrity key is Kti.

The first algorithm includes the first ciphering algorithm and the first integrity protection algorithm, or may include only the first ciphering algorithm or the first integrity protection algorithm.

The integrity protection algorithm is mainly used to protect integrity of to-be-sent data on a sending end and check on a receiving end whether integrity of received data is destroyed. A message authentication code MAC-I and an expected message authentication code XMAC-I are respectively obtained by performing an operation on data of the sending end and the receiving end by using the integrity protection algorithm, and data integrity can be determined through comparison of the two.

Then, in this embodiment of the present invention, a first key and a first algorithm are made concrete, so as to support the solution of the present invention in an actual application scenario and improve flexibility of the solution, and a specific algorithm is selected in a specific scenario for data inclusion, which also improves plasticity of the solution.

Optionally, based on the first optional embodiment corresponding to FIG. 4, in a second optional embodiment of the message protection method provided in the embodiments of the present invention, the performing, by the UE, ciphering and/or integrity protection for the first authentication and key agreement response message on the LLC protocol layer of the UE to obtain a second authentication and key agreement response message may include:
ciphering, by the UE, the first authentication and key agreement response message on the LLC protocol layer of the UE by using the first ciphering key and the first ciphering algorithm indicated by a first ciphering algorithm identifier, to obtain the second authentication and key agreement response message; or
performing, by the UE, integrity protection for the first authentication and key agreement response message on the LLC protocol layer of the UE by using the first integrity key and the first integrity protection algorithm indicated by a first integrity protection algorithm identifier, to obtain the second authentication and key agreement response message; or
ciphering, by the UE, the first authentication and key agreement response message on the LLC protocol layer of the UE by using the first ciphering key and the first ciphering algorithm indicated by a first ciphering algorithm identifier, and performing integrity protection for the first authentication and key agreement response message on the LLC protocol layer of the UE by using the first integrity key and the first integrity protection algorithm indicated by a first integrity protection algorithm identifier, to obtain the second authentication and key agreement response message.

In this embodiment, after the UE generates the first authentication and key agreement response message on the LLC protocol layer of the UE according to the first key and the first algorithm, the UE further needs to protect the first authentication and key agreement response message. Specifically, there may be the following three protection manners:
the UE ciphers the first authentication and key agreement response message on the LLC protocol layer of the UE by using the first ciphering key Ktc and a corresponding first ciphering algorithm to obtain a second authentication and key agreement response message, which is understood as message ciphering, whose objective is to ensure security of the message, where the first ciphering algorithm is determined according to a first ciphering algorithm identifier; or
the UE may perform integrity protection for the first authentication and key agreement response message on the LLC protocol layer of the UE by using the first integrity key Kti and a corresponding first integrity protection algorithm to obtain a second authentication and key agreement response message, whose objective is to ensure continuity and integrity of a message transmitted on an air interface, where the first integrity protection algorithm is determined according to a first integrity protection algorithm identifier; or
the UE performs both ciphering protection and integrity protection for the authentication and key agreement response message, whose implementation manner is similar to the above-mentioned implementation manners, that is, ciphering the first authentication and key agreement response message on the LLC protocol layer of the UE by using Ktc and a first ciphering algorithm, and performing integrity protection for the first authentication and key agreement response message on the LLC protocol layer of the UE by using Kti and a first integrity protection algorithm, to obtain a second authentication and key agreement response message.

Then, in this embodiment of the present invention, a specific solution for protecting a first authentication and key agreement response message is provided, where ciphering protection or integrity protection can be performed, and both ciphering protection and integrity protection also can be performed, thereby greatly improving security, continuity, and integrity of a transmitted message, and achieving a better practical effect in a specific implementation of the solution.

Optionally, based on the first optional embodiment corresponding to FIG. 4, in a third optional embodiment of the message protection method provided in the embodiments of the present invention, after the generating, by the UE if the UE determines on the LLC protocol layer of the UE that verification of the first message authentication code succeeds, a first authentication and key agreement response message on the GMM/SM protocol layer of the UE, the method may further include:
ciphering, by the UE, user plane data and control plane signaling on the LLC protocol layer of the UE by using the first ciphering key and the first ciphering algorithm indicated by a first ciphering algorithm identifier; or
ciphering, by the UE, user plane data and control plane signaling on the LLC protocol layer of the UE by using the first ciphering key and the first ciphering algorithm indicated by a first ciphering algorithm identifier, and performing integrity protection for the control plane signaling on the LLC protocol layer of the UE by using the first integrity key and the first integrity protection algorithm indicated by a first integrity protection algorithm identifier.

In this embodiment, the UE sends the first key and the first algorithm identifier to the LLC protocol layer of the UE by using the GMM/SM protocol layer of the UE, where the first algorithm identifier is used to indicate the type of the algorithm that is specifically used. Both user plane data and control plane signaling exist on the LLC protocol layer of the UE. The user plane data may be a message, for example, a message or a notification, and the signaling refers to a signal on a control plane, for example, audio or a data packet.

The UE ciphers both the data and the signaling on the LLC protocol layer of the UE by using the first ciphering key and the first ciphering algorithm, which improves security of the data and the signaling in a transmission process, where the first ciphering algorithm is determined according to the first ciphering algorithm identifier; or
the UE ciphers the data on the LLC protocol layer of the UE by using the first ciphering key and the first ciphering algorithm, and performs both ciphering protection and integrity protection for the signaling on the LLC protocol layer of the UE, where the first ciphering algorithm is determined according to the first ciphering algorithm identifier, and the first integrity protection algorithm is determined according to the first integrity protection algorithm identifier.

Generally, the UE does not perform integrity protection for the data, and does not perform only integrity protection for the signaling, but such implementation manners are not precluded, and the description herein should not be construed as a limitation to the solution of this aspect.

Further, in this embodiment of the present invention, because data and signaling keep coexisting on an LLC protocol layer of UE, ciphering protection may be performed for the data, and both ciphering protection and integrity protection may be performed for the signaling. A corresponding protection manner may be selected according to an actual situation, thereby implementing feasibility of the solution of the present invention in an application process. In addition, the ciphering protection can improve security of the data and the signaling, and the integrity protection improves integrity of the signaling, thereby greatly ensuring reliability of the data and the signaling in a transmission process.

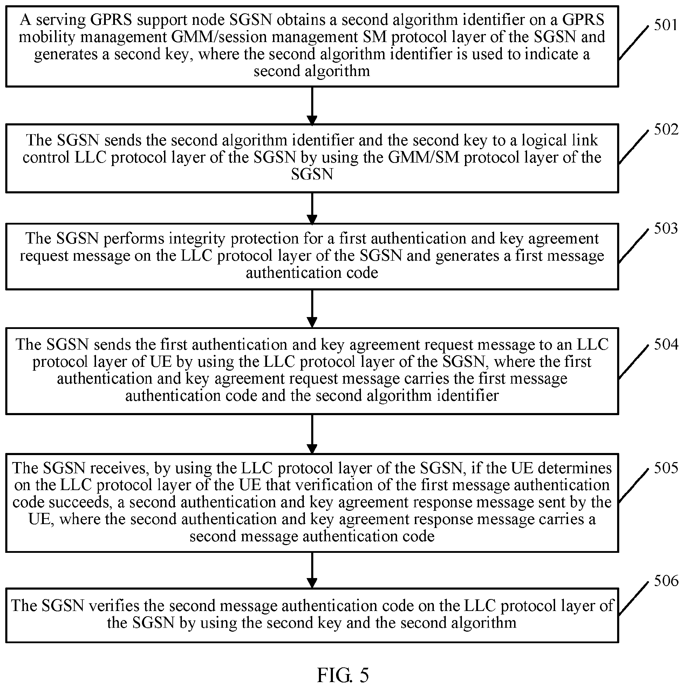

The message protection method in the embodiments of the present invention is described above from the perspective of UE, and the message protection method in the embodiments of the present invention is described below from the perspective of an SGSN. Referring to FIG. 5, another embodiment of the message protection method in the embodiments of the present invention includes the following steps.

501: A serving GPRS support node SGSN obtains a second algorithm identifier on a GPRS mobility management GMM/session management SM protocol layer of the SGSN and generates a second key, where the second algorithm identifier is used to indicate a second algorithm.

In this embodiment, when an SGSN determines that UE is cellular IoT UE, the SGSN may obtain a second algorithm identifier on a GMM/SM protocol layer, and generate a corresponding second key on the GMM/SM protocol layer of the SGSN, where the second algorithm identifier is used to determine a type of a corresponding second algorithm.

502: The SGSN sends the second algorithm identifier and the second key to a logical link control LLC protocol layer of the SGSN by using the GMM/SM protocol layer of the SGSN.

In this embodiment, the SGSN sends the second algorithm and the second key to an LLC protocol layer of the SGSN by using the GMM/SM protocol layer of the SGSN, and the SGSN selects a ciphering algorithm and an integrity protection algorithm according to a network capability of the user equipment and an algorithm supported by the SGSN, and deduces Ktc and Kti.

503: The SGSN performs integrity protection for a first authentication and key agreement request message on the LLC protocol layer of the SGSN and generates a first message authentication code.

In this embodiment, the SGSN receives, by using the LLC protocol layer of the SGSN, a first authentication and key agreement request message sent from the GMM/SM protocol layer of the SGSN, performs integrity protection for the first authentication and key agreement request message, and generates a first message authentication code MAC-I accordingly.

504: The SGSN sends the first authentication and key agreement request message to an LLC protocol layer of UE by using the LLC protocol layer of the SGSN, where the first authentication and key agreement request message carries the first message authentication code and the second algorithm identifier.

In this embodiment, the SGSN sends, to an LLC protocol layer of the UE by using the LLC protocol layer of the SGSN, the first authentication and key agreement request message carrying the first message authentication code, where the first authentication and key agreement request message carries the first message authentication code and the second algorithm identifier, and the second algorithm identifier is used to indicate the type of the second algorithm.

It should be noted that, the second algorithm herein and the first algorithm mentioned in FIG. 4 and the first to the third embodiments corresponding to FIG. 4 may be actually a same algorithm, and the "first" and the "second" herein are mainly used to indicate a difference between protocol layers on which the algorithms are located.

505: The SGSN receives, by using the LLC protocol layer of the SGSN, if the UE determines on the LLC protocol layer of the UE that verification of the first message authentication code succeeds, a second authentication and key agreement response message sent by the UE, where the second authentication and key agreement response message carries a second message authentication code.

In this embodiment, after the UE receives the first message authentication code by using the LLC protocol layer of the UE, the UE verifies the first message authentication code, and when determining that the verification succeeds, the UE sends an verification success message to a GMM/SM protocol layer of the UE by using the LLC protocol layer of the UE, so that the UE generates a first authentication and key agreement response message on the GMM/SM protocol layer, sends the message to the LLC protocol layer of the UE, and generates a second authentication and key agreement response message on the LLC protocol layer of the UE. Specific operations may be: The UE performs integrity protection for the first authentication and key agreement response message on the LLC protocol layer of the UE to obtain a second authentication and key agreement response message, adds packet header information and a second message authentication code MAC-I to the second key agreement response message, and then sends, to an SGSN side, the second authentication and key agreement response message carrying the second message authentication code MAC-I. The SGSN receives, by using the LLC protocol layer of the SGSN, the second authentication and key agreement response message that is sent by the UE by using the LLC protocol layer of the UE and that carries the second message authentication code.

506: The SGSN verifies the second message authentication code on the LLC protocol layer of the SGSN by using the second key and the second algorithm.

In this embodiment, the SGSN verifies the second message authentication code in the second authentication and key agreement response message on the LLC protocol layer of the SGSN, and when the verification succeeds, the SGSN performs ciphering and integrity protection or performs only ciphering protection or integrity protection for to-be-processed data on the LLC protocol layer of the SGSN by using the determined second key and second algorithm.

In this embodiment of the present invention, an implementation solution for performing integrity protection for a key and algorithm agreement procedure between UE and an SGSN is provided, which is specifically about integrity protection for an authentication and key agreement request message and an authentication and key agreement response message on LLC protocol layers, and enhances interaction between an LLC protocol layer and a GMM/SM protocol layer on a UE side and perform less message verification on an SGSN side, to obtain a key on the GMM/SM protocol layer of the UE and then verify integrity of a message on the LLC protocol layer, thereby improving security of the solution and preventing a downgrade-attack from an attacker to an algorithm.

Optionally, based on the embodiment corresponding to FIG. 5, in a first optional embodiment of the message protection method provided in the embodiments of the present invention,
the second key includes a second ciphering key, and the second algorithm includes a second ciphering algorithm; or
the second key includes a second integrity key, and the second algorithm includes a second integrity protection algorithm; or
the second key includes a second ciphering key and a second integrity key, and the second algorithm includes a second ciphering algorithm and a second integrity protection algorithm.

In this embodiment, the second key may include the second ciphering key and the second integrity key, or may include only the second ciphering key or the second integrity key.

Herein, the second ciphering key is Ktc, and the second integrity key is Kti.

The second algorithm includes the second ciphering algorithm and the second integrity protection algorithm, or may include only the second ciphering algorithm or the second integrity protection algorithm.

The integrity protection algorithm is mainly used to protect integrity of to-be-sent data on a sending end and check on a receiving end whether integrity of received data is destroyed. A message authentication code MAC-I and an expected message authentication code XMAC-I are respectively obtained by performing an operation on data of the sending end and the receiving end by using the integrity protection algorithm, and data integrity can be determined through comparison of the two.

Then, in this embodiment of the present invention, a second key and a second algorithm are made concrete, so as to support the solution of the present invention in an actual application scenario and improve flexibility of the solution, and a specific algorithm is selected in a specific scenario for data inclusion, which also improves plasticity of the solution.

Optionally, based on FIG. 5 and the first embodiment corresponding to FIG. 5, in a second optional embodiment of the message protection method provided in the embodiments of the present invention, after the verifying, by the SGSN, the second message authentication code on the LLC protocol layer of the SGSN by using the second key and the second algorithm, the method may further include:
ciphering, by the SGSN, data and signaling on the LLC protocol layer of the SGSN by using the second ciphering key and the second ciphering algorithm indicated by a second ciphering algorithm identifier; or
ciphering, by the SGSN, user plane data and control plane signaling on the LLC protocol layer of the SGSN by using the second ciphering key and the second ciphering algorithm indicated by a second ciphering algorithm identifier, and performing integrity protection for the control plane signaling on the LLC protocol layer of the SGSN by using the second integrity key and the second integrity protection algorithm indicated by a second integrity protection algorithm identifier.

In this embodiment, the SGSN sends the second key and the second algorithm identifier to the LLC protocol layer of the SGSN by using the GMM/SM protocol layer of the SGSN, where the second algorithm identifier is used to determine the corresponding second algorithm. Both user plane data and control plane signaling exist on the LLC protocol layer of the SGSN. In this case, the data and the signaling may be processed by using the second key and the second algorithm, and a specific processing manner may be:
the SGSN ciphers the data and the signaling on the LLC protocol layer of the SGSN by using the second ciphering key and the second ciphering algorithm, which improves security of the data and the signaling in a transmission process; or
the SGSN ciphers the data on the LLC protocol layer of the SGSN by using the second ciphering key and the second ciphering algorithm, and performs both ciphering protection and integrity protection for the signaling on the LLC protocol layer of the SGSN.

Generally, the SGSN does not perform integrity protection for the data, and does not perform only integrity protection for the signaling, but such implementation manners are not precluded, and the description herein should not be construed as a limitation to the solution of this aspect.

Then, in this embodiment of the present invention, because data and signaling keep coexisting on an LLC protocol layer of an SGSN, ciphering protection may be performed for the data, and both ciphering protection and integrity protection may be performed for the signaling. A corresponding protection manner may be selected according to an actual situation, thereby implementing feasibility of the solution of the present invention in an application process. In addition, the ciphering protection can improve security of the data and the signaling, and the integrity protection improves integrity of the signaling, thereby greatly ensuring reliability of the data and the signaling in a transmission process.

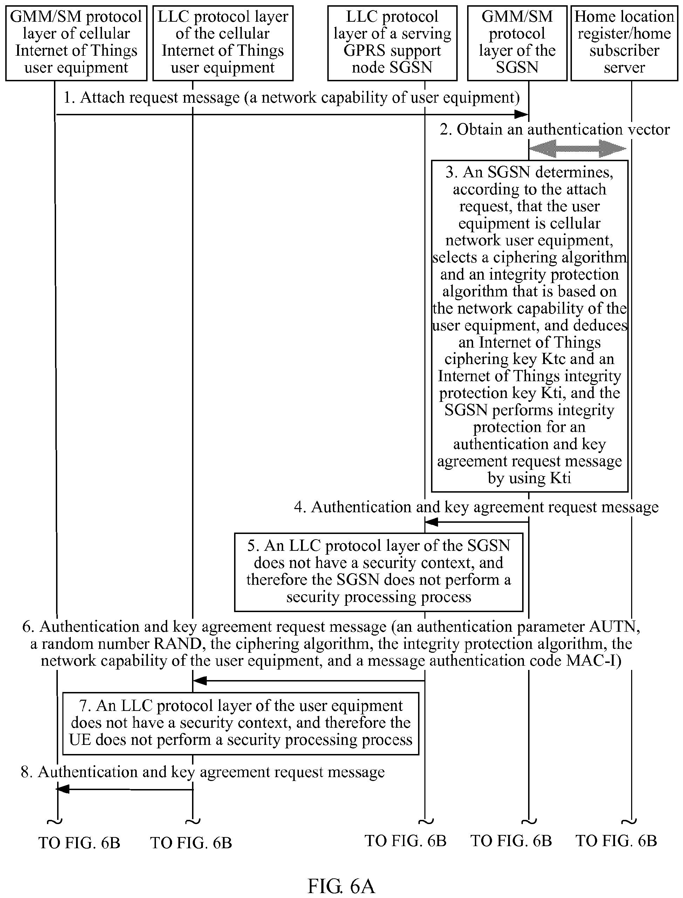

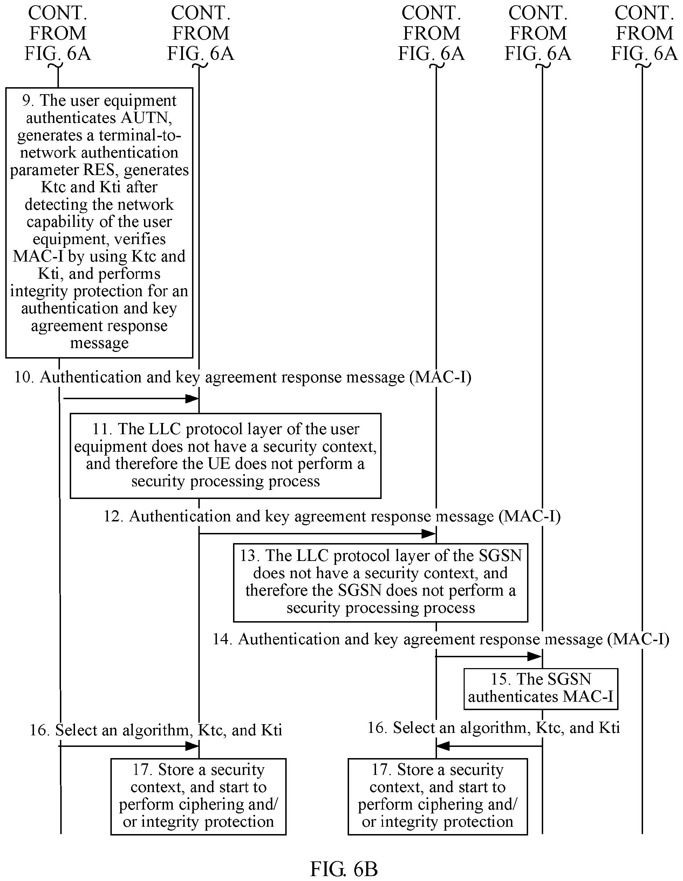

For ease of understanding, the following describes in detail a message protection method in the present invention by using a specific application scenario. Referring to FIG. 6A and FIG. 6B, FIG. 6A and FIG. 6B are a schematic flowchart of a message protection method in an application scenario according to an embodiment of the present invention. A process of the method is specifically as follows:
UE sends an attach request message to an SGSN, where the attach request message carries an identifier of the UE and a network capability of the UE.

The SGSN obtains, from an HLR or an HSS, an AV used for authentication.

After the SGSN determines, according to the attach request message sent by the UE, that the UE is cellular IoT type UE, the SGSN selects a ciphering algorithm and an integrity protection algorithm according to the network capability of the UE and a security algorithm supported by the SGSN, and deduces corresponding Ktc and Kti accordingly, and the SGSN performs integrity protection for an authentication and key agreement request message by using Kti and the integrity protection algorithm. A process may be: A sending end generates MAC-I after performing integrity protection for the authentication and key agreement request message by using Kti. A receiving end also generates a MAC-I value in a same manner. The two are compared, and if MAC-I is equal to the MAC-I value, verification succeeds.

The SGSN generates the authentication and key agreement request message on a GMM/SM protocol layer, where the authentication and key agreement request message carries AUTN, RAND, the ciphering algorithm, the integrity protection algorithm, the network capability of the UE, and MAC-I, and the SGSN sends the authentication and key agreement request message to an LLC protocol layer of the SGSN by using the GMM/SM protocol layer.

In this case, the LLC protocol layer of the SGSN has not obtained the key and the algorithm from the GMM/SM protocol layer, and therefore the SGSN does not perform security processing for the authentication and key agreement request message.

The SGSN directly sends the authentication and key agreement request message to an LLC protocol layer of the UE by using the LLC protocol layer of the SGSN.

In this case, the LLC protocol layer of the UE has not obtained a corresponding key and algorithm from a GMM/SM protocol layer of the UE, and therefore the UE does not perform security processing for the authentication and key agreement request message, either.

The UE directly sends the authentication and key agreement request message to the GMM/SM protocol layer of the UE by using the LLC protocol layer.

The UE verifies AUTN on the GMM/SM protocol layer according to the prior art, generates RES, generates Ktc and Kti and obtains an algorithm after detecting the network capability of the UE, verifies MAC-I by using the integrity key and the algorithm, generates an authentication and key agreement response message if the verification succeeds, and calculates a new MAC-I value for the authentication and key agreement response message, where a ciphering operation may be performed for the authentication and key agreement response message.

The UE sends, to the underlying LLC protocol layer by using the GMM/SM protocol layer of the UE, the authentication and key agreement response message carrying new MAC-I.

In this case, the UE still has not obtained the key and the algorithm from the GMM/SM protocol layer, and therefore does not perform security processing for the authentication and key agreement response message.

The UE sends the authentication and key agreement response message to the LLC protocol layer of the SGSN by using the LLC protocol layer of the UE, where the authentication and key agreement response message still carries the corresponding new MAC-I value.

In this case, the LLC protocol layer of the SGSN has not obtained the key and the algorithm from the GMM/SM protocol layer of the SGSN, either, and therefore the SGSN does not perform security processing for the authentication and key agreement response message, either.

The SGSN sends, to the GMM/SM protocol layer of the SGSN by using the LLC protocol layer of the SGSN, the authentication and key agreement response message carrying the new MAC-I value.

The SGSN verifies integrity of new MAC-I in the authentication and key agreement response message on the GMM/SM protocol layer of the SGSN.

After the integrity verification of new MAC-I succeeds, the GMM/SM protocol layer of the SGSN sends the key and the algorithm to the LLC protocol layer of the SGSN, and after the UE sends the authentication and key agreement response message on the GMM/SM protocol layer of the UE, the UE also sends the key and the algorithm to the LLC protocol layer of the UE. If integrity protection is not performed but only ciphering protection is enabled on a control plane, the GMM/SM protocol layer sends only a ciphering key and a ciphering algorithm to the LLC protocol layer, and does not send an integrity key and an integrity protection algorithm.

The LLC protocol layers of the UE and the SGSN separately store the key and the algorithm, enable data ciphering of a user plane, and enable ciphering and integrity protection of the control plane. Integrity protection may be not enabled on the control plane. For example, when the LLC protocol layers receive no integrity key and no integrity protection algorithm, corresponding integrity protection is not enabled.

In the foregoing application scenario, integrity protection is mainly performed for an authentication and key agreement request message and an authentication and key agreement response message on GMM/SM protocol layers. Only after verification of the authentication and key agreement request message on a GMM/SM protocol layer by UE succeeds and the UE sends the authentication and key agreement response message, the UE sends Ktc, Kti, and an algorithm to an LLC protocol layer of the UE. Only after verification of the authentication and key agreement response message on a GMM/SM protocol layer by an SGSN succeeds, the SGSN sends Ktc, Kti, and an algorithm to an LLC protocol layer of the SGSN.

The following provides a procedure of another data processing method. In the method, processing is mainly performed on an LLC protocol layer, where UE receives an authentication and key agreement request message by using an LLC protocol layer, and directly reports the message to a GMM/SM protocol layer of the UE, the GMM/SM protocol layer of the UE completes authentication and generates a key, and sends Ktc, Kti, and an algorithm to the LLC protocol layer of the UE, and last, the UE verifies integrity of the authentication and key agreement request message on the LLC protocol layer of the UE.

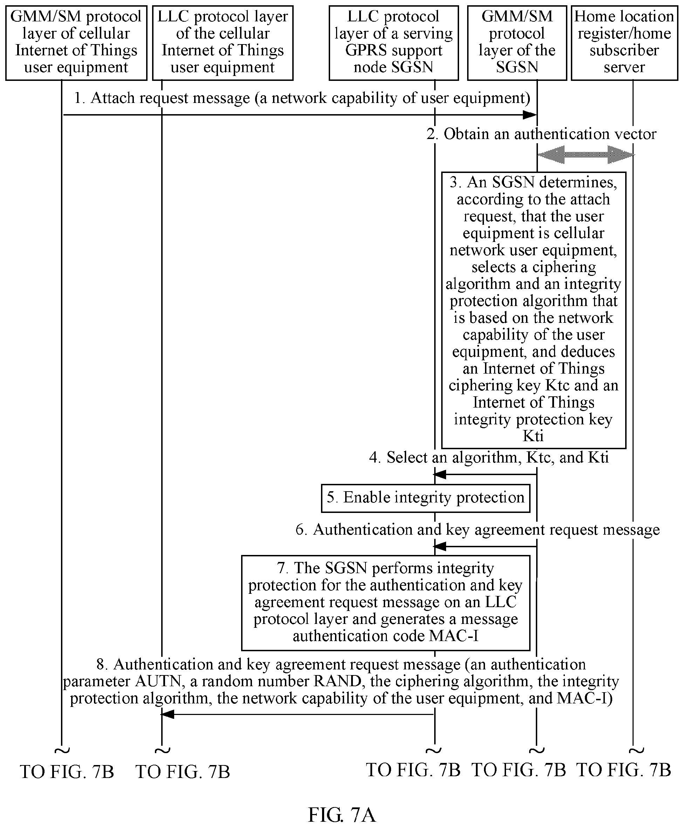

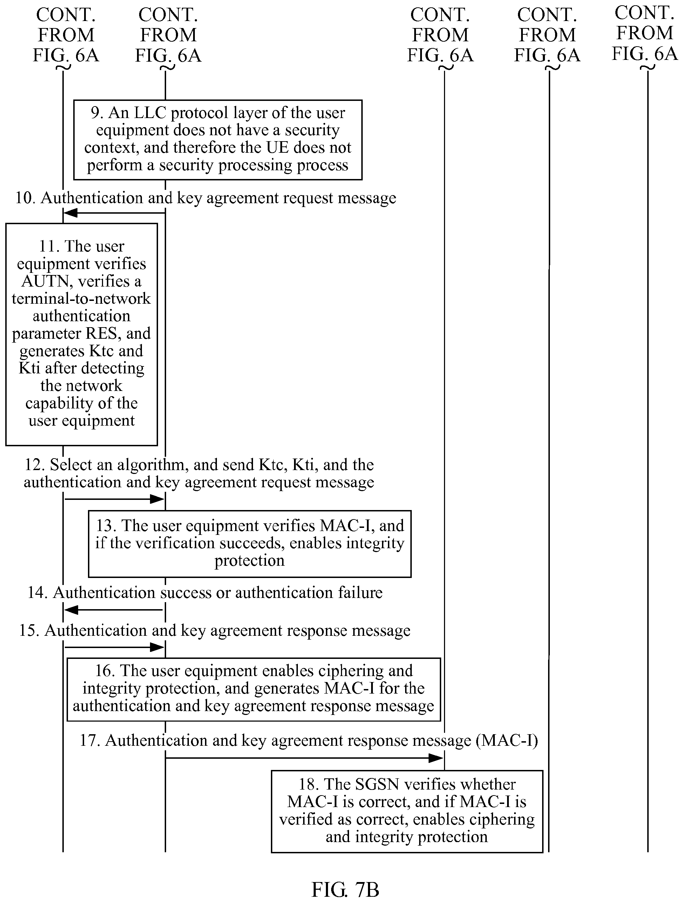

Referring to FIG. 7A and FIG. 7B, FIG. 7A and FIG. 7B are another schematic flowchart of a message protection method in an application scenario according to an embodiment of the present invention. A process of the method is specifically as follows:
UE sends an attach request message to an SGSN, where the attach request message carries an identifier of the UE and a network capability of the UE.

The SGSN obtains, from an HLR or an HSS, an AV used for authentication.

After the SGSN determines, according to the attach request message sent by the UE, that the UE is cellular IoT type UE, the SGSN selects a ciphering algorithm and an integrity protection algorithm based on the network capability of the UE and a security algorithm supported by the SGSN, and deduces corresponding Ktc and Kti accordingly.

The SGSN sends Ktc, Kti, and a corresponding algorithm to an LLC protocol layer of the SGSN by using a GMM/SM protocol layer of the SGSN.

After the SGSN receives Ktc, Kti, and the corresponding algorithm on the LLC protocol layer, the SGSN enables corresponding integrity protection on the LLC protocol layer.

The SGSN sends an authentication and key agreement request message to the LLC protocol layer of the SGSN by using the GMM/SM protocol layer.

The SGSN generates the authentication and key agreement request message on the GMM/SM protocol layer, where the authentication and key agreement request message carries AUTN, RAND, the ciphering algorithm, the integrity protection algorithm, and the network capability of the UE, and the SGSN performs integrity protection for the authentication and key agreement request message on the LLC protocol layer of the SGSN, and generates corresponding MAC-I through calculation.

The SGSN directly sends the authentication and key agreement request message to an LLC protocol layer of the UE by using the LLC protocol layer of the SGSN.

In this case, the UE still has not obtained a key and an algorithm from a GMM/SM protocol layer, and therefore does not perform security processing for the authentication and key agreement request message.

The UE sends the authentication and key agreement request message to the GMM/SM protocol layer of the UE by using the LLC protocol layer of the UE. Herein, MAC-I in the authentication and key agreement request message may be not removed, and MAC-I is sent to the GMM/SM protocol layer of the UE as a part of an SDU.

The UE verifies AUTN on the GMM/SM protocol layer according to the prior art, generates RES, and generates Ktc and Kti and obtains an algorithm after detecting the network capability of the UE.

The UE sends Ktc, Kti, the algorithm, and the authentication and key agreement request message to the LLC protocol layer of the UE by using the GMM/SM protocol layer of the UE, where the authentication and key agreement request message carries MAC-I.

The UE verifies MAC-I on the LLC protocol layer of the UE by using the integrity key and the integrity protection algorithm, so as to verification integrity of the authentication and key agreement request message.

The UE sends a verification success or verification failure message to the GMM/SM protocol layer of the UE by using the LLC protocol layer of the UE.

If the verification succeeds, an authentication and key agreement response message is returned to the LLC protocol layer of the UE.

The UE enables ciphering protection of a user plane and enables ciphering protection and integrity protection of a control plane on the LLC protocol layer. Optionally, integrity protection may need to be performed for only the authentication and key agreement request message or the authentication and key agreement response message, and integrity protection may not need to be enabled for subsequent signaling. New MAC-I is generated after integrity protection and ciphering protection are performed for the authentication and key agreement response message.

The UE sends, to the LLC protocol layer of the SGSN by using the LLC protocol layer, the authentication and key agreement response message carrying new MAC-I.

The SGSN verifies, on the LLC protocol layer of the SGSN, whether new MAC-I carried in the authentication and key agreement response message is correct, and if the verification succeeds, enables ciphering protection of user plane data and ciphering protection and integrity protection of control plane signaling. Optionally, if integrity protection needs to be performed for only the authentication and key agreement request message and the authentication and key agreement response message, integrity protection may not need to be enabled for subsequent signaling.

For better implementation of the message protection method in the embodiments of the present invention, the embodiments of the present invention further provide a device based on the message protection method. Nouns have meanings the same as those in the message protection method. For specific implementation details, refer to descriptions in the method embodiments.

### 1. Protection for information on a GMM/SM protocol layer:

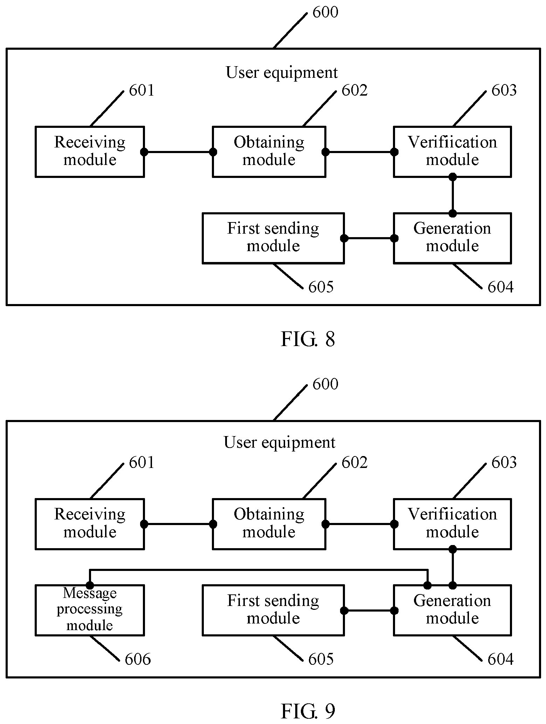

The following describes user equipment in the present invention in detail. Referring to FIG. 8, the user equipment in an embodiment of the present invention includes:
a receiving module 601, configured to receive, by using a GPRS mobility management GMM/session management SM protocol layer of the UE, an authentication and key agreement request message sent by a serving GPRS support node SGSN, where the authentication and key agreement request message carries a first message authentication code and a first algorithm identifier, and the first algorithm identifier is used to indicate a first algorithm;
an obtaining module 602, configured to obtain the first algorithm identifier on the GMM/SM protocol layer of the UE according to the authentication and key agreement request message received by the receiving module 601 and generate a first key;
an verification module 603, configured to verify the first message authentication code on the GMM/SM protocol layer of the UE according to the first key obtained by and the first algorithm generated by the obtaining module 602;
a generation module 604, configured to generate, if the verification module 603 determines that the verification of the first message authentication code succeeds, an authentication and key agreement response message on the GMM/SM protocol layer of the UE according to the first key and the first algorithm, where the authentication and key agreement response message carries a second message authentication code; and
a first sending module 605, configured to send the authentication and key agreement response message generated by the generation module 604 to the SGSN by using the GMM/SM protocol layer of the UE, so that the SGSN verifies the second message authentication code.

In this embodiment, the receiving module 601 receives, by using a GMM/SM protocol layer of the UE, an authentication and key agreement request message sent by an SGSN, where the authentication and key agreement request message carries a first message authentication code and a first algorithm identifier, and the first algorithm identifier is used to indicate a first algorithm; the obtaining module 602 obtains the first algorithm identifier on the GMM/SM protocol layer of the UE according to the authentication and key agreement request message received by the receiving module 601 and generates a first key; the verification module 603 verifies the first message authentication code on the GMM/SM protocol layer of the UE according to the first key obtained by and the first algorithm generated by the obtaining module 602; if the verification module 603 determines that the verification of the first message authentication code succeeds, the generation module 604 generates an authentication and key agreement response message on the GMM/SM protocol layer of the UE according to the first key and the first algorithm, where the authentication and key agreement response message carries a second message authentication code; and the first sending module 605 sends the authentication and key agreement response message generated by the generation module 604 to the SGSN by using the GMM/SM protocol layer of the UE, so that the SGSN verifies the second message authentication code.

In this embodiment of the present invention, an implementation solution for message protection between the UE and an SGSN is provided, which is specifically about integrity protection for an authentication and key agreement request message and an authentication and key agreement response message on GMM/SM protocol layers, and resolves a problem in the prior art that an integrity protection function cannot be implemented on LLC protocol layers of the UE and the SGSN. Integrity protection is respectively performed for the authentication and key agreement request message and the authentication and key agreement response message on GMM/SM protocol layers of the UE and the SGSN. Support can be obtained in an actual application, thereby improving security of the solution and preventing a downgrade-attack from an attacker to an algorithm.

Optionally, based on the embodiment corresponding to FIG. 8, in a first optional embodiment of the user equipment provided in the embodiments of the present invention,
the first key includes a first ciphering key, and the first algorithm includes a first ciphering algorithm; or
the first key includes a first integrity key, and the first algorithm includes a first integrity protection algorithm; or
the first key includes a first ciphering key and a first integrity key, and the first algorithm includes a first ciphering algorithm and a first integrity protection algorithm.

Then, in this embodiment of the present invention, a first key and a first algorithm are made concrete, so as to support the solution of the present invention in an actual application scenario and improve flexibility of the solution, and a specific algorithm is selected in a specific scenario for data inclusion, which also improves plasticity of the solution.

Referring to FIG. 9, another embodiment of the user equipment in the present invention includes:
a receiving module 601, configured to receive, by using a GPRS mobility management GMM/session management SM protocol layer of the UE, an authentication and key agreement request message sent by a serving GPRS support node SGSN, where the authentication and key agreement request message carries a first message authentication code and a first algorithm identifier, and the first algorithm identifier is used to indicate a first algorithm;
an obtaining module 602, configured to obtain the first algorithm identifier on the GMM/SM protocol layer of the UE according to the authentication and key agreement request message received by the receiving module 601 and generate a first key;
an verification module 603, configured to verify the first message authentication code on the GMM/SM protocol layer of the UE according to the first key obtained by and the first algorithm generated by the obtaining module 602;
a generation module 604, configured to generate, if the verification module 603 determines that the verification of the first message authentication code succeeds, an authentication and key agreement response message on the GMM/SM protocol layer of the UE according to the first key and the first algorithm, where the authentication and key agreement response message carries a second message authentication code;
a message processing module 606, configured to: after the generation module 604 generates the authentication and key agreement response message on the GMM/SM protocol layer of the UE according to the first key and the first algorithm, cipher the authentication and key agreement response message on the GMM/SM protocol layer of the UE by using the first ciphering key and the first ciphering algorithm indicated by a first ciphering algorithm identifier; or
perform integrity protection for the authentication and key agreement response message on the GMM/SM protocol layer of the UE by using the first integrity key and the first integrity protection algorithm indicated by a first integrity protection algorithm identifier; or
cipher the authentication and key agreement response message on the GMM/SM protocol layer of the UE by using the first ciphering key and the first ciphering algorithm indicated by a first ciphering algorithm identifier, and perform integrity protection for the authentication and key agreement response message on the GMM/SM protocol layer of the UE by using the first integrity key and the first integrity protection algorithm indicated by a first integrity protection algorithm identifier; and
a first sending module 605, configured to send the authentication and key agreement response message generated by the generation module 604 to the SGSN by using the GMM/SM protocol layer of the UE, so that the SGSN verifies the second message authentication code.

Then, in this embodiment of the present invention, a specific solution for protecting an authentication and key agreement response message is provided, where ciphering protection or integrity protection can be performed, and both ciphering protection and integrity protection also can be performed, thereby greatly improving security, continuity, and integrity of a transmitted message, and achieving a better practical effect in a specific implementation of the solution.

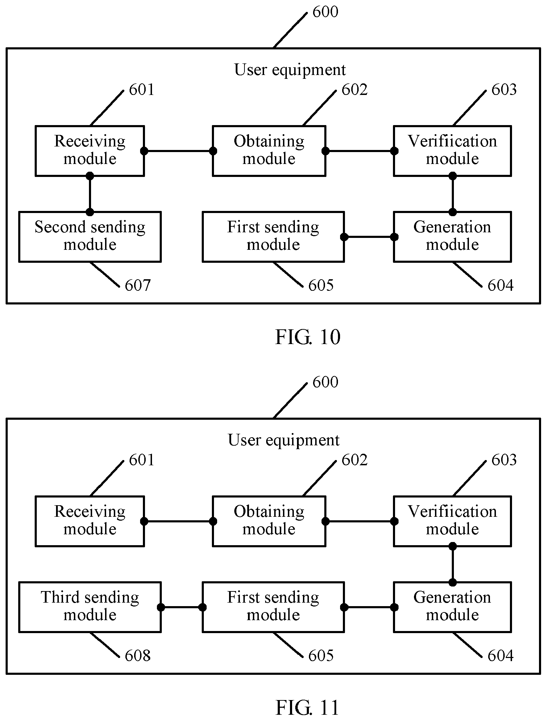

Referring to FIG. 10, another embodiment of the user equipment in the present invention includes:
a second sending module 607, configured to: before a receiving module 601 receives, by using a GMM/SM protocol layer of the UE, an authentication and key agreement request message sent by an SGSN, send an attach request message to a GMM/SM protocol layer of the SGSN by using the GMM/SM protocol layer of the UE, where the attach request message carries an identifier of the UE and network capability information of the UE, so that the SGSN generates the authentication and key agreement request message on the GMM/SM protocol layer of the SGSN according to the attach request message;
a receiving module 601, configured to receive, by using the GPRS mobility management GMM/session management SM protocol layer of the UE, the authentication and key agreement request message sent by the serving GPRS support node SGSN, where the authentication and key agreement request message carries a first message authentication code and a first algorithm identifier, and the first algorithm identifier is used to indicate a first algorithm;
an obtaining module 602, configured to obtain the first algorithm identifier on the GMM/SM protocol layer of the UE according to the authentication and key agreement request message received by the receiving module 601 and generate a first key;
an verification module 603, configured to verify the first message authentication code on the GMM/SM protocol layer of the UE according to the first key obtained by and the first algorithm generated by the obtaining module 602;
a generation module 604, configured to generate, if the verification module 603 determines that the verification of the first message authentication code succeeds, an authentication and key agreement response message on the GMM/SM protocol layer of the UE according to the first key and the first algorithm, where the authentication and key agreement response message carries a second message authentication code; and
a first sending module 605, configured to send the authentication and key agreement response message generated by the generation module 604 to the SGSN by using the GMM/SM protocol layer of the UE, so that the SGSN verifies the second message authentication code.

Further, in this embodiment of the present invention, the UE sends an attach request message to an SGSN, so that the SGSN may obtain an authentication related parameter according to the attach request message, which provides a specific implementation basis for an actual application of the solution of the present invention, and is also a manner of interaction between the UE and a network side. Information exchange between the UE and a network is completed by using an attach request, which improves practicability of the solution.

Referring to FIG. 11, another embodiment of the user equipment in the present invention includes:
a receiving module 601, configured to receive, by using a GPRS mobility management GMM/session management SM protocol layer of the UE, an authentication and key agreement request message sent by a serving GPRS support node SGSN, where the authentication and key agreement request message carries a first message authentication code and a first algorithm identifier, and the first algorithm identifier is used to indicate a first algorithm;
an obtaining module 602, configured to obtain the first algorithm identifier on the GMM/SM protocol layer of the UE according to the authentication and key agreement request message received by the receiving module 601 and generate a first key;
an verification module 603, configured to verify the first message authentication code on the GMM/SM protocol layer of the UE according to the first key obtained by and the first algorithm generated by the obtaining module 602;
a generation module 604, configured to generate, if the verification module 603 determines that the verification of the first message authentication code succeeds, an authentication and key agreement response message on the GMM/SM protocol layer of the UE according to the first key and the first algorithm, where the authentication and key agreement response message carries a second message authentication code;
a first sending module 605, configured to send the authentication and key agreement response message generated by the generation module 604 to the SGSN by using the GMM/SM protocol layer of the UE, so that the SGSN verifies the second message authentication code; and
a third sending module 608, configured to: after the first sending module 605 sends the authentication and key agreement response message to the SGSN by using the GMM/SM protocol layer of the UE, send the first key and the first algorithm identifier to a logical link control LLC protocol layer of the UE by using the GMM/SM protocol layer of the UE.

Furthermore, in this embodiment of the present invention, after the UE sends an authentication and key agreement response message to an SGSN by using a GMM/SM protocol layer, the UE may further send a first algorithm and a first key to an LLC protocol layer of the UE, so that the UE may perform corresponding processing on data and signaling on the LLC protocol layer, thereby improving reliability of the solution and further improving the practicability of the solution.

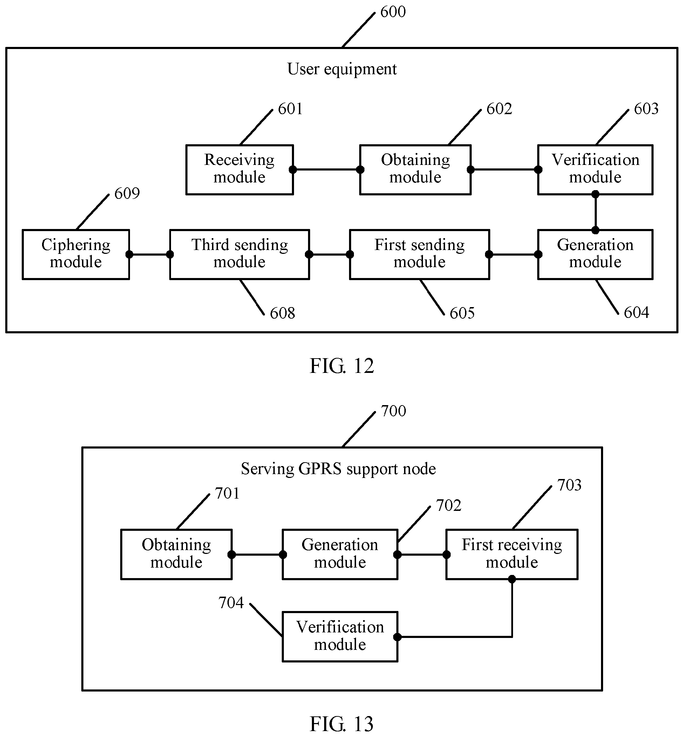

Referring to FIG. 12, another embodiment of the user equipment in the present invention includes:
a receiving module 601, configured to receive, by using a GPRS mobility management GMM/session management SM protocol layer of the UE, an authentication and key agreement request message sent by a serving GPRS support node SGSN, where the authentication and key agreement request message carries a first message authentication code and a first algorithm identifier, and the first algorithm identifier is used to indicate a first algorithm;
an obtaining module 602, configured to obtain the first algorithm identifier on the GMM/SM protocol layer of the UE according to the authentication and key agreement request message received by the receiving module 601 and generate a first key;
an verification module 603, configured to verify the first message authentication code on the GMM/SM protocol layer of the UE according to the first key obtained by and the first algorithm generated by the obtaining module 602;
a generation module 604, configured to generate, if the verification module 603 determines that the verification of the first message authentication code succeeds, an authentication and key agreement response message on the GMM/SM protocol layer of the UE according to the first key and the first algorithm, where the authentication and key agreement response message carries a second message authentication code;
a first sending module 605, configured to send the authentication and key agreement response message generated by the generation module 604 to the SGSN by using the GMM/SM protocol layer of the UE, so that the SGSN verifies the second message authentication code;
a third sending module 608, configured to: after the first sending module 605 sends the authentication and key agreement response message to the SGSN by using the GMM/SM protocol layer of the UE, send the first key and the first algorithm identifier to a logical link control LLC protocol layer of the UE by using the GMM/SM protocol layer of the UE; and
a ciphering module 609, configured to: after the third sending module 608 sends the first key and the first algorithm identifier to the logical link control LLC protocol layer of the UE by using the GMM/SM protocol layer of the UE, cipher user plane data and control plane signaling on the LLC protocol layer of the UE by using the first ciphering key and the first ciphering algorithm indicated by the first ciphering algorithm identifier; or
cipher, by the UE, user plane data and control plane signaling on the LLC protocol layer of the UE by using the first ciphering key and the first ciphering algorithm indicated by the first ciphering algorithm identifier, and perform integrity protection for the control plane signaling on the LLC protocol layer of the UE by using the first integrity key and the first integrity protection algorithm indicated by the first integrity protection algorithm identifier.

Furthermore, in this embodiment of the present invention, because data and signaling keep coexisting on an LLC protocol layer of the UE, ciphering protection may be performed for the data, and both ciphering protection and integrity protection may be performed for the signaling. A corresponding protection manner may be selected according to an actual situation, thereby implementing feasibility of the solution of the present invention in an application process. In addition, the ciphering protection can improve security of the data and the signaling, and the integrity protection improves integrity of the signaling, thereby greatly ensuring reliability of the data and the signaling in a transmission process.

The following describes a serving GPRS support node in the present invention in detail. Referring to FIG. 13, the serving GPRS support node in an embodiment of the present invention includes:
an obtaining module 701, configured to obtain a second algorithm identifier on a GPRS mobility management GMM/session management SM protocol layer of the SGSN and generate a second key, where the second algorithm identifier is used to indicate a second algorithm;
a generation module 702, configured to generate an authentication and key agreement request message on the GMM/SM protocol layer of the SGSN by using the second key and the second algorithm that are obtained by the obtaining module 701, and send the authentication and key agreement request message to user equipment UE, where the authentication and key agreement request message carries a first message authentication code and the second algorithm identifier;
a first receiving module 703, configured to receive, by using the GMM/SM protocol layer of the SGSN, an authentication and key agreement response message sent by the generation module 702, where the authentication and key agreement response message carries a second message authentication code; and
an verification module 704, configured to verify the second message authentication code, received by the first receiving module 703, on the GMM/SM protocol layer of the SGSN by using the second key and the second algorithm.

In this embodiment, the obtaining module 701 obtains a second algorithm identifier on a GMM/SM protocol layer of the SGSN and generates a second key, where the second algorithm identifier is used to indicate a second algorithm; the generation module 702 generates an authentication and key agreement request message on the GMM/SM protocol layer of the SGSN by using the second key and the second algorithm that are obtained by the obtaining module 701, and sends the authentication and key agreement request message to user equipment UE, where the authentication and key agreement request message carries a first message authentication code and the second algorithm identifier; the first receiving module 703 receives, by using the GMM/SM protocol layer of the SGSN, an authentication and key agreement response message sent by the generation module 702, where the authentication and key agreement response message carries a second message authentication code; and the verification module 704 verifies the second message authentication code, received by the first receiving module 703, on the GMM/SM protocol layer of the SGSN by using the second key and the second algorithm.

Optionally, based on the embodiment corresponding to FIG. 13, in a first optional embodiment of the serving GPRS support node provided in the embodiments of the present invention,
the second key includes a second ciphering key, and the second algorithm includes a second ciphering algorithm; or
the second key includes a second integrity key, and the second algorithm includes a second integrity protection algorithm; or
the second key includes a second ciphering key and a second integrity key, and the second algorithm includes a second ciphering algorithm and a second integrity protection algorithm.

Then, in this embodiment of the present invention, a second key and a second algorithm are made concrete, so as to support the solution of the present invention in an actual application scenario and improve flexibility of the solution, and a specific algorithm is selected in a specific scenario for data inclusion, which also improves plasticity of the solution.

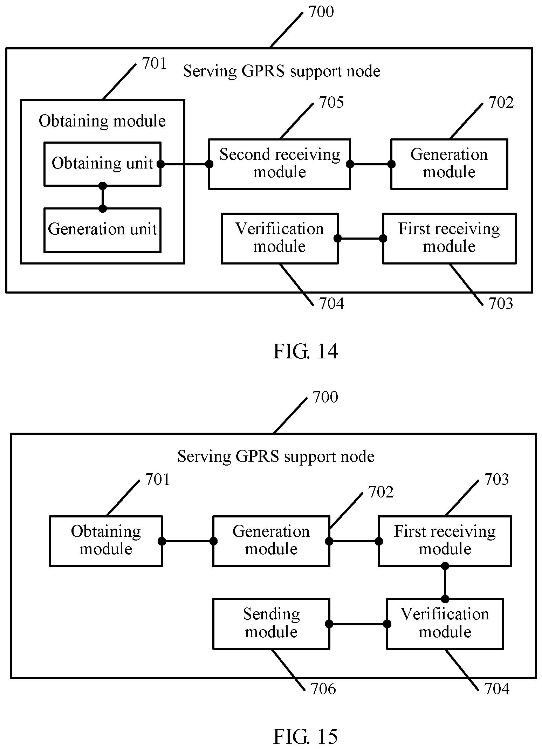

Referring to FIG. 14, another embodiment of the serving GPRS support node in the present invention includes:
an obtaining module 701, configured to obtain a second algorithm identifier on a GPRS mobility management GMM/session management SM protocol layer of the SGSN and generate a second key, where the second algorithm identifier is used to indicate a second algorithm;
a second receiving module 705, configured to: before a generation module 702 generates an authentication and key agreement request message on the GMM/SM protocol layer of the SGSN, and sends the authentication and key agreement request message to user equipment UE, receive, by using the GMM/SM protocol layer of the SGSN, an attach request message sent by the UE, where the attach request message carries an identifier of the UE and network capability information of the UE;
a generation module 702, configured to generate the authentication and key agreement request message on the GMM/SM protocol layer of the SGSN by using the second key and the second algorithm that are obtained by the obtaining module 701, and send the authentication and key agreement request message to the user equipment UE, where the authentication and key agreement request message carries a first message authentication code and the second algorithm identifier;
a first receiving module 703, configured to receive, by using the GMM/SM protocol layer of the SGSN, an authentication and key agreement response message sent by the generation module 702, where the authentication and key agreement response message carries a second message authentication code; and
an verification module 704, configured to verify the second message authentication code, received by the first receiving module 703, on the GMM/SM protocol layer of the SGSN by using the second key and the second algorithm.

The obtaining module 701 includes:
an obtaining unit 7011, configured to obtain the second algorithm according to the network capability information of the UE; and
a generation unit 7012, configured to obtain authorization vector information of the UE according to the identifier of the UE and generate the second key according to the authorization vector information.

Then, in this embodiment of the present invention, the SGSN receives an attach request message sent by UE, and obtains an authentication related parameter according to the attach request message, which provides a specific implementation basis for an actual application of the solution of the present invention, and is also a manner of interaction between the UE and the SGSN. Information exchange between the UE and a network is completed by using an attach request, which improves practicability of the solution. When the SGSN receives attach request message carrying an identifier of the UE and network capability information of the UE, the SGSN selects an appropriate algorithm according to the network capability information of the UE, and determines, according to the identifier of the UE, authorization vector information corresponding to the UE, so that the solution is more appropriate in an actual application. A specific algorithm and key are selected for specific UE, which improves feasibility of the entire solution.

Referring to FIG. 15, another embodiment of the serving GPRS support node in the present invention includes:
an obtaining module 701, configured to obtain a second algorithm identifier on a GPRS mobility management GMM/session management SM protocol layer of the SGSN and generate a second key, where the second algorithm identifier is used to indicate a second algorithm;
a generation module 702, configured to generate an authentication and key agreement request message on the GMM/SM protocol layer of the SGSN by using the second key and the second algorithm that are obtained by the obtaining module 701, and send the authentication and key agreement request message to user equipment UE, where the authentication and key agreement request message carries a first message authentication code and the second algorithm identifier;
a first receiving module 703, configured to receive, by using the GMM/SM protocol layer of the SGSN, an authentication and key agreement response message sent by the generation module 702, where the authentication and key agreement response message carries a second message authentication code;
an verification module 704, configured to verify the second message authentication code, received by the first receiving module 703, on the GMM/SM protocol layer of the SGSN by using the second key and the second algorithm; and
a sending module 706, configured to send, if the verification module 704 determines that the verification of the second message authentication code succeeds, the second key and the second algorithm identifier to a logical link control LLC protocol layer of the SGSN by using the GMM/SM protocol layer of the SGSN.

Further, in this embodiment of the present invention, after the SGSN determines that verification of a second message authentication code succeeds, the SGSN sends a second key and a second algorithm identifier to an LLC protocol layer of the SGSN by using a GMM/SM protocol layer of the SGSN, so that the SGSN may perform corresponding processing on data and signaling on the LLC protocol layer, thereby improving reliability of the solution and further improving the practicability of the solution.

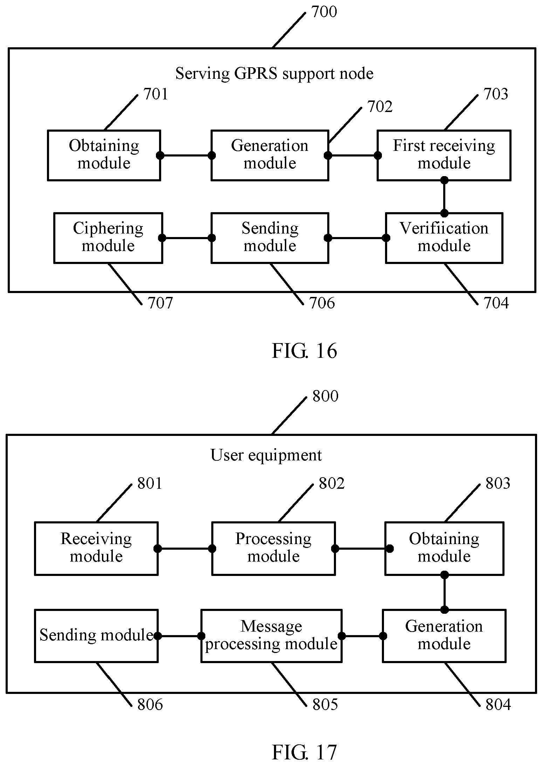

Referring to FIG. 16, another embodiment of the serving GPRS support node in the present invention includes:
an obtaining module 701, configured to obtain a second algorithm identifier on a GPRS mobility management GMM/session management SM protocol layer of the SGSN and generate a second key, where the second algorithm identifier is used to indicate a second algorithm;
a generation module 702, configured to generate an authentication and key agreement request message on the GMM/SM protocol layer of the SGSN by using the second key and the second algorithm that are obtained by the obtaining module 701, and send the authentication and key agreement request message to user equipment UE, where the authentication and key agreement request message carries a first message authentication code and the second algorithm identifier;
a first receiving module 703, configured to receive, by using the GMM/SM protocol layer of the SGSN, an authentication and key agreement response message sent by the generation module 702, where the authentication and key agreement response message carries a second message authentication code;
an verification module 704, configured to verify the second message authentication code, received by the first receiving module 703, on the GMM/SM protocol layer of the SGSN by using the second key and the second algorithm;
a sending module 706, configured to send, if the verification module 704 determines that the verification of the second message authentication code succeeds, the second key and the second algorithm identifier to a logical link control LLC protocol layer of the SGSN by using the GMM/SM protocol layer of the SGSN; and
a ciphering module 707, configured to: after the sending module 706 sends the second key and the second algorithm identifier to the logical link control LLC protocol layer of the SGSN by using the GMM/SM protocol layer of the SGSN, cipher, by the SGSN, user plane data and control plane signaling on the LLC protocol layer of the SGSN by using the second ciphering key and the second ciphering algorithm indicated by a second ciphering algorithm identifier; or
cipher user plane data and control plane signaling on the LLC protocol layer of the SGSN by using the second ciphering key and the second ciphering algorithm indicated by a second ciphering algorithm identifier, and perform integrity protection for the control plane signaling on the LLC protocol layer of the SGSN by using the second integrity key and the second integrity protection algorithm indicated by a second integrity protection algorithm identifier.

Furthermore, in this embodiment of the present invention, because data and signaling keep coexisting on an LLC protocol layer of an SGSN, ciphering protection may be performed for the data, and both ciphering protection and integrity protection may be performed for the signaling. A corresponding protection manner may be selected according to an actual situation, thereby implementing feasibility of the solution of the present invention in an application process. In addition, the ciphering protection can improve security of the data and the signaling, and the integrity protection improves integrity of the signaling, thereby greatly ensuring reliability of the data and the signaling in a transmission process.

### 2. Protection for information on an LLC protocol layer:

The following describes user equipment in the present invention in detail. Referring to FIG. 17, the user equipment in an embodiment of the present invention includes:
a receiving module 801, configured to receive, by using a logical link control LLC protocol layer of the UE, a first authentication and key agreement request message sent by a serving GPRS support node SGSN, where the first authentication and key agreement request message carries a first message authentication code and a first algorithm identifier, and the first algorithm identifier is used to indicate a first algorithm;
a processing module 802, configured to process the first authentication and key agreement request message, received by the receiving module 801, on the LLC protocol layer to obtain a second authentication and key agreement request message, and send the second authentication and key agreement request message to a GPRS mobility management GMM/session management SM protocol layer of the UE;
an obtaining module 803, configured to: after the processing module 802 sends the second authentication and key agreement request message to the GMM/SM protocol layer of the UE, obtain the first algorithm identifier on the GMM/SM protocol layer of the UE according to the second authentication and key agreement request message, generate a first key, and send the first key and the first algorithm identifier to the LLC protocol layer of the UE;
a generation module 804, configured to generate, if it is determined, on the LLC protocol layer of the UE by using the first algorithm and the first key that are obtained by the obtaining module 803, that verification of the first message authentication code succeeds, a first authentication and key agreement response message on the GMM/SM protocol layer of the UE;
a message processing module 805, configured to perform ciphering and/or integrity protection for the first authentication and key agreement response message, generated by the generation module 804, on the LLC protocol layer of the UE to obtain a second authentication and key agreement response message, where the second authentication and key agreement response message carries a second message authentication code; and
a sending module 806, configured to send the second authentication and key agreement response message obtained by the message processing module 805 through processing to the SGSN by using the LLC protocol layer of the UE, so that the SGSN verifies the second message authentication code.

In this embodiment, the receiving module 801 receives, by using a logical link control LLC protocol layer of the UE, a first authentication and key agreement request message sent by a serving GPRS support node SGSN, where the first authentication and key agreement request message carries a first message authentication code and a first algorithm identifier, and the first algorithm identifier is used to indicate a first algorithm; the processing module 802 processes the first authentication and key agreement request message, received by the receiving module 801, on the LLC protocol layer to obtain a second authentication and key agreement request message, and sends the second authentication and key agreement request message to a GPRS mobility management GMM/session management SM protocol layer of the UE; after the processing module 802 sends the second authentication and key agreement request message to the GMM/SM protocol layer of the UE, the obtaining module 803 obtains the first algorithm identifier on the GMM/SM protocol layer of the UE according to the second authentication and key agreement request message, generates a first key, and sends the first key and the first algorithm identifier to the LLC protocol layer of the UE; if it is determined, on the LLC protocol layer of the UE by using the first algorithm and the first key that are obtained by the obtaining module 803, that verification of the first message authentication code succeeds, the generation module 804 generates a first authentication and key agreement response message on the GMM/SM protocol layer of the UE; the message processing module 805 performs ciphering and/or integrity protection for the first authentication and key agreement response message, generated by the generation module 804, on the LLC protocol layer of the UE to obtain a second authentication and key agreement response message, where the second authentication and key agreement response message carries a second message authentication code; and the sending module 806 sends the second authentication and key agreement response message obtained by the message processing module 805 through processing to the SGSN by using the LLC protocol layer of the UE, so that the SGSN verifies the second message authentication code.

In this embodiment of the present invention, an implementation solution for message protection between the UE and an SGSN is provided, which is specifically about integrity protection for an authentication and key agreement request message and an authentication and key agreement response message on LLC protocol layers, and enhances interaction between an LLC protocol layer and a GMM/SM protocol layer on a UE side, to obtain a key on the GMM/SM protocol layer of the UE and then verify integrity of a message on the LLC protocol layer, thereby improving security of the solution and preventing a downgrade-attack from an attacker to an algorithm.

Optionally, based on the embodiment corresponding to FIG. 17, in a first optional embodiment of the user equipment provided in the embodiments of the present invention,
the first key includes a first ciphering key, and the first algorithm includes a first ciphering algorithm; or
the first key includes a first integrity key, and the first algorithm includes a first integrity protection algorithm; or
the first key includes a first ciphering key and a first integrity key, and the first algorithm includes a first ciphering algorithm and a first integrity protection algorithm.

Then, in this embodiment of the present invention, a first key and a first algorithm are made concrete, so as to support the solution of the present invention in an actual application scenario and improve flexibility of the solution, and a specific algorithm is selected in a specific scenario for data inclusion, which also improves plasticity of the solution.

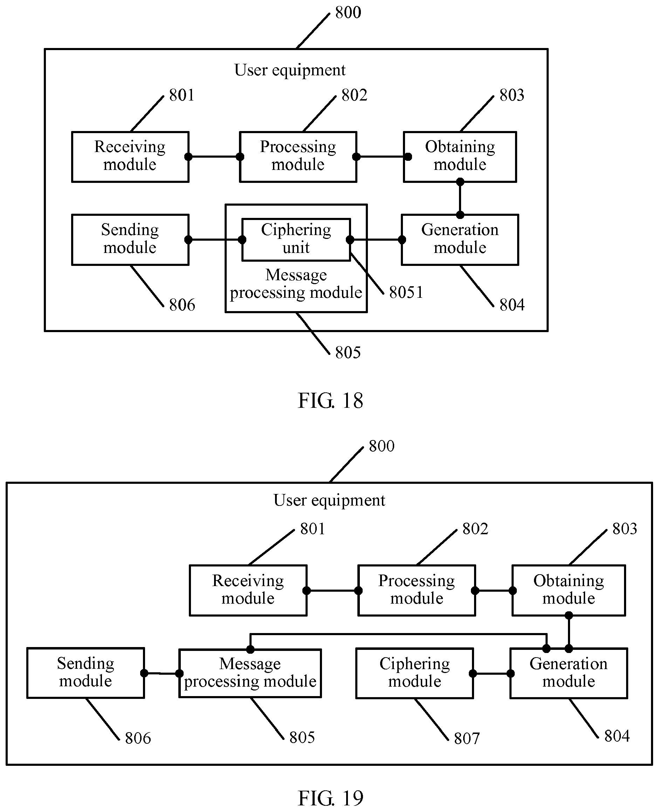

Referring to FIG. 18, another embodiment of the user equipment in the present invention includes:
a receiving module 801, configured to receive, by using a logical link control LLC protocol layer of the UE, a first authentication and key agreement request message sent by a serving GPRS support node SGSN, where the first authentication and key agreement request message carries a first message authentication code and a first algorithm identifier, and the first algorithm identifier is used to indicate a first algorithm;
a processing module 802, configured to process the first authentication and key agreement request message, received by the receiving module 801, on the LLC protocol layer to obtain a second authentication and key agreement request message, and send the second authentication and key agreement request message to a GPRS mobility management GMM/session management SM protocol layer of the UE;
an obtaining module 803, configured to: after the processing module 802 sends the second authentication and key agreement request message to the GMM/SM protocol layer of the UE, obtain the first algorithm identifier on the GMM/SM protocol layer of the UE according to the second authentication and key agreement request message, generate a first key, and send the first key and the first algorithm identifier to the LLC protocol layer of the UE;
a generation module 804, configured to generate, if it is determined, on the LLC protocol layer of the UE by using the first algorithm and the first key that are obtained by the obtaining module 803, that verification of the first message authentication code succeeds, a first authentication and key agreement response message on the GMM/SM protocol layer of the UE;
a message processing module 805, configured to perform ciphering and/or integrity protection for the first authentication and key agreement response message, generated by the generation module 804, on the LLC protocol layer of the UE to obtain a second authentication and key agreement response message, where the second authentication and key agreement response message carries a second message authentication code; and
a sending module 806, configured to send the second authentication and key agreement response message obtained by the message processing module 805 through processing to the SGSN by using the LLC protocol layer of the UE, so that the SGSN verifies the second message authentication code.

The message processing module 805 includes:
a ciphering unit 8051, configured to cipher the first authentication and key agreement response message on the LLC protocol layer of the UE by using the first ciphering key and the first ciphering algorithm indicated by a first ciphering algorithm identifier, to obtain the second authentication and key agreement response message; or
perform integrity protection for the first authentication and key agreement response message on the LLC protocol layer of the UE by using the first integrity key and the first integrity protection algorithm indicated by a first integrity protection algorithm identifier, to obtain the second authentication and key agreement response message; or
cipher the first authentication and key agreement response message on the LLC protocol layer of the UE by using the first ciphering key and the first ciphering algorithm indicated by a first ciphering algorithm identifier, and perform integrity protection for the first authentication and key agreement response message on the LLC protocol layer of the UE by using the first integrity key and the first integrity protection algorithm indicated by a first integrity protection algorithm identifier, to obtain the second authentication and key agreement response message.

Then, in this embodiment of the present invention, a specific solution for protecting a first authentication and key agreement response message is provided, where ciphering protection or integrity protection can be performed, and both ciphering protection and integrity protection also can be performed, thereby greatly improving security, continuity, and integrity of a transmitted message, and achieving a better practical effect in a specific implementation of the solution.

Referring to FIG. 19, another embodiment of the user equipment in the present invention includes:
a receiving module 801, configured to receive, by using a logical link control LLC protocol layer of the UE, a first authentication and key agreement request message sent by a serving GPRS support node SGSN, where the first authentication and key agreement request message carries a first message authentication code and a first algorithm identifier, and the first algorithm identifier is used to indicate a first algorithm;
a processing module 802, configured to process the first authentication and key agreement request message, received by the receiving module 801, on the LLC protocol layer to obtain a second authentication and key agreement request message, and send the second authentication and key agreement request message to a GPRS mobility management GMM/session management SM protocol layer of the UE;
an obtaining module 803, configured to: after the processing module 802 sends the second authentication and key agreement request message to the GMM/SM protocol layer of the UE, obtain the first algorithm identifier on the GMM/SM protocol layer of the UE according to the second authentication and key agreement request message, generate a first key, and send the first key and the first algorithm identifier to the LLC protocol layer of the UE;
a generation module 804, configured to generate, if it is determined, on the LLC protocol layer of the UE by using the first algorithm and the first key that are obtained by the obtaining module 803, that verification of the first message authentication code succeeds, a first authentication and key agreement response message on the GMM/SM protocol layer of the UE;
a ciphering module 807, configured to: after the generation module 804 generates the first authentication and key agreement response message on the GMM/SM protocol layer of the UE, cipher user plane data and control plane signaling on the LLC protocol layer of the UE by using the first ciphering key and the first ciphering algorithm indicated by a first ciphering algorithm identifier; or
cipher user plane data and control plane signaling on the LLC protocol layer of the UE by using the first ciphering key and the first ciphering algorithm indicated by a first ciphering algorithm identifier, and perform integrity protection for the control plane signaling on the LLC protocol layer of the UE by using the first integrity key and the first integrity protection algorithm indicated by a first integrity protection algorithm identifier;
a message processing module 805, configured to perform ciphering and/or integrity protection for the first authentication and key agreement response message, generated by the generation module 804, on the LLC protocol layer of the UE to obtain a second authentication and key agreement response message, where the second authentication and key agreement response message carries a second message authentication code; and
a sending module 806, configured to send the second authentication and key agreement response message obtained by the message processing module 805 through processing to the SGSN by using the LLC protocol layer of the UE, so that the SGSN verifies the second message authentication code.

Further, in this embodiment of the present invention, because data and signaling keep coexisting on an LLC protocol layer of the UE, ciphering protection may be performed for the data, and both ciphering protection and integrity protection may be performed for the signaling. A corresponding protection manner may be selected according to an actual situation, thereby implementing feasibility of the solution of the present invention in an application process. In addition, the ciphering protection can improve security of the data and the signaling, and the integrity protection improves integrity of the signaling, thereby greatly ensuring reliability of the data and the signaling in a transmission process.

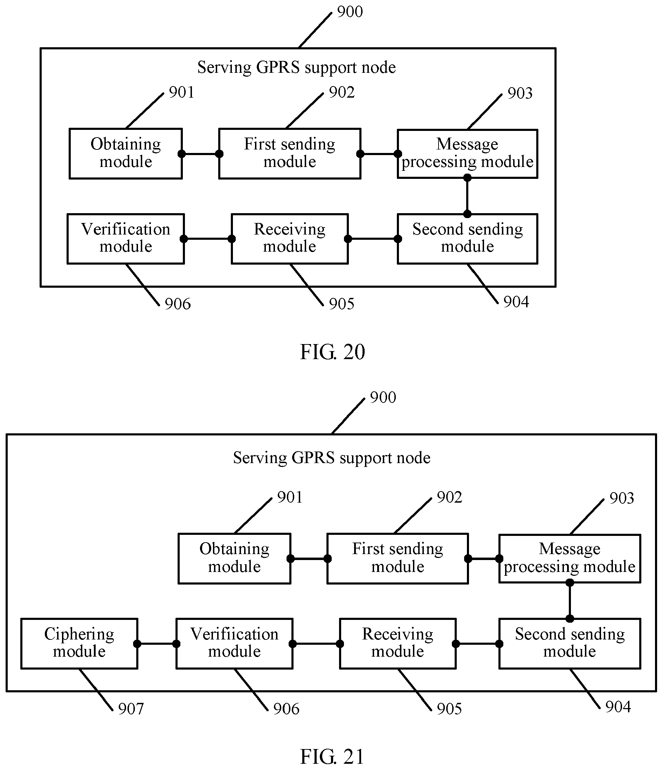

The following describes a serving GPRS support node in the present invention in detail. Referring to FIG. 20, the serving GPRS support node in an embodiment of the present invention includes:
an obtaining module 901, configured to obtain a second algorithm identifier on a GPRS mobility management GMM/session management SM protocol layer of the SGSN and generate a second key, where the second algorithm identifier is used to indicate a second algorithm;
a first sending module 902, configured to send the second algorithm identifier obtained by and the second key generated by the obtaining module 901 to a logical link control LLC protocol layer of the SGSN by using the GMM/SM protocol layer of the SGSN;
a message processing module 903, configured to perform integrity protection for a first authentication and key agreement request message on the LLC protocol layer of the SGSN by using the second algorithm and the second key that are sent by the first sending module 902 and generate a first message authentication code;
a second sending module 904, configured to send the first authentication and key agreement request message processed by the message processing module 903 to an LLC protocol layer of UE by using the LLC protocol layer of the SGSN, where the first authentication and key agreement request message carries the first message authentication code and the second algorithm identifier;
a receiving module 905, configured to receive, by using the LLC protocol layer of the SGSN, if the UE determines on the LLC protocol layer of the UE that verification of the first message authentication code sent by the second sending module 904 succeeds, a second authentication and key agreement response message sent by the UE, where the second authentication and key agreement response message carries a second message authentication code; and
an verification module 906, configured to verify the second message authentication code, received by the receiving module 905, on the LLC protocol layer of the SGSN by using the second key and the second algorithm.

In this embodiment, the obtaining module 901 obtains a second algorithm identifier on a GPRS mobility management GMM/session management SM protocol layer of the SGSN and generates a second key, where the second algorithm identifier is used to indicate a second algorithm; the first sending module 902 sends the second algorithm identifier obtained by and the second key generated by the obtaining module 901 to a logical link control LLC protocol layer of the SGSN by using the GMM/SM protocol layer of the SGSN; the message processing module 903 performs integrity protection for a first authentication and key agreement request message on the LLC protocol layer of the SGSN by using the second algorithm and the second key that are sent by the first sending module 902 and generates a first message authentication code; the second sending module 904 sends the first authentication and key agreement request message processed by the message processing module 903 to an LLC protocol layer of UE by using the LLC protocol layer of the SGSN, where the first authentication and key agreement request message carries the first message authentication code and the second algorithm identifier; if the UE determines on the LLC protocol layer of the UE that the verification of the first message authentication code sent by the second sending module 904 succeeds, the receiving module 905 receives, by using the LLC protocol layer of the SGSN, a second authentication and key agreement response message sent by the UE, where the second authentication and key agreement response message carries a second message authentication code; and the verification module 906 verifies, by the SGSN, the second message authentication code, received by the receiving module 905, on the LLC protocol layer of the SGSN by using the second key and the second algorithm.

In this embodiment of the present invention, an implementation solution for performing integrity protection for a key and algorithm agreement procedure between UE and the SGSN is provided, which is specifically about integrity protection for an authentication and key agreement request message and an authentication and key agreement response message on LLC protocol layers, and enhances interaction between an LLC protocol layer and a GMM/SM protocol layer on a UE side and perform less message authentication on an SGSN side, to obtain a key on the GMM/SM protocol layer of the UE and then verify integrity of a message on the LLC protocol layer, thereby improving security of the solution and preventing a downgrade-attack from an attacker to an algorithm.

Optionally, based on the embodiment corresponding to FIG. 20, in a first optional embodiment of the serving GPRS support node provided in the embodiments of the present invention,
the second key includes a second ciphering key, and the second algorithm includes a second ciphering algorithm; or
the second key includes a second integrity key, and the second algorithm includes a second integrity protection algorithm; or
the second key includes a second ciphering key and a second integrity key, and the second algorithm includes a second ciphering algorithm and a second integrity protection algorithm.

Then, in this embodiment of the present invention, a second key and a second algorithm are made concrete, so as to support the solution of the present invention in an actual application scenario and improve flexibility of the solution, and a specific algorithm is selected in a specific scenario for data inclusion, which also improves plasticity of the solution.

Referring to FIG. 21, another embodiment of the serving GPRS support node in the present invention includes:
an obtaining module 901, configured to obtain a second algorithm identifier on a GPRS mobility management GMM/session management SM protocol layer of the SGSN and generate a second key, where the second algorithm identifier is used to indicate a second algorithm;
a first sending module 902, configured to send the second algorithm identifier obtained by and the second key generated by the obtaining module 901 to a logical link control LLC protocol layer of the SGSN by using the GMM/SM protocol layer of the SGSN;
a message processing module 903, configured to perform integrity protection for a first authentication and key agreement request message on the LLC protocol layer of the SGSN by using the second algorithm and the second key that are sent by the first sending module 902 and generate a first message authentication code;
a second sending module 904, configured to send the first authentication and key agreement request message processed by the message processing module 903 to an LLC protocol layer of UE by using the LLC protocol layer of the SGSN, where the first authentication and key agreement request message carries the first message authentication code and the second algorithm identifier;
a receiving module 905, configured to receive, by using the LLC protocol layer of the SGSN, if the UE determines on the LLC protocol layer of the UE that verification of the first message authentication code sent by the second sending module 904 succeeds, a second authentication and key agreement response message sent by the UE, where the second authentication and key agreement response message carries a second message authentication code;
an verification module 906, configured to verify the second message authentication code, received by the receiving module 905, on the LLC protocol layer of the SGSN by using the second key and the second algorithm; and
a ciphering module 907, configured to: after the verification module 906 verifies the second message authentication code on the LLC protocol layer of the SGSN by using the second key and the second algorithm, cipher data and signaling on the LLC protocol layer of the SGSN by using the second ciphering key and the second ciphering algorithm indicated by a second ciphering algorithm identifier; or
cipher user plane data and control plane signaling on the LLC protocol layer of the SGSN by using the second ciphering key and the second ciphering algorithm indicated by a second ciphering algorithm identifier, and perform integrity protection for the control plane signaling on the LLC protocol layer of the SGSN by using the second integrity key and the second integrity protection algorithm indicated by a second integrity protection algorithm identifier.

Then, in this embodiment of the present invention, because data and signaling keep coexisting on an LLC protocol layer of the SGSN, ciphering protection may be performed for the data, and both ciphering protection and integrity protection may be performed for the signaling. A corresponding protection manner may be selected according to an actual situation, thereby implementing feasibility of the solution of the present invention in an application process. In addition, the ciphering protection can improve security of the data and the signaling, and the integrity protection improves integrity of the signaling, thereby greatly ensuring reliability of the data and the signaling in a transmission process.

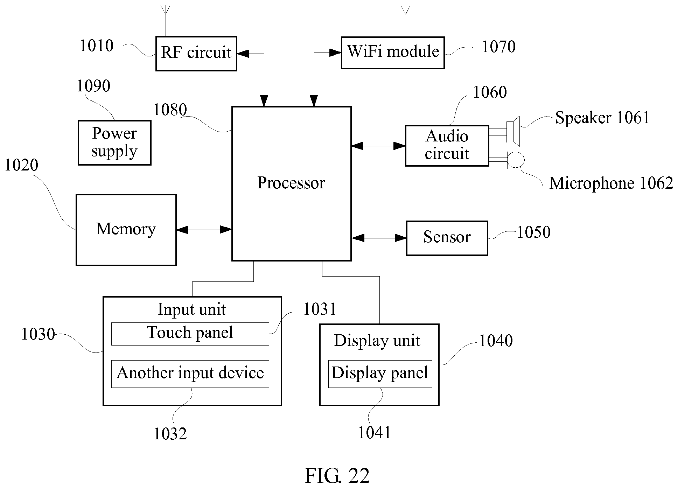

An embodiment of the present invention further provides another piece of user equipment. As shown in FIG. 22, for ease of description, only parts related to the embodiments of the present invention are shown. For specific technical details that are not disclosed, refer to the method part of the embodiments of the present invention. The user equipment may be any terminal device including a mobile phone, a tablet computer, a personal digital assistant (Personal Digital Assistant, PDA for short), a point of sales (Point of Sales, POS for short), and an in-vehicle computer. For example, the terminal is a mobile phone:
FIG. 22 is a block diagram of a structure of a part of a mobile phone related to a terminal according to an embodiment of the present invention. Referring to FIG. 22, the mobile phone includes: components such as a radio frequency (Radio Frequency, RF for short) circuit 1010, a memory 1020, an input unit 1030, a display unit 1040, a sensor 1050, an audio circuit 1060, a wireless fidelity (wireless fidelity, WiFi for short) module 1070, a processor 1080, and a power supply 1090. A person skilled in the art may understand that the structure of the mobile phone shown in FIG. 22 does not constitute a limitation to the mobile phone, and the mobile phone may include more components or fewer components than those shown in the figure, or some components may be combined, or a different component deployment may be used.

The following specifically describes the components of the mobile phone with reference to FIG. 22.

The RF circuit 1010 may be configured to receive and send signals during an information receiving and sending process or a call process. Particularly, the RF circuit 1010 receives downlink information from a base station, then delivers the downlink information to the processor 1080 for processing, and sends uplink data to the base station. Generally, the RF circuit 1010 includes, but not limited to, an antenna, at least one amplifier, a transceiver, a coupler, a low noise amplifier (Low Noise Amplifier, LNA for short), a duplexer, and the like. In addition, the RF circuit 1010 may further communicate with a network and another device by means of wireless communication. The wireless communication may use any communications standard or protocol, which includes, but not limited to, Global System for Mobile communications (Global System of Mobile communication, GSM for short), General Packet Radio Service (General Packet Radio Service, GPRS for short), Code Division Multiple Access (Code Division Multiple Access, CDMA for short), Wideband Code Division Multiple Access (Wideband Code Division Multiple Access, WCDMA for short), Long Term Evolution (Long Term Evolution, LTE for short), E-mail, Short Messaging Service (Short Messaging Service, SMS for short), and the like.

The memory 1020 may be configured to store a software program and module. The processor 1080 runs the software program and module stored in the memory 1020, to implement various functional applications and data processing of the mobile phone. The memory 1020 may mainly include a program storage area and a data storage area. The program storage area may store an operating system, an application program required by at least one function (such as a sound playback function and an image display function), and the like. The data storage area may store data (such as audio data and an address book) created according to use of the mobile phone, and the like. In addition, the memory 1020 may include a high-speed random access memory, and may also include a non-volatile memory such as at least one disk storage device, a flash storage device, or another volatile solid-state storage device.

The input unit 1030 may be configured to receive input digit or character information, and generate a keyboard signal input related to the user setting and function control of the mobile phone. Specifically, the input unit 1030 may include a touch panel 1031 and another input device 1032. The touch panel 1031, also referred to as a touchscreen, may collect a touch operation of a user on or near the touch panel 1031 (such as an operation of a user on the touch panel 1031 or near the touch panel 1031 by using any suitable object or accessory such as a finger or a stylus), and drive a corresponding connection apparatus according to a preset program. Optionally, the touch panel 1031 may include two parts: a touch detection apparatus and a touch controller. The touch detection apparatus detects a touch direction of the user, detects a signal generated by the touch operation, and transfers the signal to the touch controller. The touch controller receives touch information from the touch detection apparatus, converts the touch information into touch point coordinates, and then sends the touch point coordinates to the processor 1080. Moreover, the touch controller can receive and execute a command sent from the processor 1080. In addition, the touch panel 1031 may be a resistive, capacitive, infrared, or surface sound wave type touch panel. Besides the touch panel 1031, the input unit 1030 may further include the another input device 1032. Specifically, the another input device 1032 may include, but not limited to, one or more of a physical keyboard, a functional key (such as a volume control key or a switch key), a trackball, a mouse, and a joystick.

The display unit 1040 may be configured to display information input by the user or information provided for the user, and various menus of the mobile phone. The display unit 1040 may include a display panel 1041. Optionally, the display panel 1041 may be configured by using a liquid crystal display (Liquid Crystal Display, LCD for short), an organic light-emitting diode (Organic Light-Emitting Diode, OLED for short), or the like. Further, the touch panel 1031 may cover the display panel 1041. After detecting a touch operation on or near the touch panel 1031, the touch panel 1031 transfers the touch operation to the processor 1080, so as to determine the type of the touch event. Then, the processor 1080 provides a corresponding visual output on the display panel 1041 according to the type of the touch event. Although, in FIG. 22, the touch panel 1031 and the display panel 1041 are used as two separate parts to implement input and output functions of the mobile phone, in some embodiments, the touch panel 1031 and the display panel 1041 may be integrated to implement the input and output functions of the mobile phone.

The mobile phone may further include at least one sensor 1050 such as an optical sensor, a motion sensor, and other sensors. Specifically, the optical sensor may include an ambient light sensor and a proximity sensor. The ambient light sensor may adjust luminance of the display panel 1041 according to brightness of the ambient light. The proximity sensor may switch off the display panel 1041 and/or backlight when the mobile phone is moved to the ear. As one type of motion sensor, an acceleration sensor may detect magnitude of accelerations in various directions (generally on three axes), may detect magnitude and a direction of the gravity when static, and may be applied to an application that recognizes the attitude of the mobile phone (for example, switching between landscape orientation and portrait orientation, a related game, and magnetometer attitude calibration), a function related to vibration recognition (such as a pedometer and a knock), and the like. Other sensors such as a gyroscope, a barometer, a hygrometer, a thermometer, and an infrared sensor, which may be configured in the mobile phone, are not further described herein.

The audio circuit 1060, a speaker 1061, and a microphone 1062 may provide audio interfaces between the user and the mobile phone. The audio circuit 1060 may convert received audio data into an electric signal and transmit the electric signal to the speaker 1061. The speaker 1061 converts the electric signal into a sound signal for output. On the other hand, the microphone 1062 converts a collected sound signal into an electric signal. The audio circuit 1060 receives the electric signal and converts the electric signal into audio data, and outputs the audio data to the processor 1080 for processing. Then, the processor 580 sends the audio data to, for example, another mobile phone by using the RF circuit 1010, or outputs the audio data to the memory 1020 for further processing.

WiFi belongs to a short distance wireless transmission technology. The mobile phone may help, by using the WiFi module 1070, the user to receive and send e-mails, browse a webpage, access streaming media, and so on, which provides wireless broadband Internet access for the user. Although FIG. 22 shows the WiFi module 1070, it may be understood that the WiFi module is not a necessary component of the mobile phone, and when required, the WiFi module may be omitted as long as the scope of the essence of the present invention is not changed.

The processor 1080 is the control center of the mobile phone, and is connected to various parts of the mobile phone by using various interfaces and lines. By running or executing the software program and/or module stored in the memory 1020, and invoking data stored in the memory 1020, the processor 780 performs various functions and data processing of the mobile phone, thereby performing overall monitoring on the mobile phone. Optionally, the processor 1080 may include one or more processing units. Preferably, the processor 1080 may be integrated with an application processor and a modem processor. The application processor mainly processes an operating system, a user interface, an application program, and the like. The modem processor mainly processes wireless communication. It may be understood that the foregoing modem processor may be not integrated into the processor 1080.

The mobile phone further includes the power supply 1090 (such as a battery) for supplying power to the components. Preferably, the power supply may be logically connected to the processor 1080 by using a power management system, thereby implementing functions such as charging, discharging and power consumption management by using the power management system.

Although not shown in the figure, the mobile phone may further include a camera, a Bluetooth module, and the like, which are not further described herein.

In this embodiment of the present invention, the input unit 1030 included in the terminal has the following function:
receiving, by using a GPRS mobility management GMM/session management SM protocol layer of the UE, an authentication and key agreement request message sent by a serving GPRS support node SGSN, where the authentication and key agreement request message carries a first message authentication code and a first algorithm identifier, and the first algorithm identifier is used to indicate a first algorithm.

Optionally, the input unit 1030 may further have the following function:
receiving, by using a logical link control LLC protocol layer of the UE, a first authentication and key agreement request message sent by a serving GPRS support node SGSN, where the first authentication and key agreement request message carries a first message authentication code and a first algorithm identifier, and the first algorithm identifier is used to indicate a first algorithm.

In this embodiment of the present invention, the processor 1080 included in the terminal further has the following functions:
obtaining the first algorithm identifier on the GMM/SM protocol layer of the UE according to the authentication and key agreement request message and generating a first key;
verifying the first message authentication code on the GMM/SM protocol layer of the UE according to the first key and the first algorithm; and
generating, if the UE determines that the verification of the first message authentication code succeeds, an authentication and key agreement response message on the GMM/SM protocol layer of the UE according to the first key and the first algorithm, where the authentication and key agreement response message carries a second message authentication code.

Optionally, the processor 1080 may further have the following functions:
processing the first authentication and key agreement request message on the LLC protocol layer to obtain a second authentication and key agreement request message, and sending the second authentication and key agreement request message to a GPRS mobility management GMM/session management SM protocol layer of the UE;
obtaining the first algorithm identifier on the GMM/SM protocol layer of the UE according to the second authentication and key agreement request message, generating a first key, and sending the first key and the first algorithm identifier to the LLC protocol layer of the UE;
generating, by the UE if the UE determines on the LLC protocol layer of the UE that verification of the first message authentication code succeeds, a first authentication and key agreement response message on the GMM/SM protocol layer of the UE;
generating, by the UE if the UE determines on the LLC protocol layer of the UE that the verification of the first message authentication code succeeds, the first authentication and key agreement response message on the GMM/SM protocol layer of the UE; and
performing ciphering and/or integrity protection for the first authentication and key agreement response message on the LLC protocol layer of the UE to obtain a second authentication and key agreement response message, where the second authentication and key agreement response message carries a second message authentication code.

In this embodiment of the present invention, the output device included in the terminal has the following function:
sending the authentication and key agreement response message to the SGSN by using the GMM/SM protocol layer of the UE, so that the SGSN verifies the second message authentication code.

Optionally, the output device may further have the following function:
sending the second authentication and key agreement response message to the SGSN by using the LLC protocol layer of the UE, so that the SGSN verifies the second message authentication code.

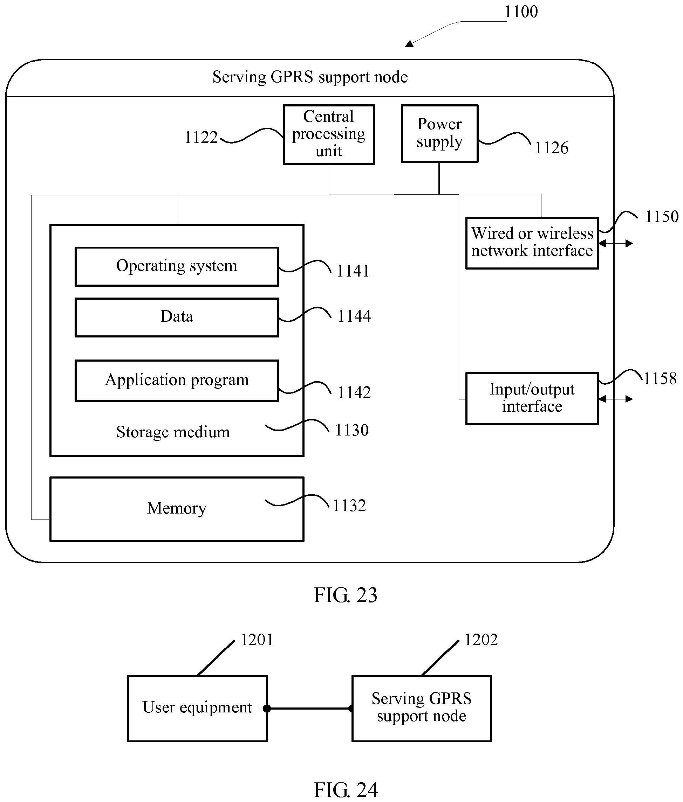

FIG. 23 is a schematic structural diagram of a serving GPRS support node according to an embodiment of the present invention. The serving GPRS support node 1100 may vary greatly due to different configurations or performance, and may include one or more central processing units (central processing units, CPU for short) 1122 (for example, one or more processors), a memory 1132, and one or more storage mediums 1130 (for example, one or more mass storage devices) for storing an application program 1142 or data 1144. The memory 1132 and the storage medium 1130 may provide transient storage or persistent storage. The program stored in the storage medium 1130 may include one or more modules (not shown in the figure), and each module may include a series of operation instructions to the serving GPRS support node. Furthermore, the central processing unit 1122 may be set to communicate with the storage medium 1130, and execute the series of operation instructions in the storage medium 1130 on the serving GPRS support node 1100.

The serving GPRS support node 1100 may further include one or more power supplies 1126, one or more wired or wireless network interfaces 1150, one or more input/output interfaces 1158, and/or one or more operating systems 1141, for example, Windows ServerTM, Mac OS XTM, UnixTM, LinuxTM, or FreeBSDTM.

In this embodiment of the present invention, the input device included in the device further has the following function:
receiving, by using a GMM/SM protocol layer of the SGSN, an authentication and key agreement response message sent by UE, where the authentication and key agreement response message carries a second message authentication code.

Optionally, the input device may further have the following function:
receiving, by using an LLC protocol layer of the SGSN, if UE determines on an LLC protocol layer of the UE that verification of a first message authentication code succeeds, a second authentication and key agreement response message sent by the UE, where the second authentication and key agreement response message carries a second message authentication code.

In this embodiment of the present invention, the processor 1122 included in the device further has the following functions:
obtaining a second algorithm identifier on the GPRS mobility management GMM/session management SM protocol layer of the SGSN and generating a second key, where the second algorithm identifier is used to indicate a second algorithm;
generating an authentication and key agreement request message on the GMM/SM protocol layer of the SGSN by using the second key and the second algorithm, and sending the authentication and key agreement request message to the user equipment UE, where the authentication and key agreement request message carries a first message authentication code and the second algorithm identifier; and
verifying the second message authentication code on the GMM/SM protocol layer of the SGSN by using the second key and the second algorithm.

Optionally, the processor 1122 may further have the following functions:
obtaining a second algorithm identifier on the GPRS mobility management GMM/session management SM protocol layer of the SGSN and generating a second key, where the second algorithm identifier is used to indicate a second algorithm;
performing integrity protection for a first authentication and key agreement request message on the LLC protocol layer of the SGSN and generating the first message authentication code; and
verifying the second message authentication code on the LLC protocol layer of the SGSN by using the second key and the second algorithm.

In this embodiment of the present invention, the output device included in the device further has the following functions:
sending the second algorithm identifier and the second key to the logical link control LLC protocol layer of the SGSN by using the GMM/SM protocol layer of the SGSN; and
sending the first authentication and key agreement request message to the LLC protocol layer of the UE by using the LLC protocol layer of the SGSN, where the first authentication and key agreement request message carries the first message authentication code and the second algorithm identifier.

The steps performed by the serving GPRS support node in the foregoing embodiments may be based on the device structure shown in FIG. 23.

The following describes a message protection system in an embodiment of the present invention. Referring to FIG. 24, the message protection system in this embodiment of the present invention includes:
user equipment 1201 and a serving GPRS support node 1202.

The user equipment UE 1201 receives, by using a GPRS mobility management GMM/session management SM protocol layer of the UE, an authentication and key agreement request message sent by the serving GPRS support node SGSN 1202, where the authentication and key agreement request message carries a first message authentication code and a first algorithm identifier, and the first algorithm identifier is used to indicate a first algorithm; the UE 1201 obtains the first algorithm identifier on the GMM/SM protocol layer of the UE according to the authentication and key agreement request message and generates a first key; the UE 1201 verifies the first message authentication code on the GMM/SM protocol layer of the UE according to the first key and the first algorithm; if the UE 1201 determines that the verification of the first message authentication code succeeds, the UE 1201 generates an authentication and key agreement response message on the GMM/SM protocol layer of the UE according to the first key and the first algorithm, where the authentication and key agreement response message carries a second message authentication code; and the UE 1201 sends the authentication and key agreement response message to the SGSN 1202 by using the GMM/SM protocol layer of the UE, so that the SGSN 1202 verifies the second message authentication code.

The serving GPRS support node SGSN 1202 obtains a second algorithm identifier on a GPRS mobility management GMM/session management SM protocol layer of the SGSN and generates a second key, where the second algorithm identifier is used to indicate a second algorithm; the SGSN 1202 generates the authentication and key agreement request message on the GMM/SM protocol layer of the SGSN by using the second key and the second algorithm, and sends the authentication and key agreement request message to the user equipment UE 1201, where the authentication and key agreement request message carries the first message authentication code and the second algorithm identifier; the SGSN 1202 receives, by using the GMM/SM protocol layer of the SGSN, the authentication and key agreement response message sent by the UE 1201, where the authentication and key agreement response message carries the second message authentication code; and the SGSN 1202 verifies the second message authentication code on the GMM/SM protocol layer of the SGSN by using the second key and the second algorithm.

In this embodiment of the present invention, an implementation solution for message protection between the UE and the SGSN is provided, which is specifically about integrity protection for an authentication and key agreement request message and an authentication and key agreement response message on GMM/SM protocol layers, and resolves a problem in the prior art that an integrity protection function cannot be implemented on LLC protocol layers of the UE and the SGSN. Integrity protection is respectively performed for the authentication and key agreement request message and the authentication and key agreement response message on GMM/SM protocol layers of the UE and the SGSN. Support can be obtained in an actual application, thereby improving security of the solution and preventing a downgrade-attack from an attacker to an algorithm.

The foregoing describes a system for implementing message protection, and the following describes anther system for implementing message protection.

The user equipment UE 1201 receives, by using a logical link control LLC protocol layer of the UE, a first authentication and key agreement request message sent by the serving GPRS support node SGSN 1202, where the first authentication and key agreement request message carries a first message authentication code and a first algorithm identifier, and the first algorithm identifier is used to indicate a first algorithm; the UE 1201 processes the first authentication and key agreement request message on the LLC protocol layer to obtain a second authentication and key agreement request message, and sends the second authentication and key agreement request message to a GPRS mobility management GMM/session management SM protocol layer of the UE; the UE 1201 obtains the first algorithm identifier on the GMM/SM protocol layer of the UE according to the second authentication and key agreement request message, generates a first key, and sends the first key and the first algorithm identifier to the LLC protocol layer of the UE; if the UE 1201 determines on the LLC protocol layer of the UE, that verification of the first message authentication code succeeds, the UE 1201 generates a first authentication and key agreement response message on the GMM/SM protocol layer of the UE; the UE 1201 performs ciphering and/or integrity protection for the first authentication and key agreement response message on the LLC protocol layer of the UE to obtain a second authentication and key agreement response message, where the second authentication and key agreement response message carries a second message authentication code; and the UE 1201 sends the second authentication and key agreement response message to the SGSN 1202 by using the LLC protocol layer of the UE, so that the SGSN 1202 verifies the second message authentication code.

The serving GPRS support node SGSN 1202 obtains a second algorithm identifier on a GPRS mobility management GMM/session management SM protocol layer of the SGSN and generates a second key, where the second algorithm identifier is used to indicate a second algorithm; the SGSN 1202 sends the second algorithm identifier and the second key to a logical link control LLC protocol layer of the SGSN by using the GMM/SM protocol layer of the SGSN; the SGSN 1202 performs integrity protection for the first authentication and key agreement request message on the LLC protocol layer of the SGSN and generates the first message authentication code; the SGSN 1202 sends the first authentication and key agreement request message to the LLC protocol layer of the UE 1201 by using the LLC protocol layer of the SGSN, where the first authentication and key agreement request message carries the first message authentication code and the second algorithm identifier; if the UE 1201 determines on the LLC protocol layer of the UE that the verification of the first message authentication code succeeds, the SGSN 1202 receives, by using the LLC protocol layer of the SGSN, the second authentication and key agreement response message sent by the UE 1201, where the second authentication and key agreement response message carries the second message authentication code; and the SGSN 1202 verifies the second message authentication code on the LLC protocol layer of the SGSN by using the second key and the second algorithm.

In this embodiment of the present invention, an implementation solution for message protection between the UE and the SGSN is provided, which is specifically about integrity protection for an authentication and key agreement request message and an authentication and key agreement response message on GMM/SM protocol layers, and resolves a problem in the prior art that an integrity protection function cannot be implemented on LLC protocol layers of the UE and the SGSN. Integrity protection is respectively performed for the authentication and key agreement request message and the authentication and key agreement response message on GMM/SM protocol layers of the UE and the SGSN. Support can be obtained in an actual application, thereby improving security of the solution and preventing a downgrade-attack from an attacker to an algorithm.

In the foregoing embodiments, the description of each embodiment has respective focuses. For a part that is not described in detail in an embodiment, reference may be made to related descriptions in other embodiments.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a read-only memory (Read-Only Memory, ROM for short), a random access memory (Random Access Memory, RAM for short), a magnetic disk, or an optical disc.

The message protection method, related device, and system provided in the embodiments of the present invention are described in detail above. The principle and implementation manner of the present invention are described herein by using specific examples. The description of the embodiments of the present invention is merely intended to help understand the method and core ideas of the present invention. In addition, persons of ordinary skill in the art can make variations and modifications to the present invention in terms of the specific implementation manners and application scopes according to the ideas of the present invention. Therefore, the content of specification shall not be construed as a limit to the present invention.

## Claims

1. A message protection method, **characterized by** comprising:
receiving (201), by user equipment, UE, by using a GPRS mobility management, GMM/session management, SM, protocol layer of the UE, an authentication and key agreement request message from a serving GPRS support node, SGSN, wherein the authentication and key agreement request message carries a first message authentication code and a first algorithm identifier, and the first algorithm identifier is used to indicate a first algorithm;
obtaining (202), by the UE, the first algorithm identifier on the GMM/SM protocol layer of the UE according to the authentication and key agreement request message and generating a first key;
verifying (203), by the UE, the first message authentication code on the GMM/SM protocol layer of the UE according to the first key and the first algorithm;
generating (204), by the UE when the UE determines that the verification of the first message authentication code succeeds, an authentication and key agreement response message on the GMM/SM protocol layer of the UE according to the first key and the first algorithm, wherein the authentication and key agreement response message carries a second message authentication code; and
sending (205), by the UE, the authentication and key agreement response message to the SGSN by using the GMM/SM protocol layer of the UE;
wherein after the sending (205), by the UE, the authentication and key agreement response message to the SGSN by using the GMM/SM protocol layer of the UE, the method further comprises:
sending, by the UE, the first key and the first algorithm identifier to a logical link control, LLC, protocol layer of the UE by using the GMM/SM protocol layer of the UE;
ciphering, by the UE, user plane data and control plane signaling on the LLC protocol layer of the UE by using the first ciphering key and the first ciphering algorithm indicated by the first ciphering algorithm identifier; and
performing, by the UE, integrity protection for the control plane signaling on the LLC protocol layer of the UE by using the first integrity key and the first integrity protection algorithm indicated by the first integrity protection algorithm identifier.

2. The method according to claim 1, wherein the first key comprises a first ciphering key and a first integrity key, and the first algorithm comprises a first ciphering algorithm and a first integrity protection algorithm.

3. The method according to claim 2, wherein after the generating an authentication and key agreement response message on the GMM/SM protocol layer of the UE according to the first key and the first algorithm, the method further comprises:
performing, by the UE, integrity protection for the authentication and key agreement response message on the GMM/SM protocol layer of the UE by using the first integrity key and the first integrity protection algorithm indicated by a first integrity protection algorithm identifier.

4. The method according to any one of claims 1 to 3, wherein before the receiving, by UE by using a GMM/SM protocol layer of the UE, an authentication and key agreement request message from an SGSN, the method further comprises:
sending, by the UE, an attach request message to a GMM/SM protocol layer of the SGSN by using the GMM/SM protocol layer of the UE, wherein the attach request message carries an identifier of the UE and network capability information of the UE.

5. A message protection method, **characterized by** comprising:
obtaining (301), by a serving GPRS support node, SGSN, a second algorithm identifier on a GPRS mobility management, GMM/session management, SM, protocol layer of the SGSN and generating a second key, wherein the second algorithm identifier is used to indicate a second algorithm;
generating (302), by the SGSN, an authentication and key agreement request message on the GMM/SM protocol layer of the SGSN by using the second key and the second algorithm, and sending the authentication and key agreement request message to user equipment, UE, wherein the authentication and key agreement request message carries a first message authentication code and the second algorithm identifier;
receiving (303), by the SGSN by using the GMM/SM protocol layer of the SGSN, an authentication and key agreement response message from the UE, wherein the authentication and key agreement response message carries a second message authentication code; and
verifying (304), by the SGSN, the second message authentication code on the GMM/SM protocol layer of the SGSN by using the second key and the second algorithm;
wherein after the verifying (304), by the SGSN, the second message authentication code on the GMM/SM protocol layer of the SGSN by using the second key and the second algorithm, the method further comprises:
sending, by the SGSN when the SGSN determines that the verification of the second message authentication code succeeds, the second key and the second algorithm identifier to a logical link control, LLC, protocol layer of the SGSN by using the GMM/SM protocol layer of the SGSN;
ciphering, by the SGSN, user plane data and control plane signaling on the LLC protocol layer of the SGSN by using the second ciphering key and the second ciphering algorithm indicated by a second ciphering algorithm identifier; and
performing, by the SGSN, integrity protection for the control plane signaling on the LLC protocol layer of the SGSN by using the second integrity key and the second integrity protection algorithm indicated by a second integrity protection algorithm identifier.

6. The method according to claim 5, wherein the second key comprises a second ciphering key and a second integrity key, and the second algorithm comprises a second ciphering algorithm and a second integrity protection algorithm.

7. The method according to claim 5 or 6, wherein before the generating an authentication and key agreement request message on the GMM/SM protocol layer of the SGSN, and sending the authentication and key agreement request message to user equipment, UE, the method further comprises:
receiving, by the SGSN by using the GMM/SM protocol layer of the SGSN, an attach request message from the UE, wherein the attach request message carries an identifier of the UE and network capability information of the UE; and
the obtaining, by an SGSN, a second algorithm identifier on a GMM/SM protocol layer of the SGSN and generating a second key comprises:
obtaining, by the SGSN, the second algorithm according to the network capability information of the UE; and
obtaining, by the SGSN, authorization vector information of the UE according to the identifier of the UE and generating the second key according to the authorization vector information.

8. User equipment, UE, **characterized by** comprising:
a receiving module (601), configured to receive, by using a GPRS mobility management, GMM/session management, SM, protocol layer of the UE, an authentication and key agreement request message from a serving GPRS support node, SGSN, wherein the authentication and key agreement request message carries a first message authentication code and a first algorithm identifier, and the first algorithm identifier is used to indicate a first algorithm;
an obtaining module (602), configured to obtain the first algorithm identifier on the GMM/SM protocol layer of the UE according to the authentication and key agreement request message received by the receiving module and generate a first key;
an verification module (603), configured to verify the first message authentication code on the GMM/SM protocol layer of the UE according to the first key obtained by and the first algorithm generated by the obtaining module;
a generation module (604), configured to generate, when the verification module determines that the verification of the first message authentication code succeeds, an authentication and key agreement response message on the GMM/SM protocol layer of the UE according to the first key and the first algorithm, wherein the authentication and key agreement response message carries a second message authentication code; and
a first sending module (605), configured to send the authentication and key agreement response message generated by the generation module to the SGSN by using the GMM/SM protocol layer of the UE;
wherein the user equipment further comprises:
a third sending module (608), configured to: after the first sending module (605) sends the authentication and key agreement response message to the SGSN by using the GMM/SM protocol layer of the UE, send the first key and the first algorithm identifier to a logical link control, LLC, protocol layer of the UE by using the GMM/SM protocol layer of the UE;
a ciphering module (609), configured to: after the third sending module (608) sends the first key and the first algorithm identifier to the logical link control, LLC, protocol layer of the UE by using the GMM/SM protocol layer of the UE, cipher user plane data and control plane signaling on the LLC protocol layer of the UE by using the first ciphering key and the first ciphering algorithm indicated by the first ciphering algorithm identifier, and perform integrity protection for the control plane signaling on the LLC protocol layer of the UE by using the first integrity key and the first integrity protection algorithm indicated by the first integrity protection algorithm identifier.

9. The user equipment according to claim 8, wherein the first key comprises a first ciphering key and a first integrity key, and the first algorithm comprises a first ciphering algorithm and a first integrity protection algorithm.

10. The user equipment according to claim 9, wherein the user equipment further comprises:
a message processing module (606), configured to perform integrity protection for the authentication and key agreement response message on the GMM/SM protocol layer of the UE by using the first integrity key and the first integrity protection algorithm indicated by a first integrity protection algorithm identifier.

11. The user equipment according to any one of claims 8 to 10, wherein the user equipment further comprises:
a second sending module (607), configured to: before the receiving module (601) receives, by using the GMM/SM protocol layer of the UE, the authentication and key agreement request message from the SGSN, send an attach request message to a GMM/SM protocol layer of the SGSN by using the GMM/SM protocol layer of the UE, wherein the attach request message carries an identifier of the UE and network capability information of the UE.

12. A device, **characterized by** comprising:
an obtaining module (701), configured to obtain a second algorithm identifier on a GPRS mobility management, GMM/session management, SM, protocol layer of a serving GPRS support node, SGSN, and generate a second key, wherein the second algorithm identifier is used to indicate a second algorithm;
a generation module (702), configured to generate an authentication and key agreement request message on the GMM/SM protocol layer of the SGSN by using the second key and the second algorithm that are obtained by the obtaining module, and send the authentication and key agreement request message to user equipment, UE, wherein the authentication and key agreement request message carries a first message authentication code and the second algorithm identifier;
a first receiving module (703), configured to receive, by using the GMM/SM protocol layer of the SGSN, an authentication and key agreement response message from the UE, wherein the authentication and key agreement response message carries a second message authentication code; and
an verification module (704), configured to verify the second message authentication code, received by the first receiving module, on the GMM/SM protocol layer of the SGSN by using the second key and the second algorithm;
wherein the device further comprises:
a sending module (706), configured to send, if the verification module (704) determines that the verification of the second message authentication code succeeds, the second key and the second algorithm identifier to a logical link control, LLC, protocol layer of the SGSN by using the GMM/SM protocol layer of the SGSN; and
a ciphering module (707), configured to: after the sending module (706) sends the second key and the second algorithm to the logical link control, LLC, protocol layer of the SGSN by using the GMM/SM protocol layer of the SGSN, cipher user plane data and control plane signaling on the LLC protocol layer of the SGSN by using the second ciphering key and the second ciphering algorithm indicated by a second ciphering algorithm identifier, and perform integrity protection for the control plane signaling on the LLC protocol layer of the SGSN by using the second integrity key and the second integrity protection algorithm indicated by a second integrity protection algorithm identifier.

13. The device according to claim 12, wherein the second key comprises a second ciphering key and a second integrity key, and the second algorithm comprises a second ciphering algorithm and a second integrity protection algorithm.

14. The device according to claim 12 or 13, wherein the device further comprises:
a second receiving module (705), configured to: before the generation module (702) generates the authentication and key agreement request message on the GMM/SM protocol layer of the SGSN, and sends the authentication and key agreement request message to the UE, receive, by using the GMM/SM protocol layer of the SGSN, an attach request message from the UE, wherein the attach request message carries an identifier of the UE and network capability information of the UE; and
the obtaining module (701) comprises:
an obtaining unit, configured to obtain the second algorithm according to the network capability information of the UE; and
a generation unit, configured to obtain authorization vector information of the UE according to the identifier of the UE and generate the second key according to the authorization vector information.

15. A message protection system, **characterized by** comprising:
the user equipment according to any one of claims 8 to 11; and
the device according to any one of claims 12 to 14.

## Patentansprüche

1. Nachrichtenschutzverfahren, **dadurch gekennzeichnet, dass** es aufweist:
Empfangen (201), durch eine Anwenderausrüstung, UE (User Equipment), unter Verwendung einer GPRS-Mobilitätsverwaltung, GMM/Sitzungsverwaltung, SM (Session Management), Protokollschicht der UE, einer Authentifizierungs- und Schlüsselzustimmungsanfragenachricht von einem bedienenden GPRS-Unterstützungsknoten, SGSN (Serving GPRS Support Node), wobei die Authentifizierungs- und Schlüsselzustimmungsanfragenachricht einen ersten Nachrichtenauthentifizierungscode und einen ersten Algorithmusidentifikator trägt und der erste Algorithmusidentifikator verwendet wird, um einen ersten Algorithmus anzuzeigen;
Erhalten (202), durch die UE, des ersten Algorithmusidentifikators auf der GMM/SM-Protokollschicht der UE gemäß der Authentifizierungs- und Schlüsselzustimmungsanfragenachricht und Erzeugen eines ersten Schlüssels;
Verifizieren (203), durch die UE, des ersten Nachrichtauthentifizierungscodes auf der GMM/SM-Protokollschicht der UE gemäß dem ersten Schlüssel und dem ersten Algorithmus;
Erzeugen (204), durch die UE, wenn die UE ermittelt, dass die Verifizierung des ersten Nachrichtenauthentifizierungscodes erfolgreich ist, einer Authentifizierungs- und Schlüsselzustimmungsantwortnachricht auf der GMM/SM-Protokollschicht der UE gemäß dem ersten Schlüssel und dem ersten Algorithmus, wobei die Authentifizierungs- und Schlüsselzustimmungsantwortnachricht einen zweiten Nachrichtauthentifizierungscode trägt; und
Senden (205), durch die UE, der Authentifizierungs- und Schlüsselzustimmungsantwortnachricht an den SGSN unter Verwendung der GMM/SM-Protokollschicht der UE; wobei nach dem Senden (205), durch die UE, der Authentifizierungs- und Schlüsselzustimmungsantwortnachricht an den SGSN unter Verwendung der GMM/SM-Protokollschicht der UE, das Verfahren ferner aufweist:
Senden, durch die UE, des ersten Schlüssels und des ersten Algorithmusidentifikators an eine logische Linksteuerung, LLC (Logical Link Control), Protokollschicht der UE unter Verwendung der GMM/SM-Protokollschicht der UE;
Verschlüsseln, durch die UE, von Anwenderebenendaten und Steuerebenensignalisierung auf der LLC-Protokollschicht der UE unter Verwendung des ersten Verschlüsselungsschlüssels und des ersten Verschlüsselungsalgorithmus, die von dem ersten Verschlüsselungsalgorithmusidentifikator angezeigt werden; und
Ausführen, durch die UE, von Integritätsschutz für die Steuerebenensignalisierung auf der LLC-Protokollschicht der UE unter Verwendung des ersten Integritätsschlüssels und des ersten Integritätsschutzalgorithmus, der durch den ersten Integritätsschutzalgorithmusidentifikator angezeigt wird.

2. Verfahren nach Anspruch 1, wobei der erste Schlüssel einen ersten Verschlüsselungsschlüssel und einen ersten Integritätsschlüssel aufweist und der erste Algorithmus einen ersten Verschlüsselungsalgorithmus und einen ersten Integritätsschutzalgorithmus aufweist.

3. Verfahren nach Anspruch 2, wobei nach dem Erzeugen einer Authentifizierungs- und Schlüsselzustimmungsantwortnachricht auf der GMM/SM-Protokollschicht der UE gemäß dem ersten Schlüssel und dem ersten Algorithmus das Verfahren ferner aufweist:
Ausführen, durch die UE, von Integritätsschutz für die Authentifizierungs- und Schlüsselzustimmungsantwortnachricht auf der GMM/SM-Protokollschicht der UE unter Verwendung des ersten Integritätsschlüssels und des ersten Integritätsschutzalgorithmus, der durch einen ersten Integritätsschutzalgorithmusidentifikator angezeigt wird.

4. Verfahren nach einem der Ansprüche 1 bis 3, wobei vor dem Empfangen, durch die UE, unter Verwendung einer GMM/SM-Protokollschicht der UE, einer Authentifizierungs- und Schlüsselzustimmungsanfragenachricht von einem SGSN das Verfahren ferner aufweist:
Senden, durch die UE, einer Anhanganfragenachricht an eine GMM/SM-Protokollschicht des SGSN unter Verwendung der GMM/SM-Protokollschicht der UE, wobei die Anhanganfragenachricht einen Identifikator der UE und Netzwerkkapazitätsinformationen der UE trägt.

5. Nachrichtschutzverfahren, **dadurch gekennzeichnet, dass** es aufweist:
Erhalten (301), durch einen bedienenden GPRS-Unterstützungsknoten, SGSN, eines zweiten Algorithmusidentifikators auf einer GPRS-Mobilitätsverwaltung, GMM/Sitzungsverwaltung, SM, Protokollschicht des SGSN und Erzeugen eines zweiten Schlüssels, wobei der zweite Algorithmusidentifikator verwendet wird, um einen zweiten Algorithmus anzuzeigen;
Erzeugen (302), durch den SGSN, einer Authentifizierungs- und Schlüsselzustimmungsanfragenachricht auf der GMM/SM-Protokollschicht des SGSN unter Verwendung des zweiten Schlüssels und des zweiten Algorithmus, und Senden der Authentifizierungs- und Schlüsselzustimmungsanfragenachricht an Anwenderausrüstung, UE, wobei die Authentifizierungs- und Schlüsselzustimmungsanfragenachricht einen ersten Nachrichtauthentifizierungscode und den zweiten Algorithmusidentifikator trägt;
Empfangen (303), durch den SGSN unter Verwendung der GMM/SM-Protokollschicht des SGSN, einer Authentifizierungs- und Schlüsselzustimmungsantwortnachricht von der UE, wobei die Authentifizierungs- und Schlüsselzustimmungsantwortnachricht einen zweiten Nachrichtauthentifizierungscode trägt; und
Verifizieren (304), durch den SGSN, des zweiten Nachrichtauthentifizierungscodes auf der GMM/SM-Protokollschicht des SGSN unter Verwendung des zweiten Schlüssels und des zweiten Algorithmus;
wobei nach dem Verifizieren (304), durch den SGSN, des zweiten Nachrichtauthentifizierungscodes auf der GMM/SM-Protokollschicht des SGSN unter Verwendung des zweiten Schlüssels und des zweiten Algorithmus, das Verfahren ferner aufweist:
Senden, durch den SGSN, wenn der SGSN ermittelt, dass die Verifizierung des zweiten Nachrichtauthentifizierungscodes erfolgreich ist, des zweiten Schlüssels und des zweiten Algorithmusidentifikators an eine logische Linksteuerung, LLC, Protokollschicht des SGSN unter Verwendung der GMM/SM-Protokollschicht des SGSN;
Verschlüsseln, durch den SGSN, von Anwenderebenendaten und Steuerebenensignalisierung auf der LLC-Protokollschicht des SGSN unter Verwendung des zweiten Verschlüsselungsschlüssels und des zweiten Verschlüsselungsalgorithmus, der durch einen zweiten Verschlüsselungsalgorithmusidentifikator angezeigt wird; und
Ausführen, durch den SGSN, von Integritätsschutz für die Steuerebenensignalisierung auf der LLC-Protokollschicht der SGSN unter Verwendung des zweiten Integritätsschlüssels und des zweiten Integritätsschutzalgorithmus, der durch einen zweiten Integritätsschutzalgorithmusidentifikator angezeigt wird.

6. Verfahren nach Anspruch 5, wobei der zweite Schlüssel einen zweiten Verschlüsselungsschlüssel und einen zweiten Integritätsschlüssel aufweist, und der zweite Algorithmus einen zweiten Verschlüsselungsalgorithmus und einen zweiten Integritätsschutzalgorithmus aufweist.

7. Verfahren nach Anspruch 5 oder 6, wobei vor dem Erzeugen einer Authentifizierungs- und Schlüsselzustimmungsanfragenachricht auf der GMM/SM-Protokollschicht des SGSN und Senden der Authentifizierungs- und Schlüsselzustimmungsanfragenachricht an Anwenderausrüstung, UE, das Verfahren ferner aufweist:
Empfangen, durch den SGSN unter Verwendung der GMM/SM-Protokollschicht des SGSN, einer Anhanganfragenachricht von der UE, wobei die Anhanganfragenachricht einen Identifikator der UE und Netzwerkkapazitätsinformationen der UE trägt; und
das Erhalten, durch einen SGSN, eines zweiten Algorithmusidentifikators auf einer GMM/SM-Protokollschicht des SGSN und Erzeugen eines zweiten Schlüssels aufweist:
Erhalten, durch den SGSN, des zweiten Algorithmus gemäß den Netzwerkkapazitätsinformationen der UE; und
Erhalten, durch den SGSN, von Autorisierungsvektorinformationen der UE gemäß dem Identifikator der UE und Erzeugen des zweiten Schlüssels gemäß den Autorisierungsvektorinformationen.

8. Anwenderausrüstung, UE, **dadurch gekennzeichnet, dass** sie aufweist:
ein Empfangsmodul (601), konfiguriert zum Empfangen, unter Verwendung einer GPRS Mobilitätsverwaltung, GMM/Sitzungsverwaltung, SM, Protokollschicht der UE, einer Authentifizierungs- und Schlüsselzustimmungsanfragenachricht von einem bedienenden GPRS-Unterstützungsknoten, SGSN, wobei die Authentifizierungs- und Schlüsselzustimmungsanfragenachricht einen ersten Nachrichtenauthentifizierungscode und einen ersten Algorithmusidentifikator trägt und der erste Algorithmusidentifikator verwendet wird, um einen ersten Algorithmus anzuzeigen;
ein Erhaltungsmodul (602), das konfiguriert ist, den ersten Algorithmusidentifikator auf der GMM/SM-Protokollschicht der UE gemäß der Authentifizierungs- und Schlüsselzustimmungsanfragenachricht zu erhalten, die durch das Empfangsmodul empfangen wird, und einen ersten Schlüssel zu erzeugen;
ein Verifizierungsmodul (603), das konfiguriert ist, den ersten Nachrichtauthentifizierungscode auf der GMM/SM-Protokollschicht der UE gemäß dem ersten Schlüssel und dem ersten Algorithmus, der durch das Erhaltungsmodul erhalten beziehungsweise erzeugt wird, zu verifizieren;
ein Erzeugungsmodul (604), das konfiguriert ist, wenn das Verifizierungsmodul ermittelt, dass die Verifizierung des ersten Nachrichtauthentifizierungscodes erfolgreich ist, eine Authentifizierungs- und Schlüsselzustimmungsantwortnachricht auf der GMM/SM-Protokollschicht der UE gemäß dem ersten Schlüssel und dem ersten Algorithmus zu erzeugen, wobei die Authentifizierungs- und Schlüsselzustimmungsantwortnachricht einen zweiten Nachrichtauthentifizierungscode trägt; und
ein erstes Sendemodul (605), das konfiguriert ist, die Authentifizierungs- und Schlüsselzustimmungsantwortnachricht, die durch das Erzeugungsmodul erzeugt wird, unter Verwendung der GMM/SM-Protokollschicht der UE an den SGSN zu senden;
wobei die Anwenderausrüstung ferner aufweist:
ein drittes Sendemodul (608), das konfiguriert ist zum: nachdem das erste Sendemodul (605) die Authentifizierungs- und Schlüsselzustimmungsantwortnachricht unter Verwendung der GMM/SM-Protokollschicht der UE an den SGSN gesendet hat, Senden des ersten Schlüssels und des ersten Algorithmusidentifikators an eine logische Linksteuerung, LLC, Protokollschicht der UE unter Verwendung der GMM/SM-Protokollschicht der UE;
ein Verschlüsselungsmodul (609), konfiguriert zum: nachdem das dritte Sendemodul (608) den ersten Schlüssel und den ersten Algorithmusidentifikator an die logische Linksteuerung, LLC, Protokollschicht der UE unter Verwendung der GMM/SM-Protokollschicht der UE gesendet hat, Verschlüsseln von Anwenderebenendaten und Steuerebenensignalisierung auf der LLC-Protokollschicht der UE unter Verwendung des ersten Verschlüsselungsschlüssels und des ersten Verschlüsselungsalgorithmus, der durch den ersten Verschlüsselungsalgorithmusidentifikator angezeigt wird, und Ausführen von Integritätsschutz für die Steuerebenensignalisierung auf der LLC-Protokollschicht der UE unter Verwendung des ersten Integritätsschlüssels und des ersten Integritätsschutzalgorithmus, der durch den ersten Integritätsschutzalgorithmusidentifikator angezeigt wird.

9. Anwenderausrüstung nach Anspruch 8, wobei der erste Schlüssel einen ersten Verschlüsselungsschlüssel und einen ersten Integritätsschlüssel aufweist und der erste Algorithmus einen ersten Verschlüsselungsalgorithmus und einen ersten Integritätsschutzalgorithmus aufweist.

10. Anwenderausrüstung nach Anspruch 9, wobei die Anwenderausrüstung ferner aufweist:
ein Nachrichtverarbeitungsmodul (606), das konfiguriert ist, Integritätsschutz für die Authentifizierungs- und Schlüsselzustimmungsantwortnachricht auf der GMM/SM-Protokollschicht der UE unter Verwendung des ersten Integritätsschlüssels und des ersten Integritätsschutzalgorithmus, der durch einen ersten Integritätsschutzalgorithmusidentifikator angezeigt wird, auszuführen.

11. Anwenderausrüstung nach einem der Ansprüche 8 bis 10, wobei die Anwenderausrüstung ferner aufweist:
ein zweites Sendemodul (607), das konfiguriert ist zum: bevor das Empfangsmodul (601) unter Verwendung der GMM/SM-Protokollschicht der UE die Authentifizierungs- und Schlüsselzustimmungsanfragenachricht vom SGSN empfängt, Senden einer Anhanganfragenachricht an eine GMM/SM-Protokollschicht des SGSN unter Verwendung der GMM/SM-Protokollschicht der UE, wobei die Anhanganfragenachricht einen Identifikator der UE und Netzwerkkapazitätsinformationen der UE trägt.

12. Vorrichtung, die **dadurch gekennzeichnet ist, dass** sie aufweist:
ein Erhaltungsmodul (701), das konfiguriert ist, einen zweiten Algorithmusidentifikator auf einer GPRS-Mobilitätsverwaltung, GMM/Sitzungsverwaltung, SM, Protokollschicht eines bedienenden GPRS-Unterstützungsknotens, SGSN, zu erhalten und einen zweiten Schlüssel zu erzeugen, wobei der zweite Algorithmusidentifikator verwendet wird, um einen zweiten Algorithmus anzuzeigen;
ein Erzeugungsmodul (702), das konfiguriert ist, eine Authentifizierungs- und Schlüsselzustimmungsanfragenachricht auf der GMM/SM-Protokollschicht des SGSN unter Verwendung des zweiten Schlüssel und des zweiten Algorithmus, die durch das Erhaltungsmodul erhalten werden, zu erzeugen und die Authentifizierungs- und Schlüsselzustimmungsanfragenachricht an Anwenderausrüstung, UE, zu senden, wobei die Authentifizierungs- und Schlüsselzustimmungsanfragenachricht einen ersten Nachrichtauthentifizierungscode und den zweiten Algorithmusidentifikator trägt;
ein erstes Empfangsmodul (703), das konfiguriert ist, unter Verwendung der GMM/SM-Protokollschicht des SGSN eine Authentifizierungs- und Schlüsselzustimmungsantwortnachricht von der UE zu empfangen, wobei die Authentifizierungs- und Schlüsselzustimmungsantwortnachricht einen zweiten Nachrichtauthentifizierungscode trägt; und
ein Verifizierungsmodul (704), das konfiguriert ist, den zweiten Nachrichtauthentifizierungscode, der durch das erste Empfangsmodul empfangen wird, unter Verwendung des zweiten Schlüssels und des zweiten Algorithmus auf der GMM/SM-Protokollschicht des SGSN zu verifizieren;
wobei die Vorrichtung ferner aufweist:
ein Sendemodul (706), das konfiguriert ist, falls das Verifizierungsmodul (704) ermittelt, dass die Verifizierung des zweiten Nachrichtauthentifizierungscodes erfolgreich ist, den zweiten Schlüssel und den zweiten Algorithmusidentifikator an eine logische Linksteuerung, LLC, Protokollschicht des SGSN unter Verwendung der GMM/SM-Protokollschicht des SGSN zu senden; und
ein Verschlüsselungsmodul (707), konfiguriert zum: nachdem das Sendemodul (706) den zweiten Schlüssel und den zweiten Algorithmus an die logische Linksteuerung, LLC, Protokollschicht des SGSN unter Verwendung der GMM/SM-Protokollschicht des SGSN gesendet hat, Verschlüsseln von Anwenderebenendaten und Steuerebenensignalisierung auf der LLC-Protokollschicht des SGSN unter Verwendung des zweiten Verschlüsselungsschlüssels und des zweiten Verschlüsselungsalgorithmus, der durch einen zweiten Verschlüsselungsalgorithmusidentifikator angezeigt wird, und Ausführen von Integritätsschutz für die Steuerebenensignalisierung auf der LLC-Protokollschicht des SGSN unter Verwendung des zweiten Integritätsschlüssels und des zweiten Integritätsschutzalgorithmus, der durch einen zweiten Integritätsschutzalgorithmusidentifikator angezeigt wird.

13. Vorrichtung nach Anspruch 12, wobei der zweite Schlüssel einen zweiten Verschlüsselungsschlüssel und einen zweiten Integritätsschlüssel aufweist und der zweite Algorithmus einen zweiten Verschlüsselungsalgorithmus und einen zweiten Integritätsschutzalgorithmus aufweist.

14. Vorrichtung nach Anspruch 12 oder 13, wobei die Vorrichtung ferner aufweist:
ein zweites Empfangsmodul (705), konfiguriert zum: bevor das Erzeugungsmodul (702) die Authentifizierungs- und Schlüsselzustimmungsanfragenachricht auf der GMM/SM-Protokollschicht des SGSN erzeugt und die Authentifizierungs- und Schlüsselzustimmungsanfragenachricht an die UE sendet, Empfangen, unter Verwendung der GMM/SM-Protokollschicht des SGSN, einer Anhanganfragenachricht von der UE, wobei die Anhanganfragenachricht einen Identifikator der UE und Netzwerkkapazitätsinformationen der UE trägt; und
das Erhaltungsmodul (701) aufweist:
eine Erhaltungseinheit, die konfiguriert ist, den zweiten Algorithmus gemäß den Netzwerkkapazitätsinformationen der UE zu erhalten; und
eine Erzeugungseinheit, die konfiguriert ist, Autorisierungsvektorinformationen der UE gemäß dem Identifikator der UE zu erhalten und den zweiten Schlüssel gemäß den Autorisierungsvektorinformationen zu erzeugen.

15. Nachrichtschutzsystem, das **dadurch gekennzeichnet ist, dass** es aufweist:
die Anwenderausrüstung nach einem der Ansprüche 8 bis 11; und
die Vorrichtung nach einem der Ansprüche 12 bis 14.

## Revendications

1. Procédé de protection de message, caractérisé en qu'il consiste :
à recevoir (201), au moyen d'un équipement utilisateur (UE), en utilisant une couche de protocole de gestion de mobilité de service GPRS (GMM)/gestion de session (SM) de l'équipement utilisateur, un message de demande d'accord de clé et d'authentification en provenance d'un noeud de prise en charge de service GPRS de desserte (SGSN), dans lequel le message de demande d'accord de clé et d'authentification comporte un premier code d'authentification de message et un premier identifiant d'algorithme et le premier identifiant d'algorithme est utilisé pour indiquer un premier algorithme ;
à obtenir (202), au moyen de l'équipement utilisateur, le premier identifiant d'algorithme sur la couche de protocole de gestion GMM/SM de l'équipement utilisateur en fonction du message de demande d'accord de clé et d'authentification et à générer une première clé ;
à vérifier (203), au moyen de l'équipement utilisateur, le premier code d'authentification de message sur la couche de protocole de gestion GMM/SM de l'équipement utilisateur en fonction de la première clé et du premier algorithme ;
à générer (204), au moyen de l'équipement utilisateur lorsque l'équipement utilisateur détermine que la vérification du premier code d'authentification de message a réussi, un message de réponse d'accord de clé et d'authentification sur la couche de protocole de gestion GMM/SM de l'équipement utilisateur en fonction de la première clé et du premier algorithme, dans lequel le message de réponse d'accord de clé et d'authentification comporte un second code d'authentification de message ; et
à envoyer (205), au moyen de l'équipement utilisateur, le message de réponse d'accord de clé et d'authentification au noeud SGSN en utilisant la couche de protocole de gestion GMM/SM de l'équipement utilisateur ;
dans lequel, après l'envoi (205), par l'équipement utilisateur, du message de réponse d'accord de clé et d'authentification au noeud SGSN en utilisant la couche de protocole de gestion GMM/SM de l'équipement utilisateur, le procédé consiste en outre :
à envoyer, au moyen de l'équipement utilisateur, la première clé et le premier identifiant d'algorithme à une couche de protocole de commande de liaison logique (LLC) de l'équipement utilisateur en utilisant la couche de protocole de gestion GMM/SM de l'équipement utilisateur ;
à chiffrer, au moyen de l'équipement utilisateur, des données de plan d'utilisateur et une signalisation de plan de commande sur la couche de protocole de commande LLC de l'équipement utilisateur en utilisant la première clé de chiffrement et le premier algorithme de chiffrement indiqué par le premier identifiant d'algorithme de chiffrement ; et
à réaliser, au moyen de l'équipement utilisateur, une protection d'intégrité pour la signalisation de plan de commande sur la couche de protocole de commande LLC de l'équipement utilisateur en utilisant la première clé d'intégrité et le premier algorithme de protection d'intégrité indiqué par le premier identifiant d'algorithme de protection d'intégrité.

2. Procédé selon la revendication 1, dans lequel la première clé comprend une première clé de chiffrement et une première clé d'intégrité et le premier algorithme comprend un premier algorithme de chiffrement et un premier algorithme de protection d'intégrité.

3. Procédé selon la revendication 2, dans lequel, après la génération d'un message de réponse d'accord de clé et d'authentification sur la couche de protocole de gestion GMM/SM de l'équipement utilisateur en fonction de la première clé et du premier algorithme, le procédé consiste en outre :
à réaliser, au moyen de l'équipement utilisateur, une protection d'intégrité pour le message de réponse d'accord de clé et d'authentification sur la couche de protocole de gestion GMM/SM de l'équipement utilisateur en utilisant la première clé d'intégrité et le premier algorithme de protection d'intégrité indiqué par un premier identifiant d'algorithme de protection d'intégrité.

4. Procédé selon l'une quelconque des revendications 1 à 3, dans lequel, avant la réception, par un équipement utilisateur, en utilisant une couche de protocole de gestion GMM/SM de l'équipement utilisateur, d'un message de demande d'accord de clé et d'authentification en provenance d'un noeud SGSN, le procédé consiste en outre :
à envoyer, au moyen de l'équipement utilisateur, un message de demande de rattachement à une couche de protocole de gestion GMM/SM du noeud SGSN en utilisant la couche de protocole de gestion GMM/SM de l'équipement utilisateur, dans lequel le message de demande de rattachement comporte un identifiant de l'équipement utilisateur et des informations de capacité de réseau de l'équipement utilisateur.

5. Procédé de protection de message, caractérisé en qu'il consiste :
à obtenir (301), au moyen d'un noeud de prise en charge de service GPRS de desserte (SGSN), un second identifiant d'algorithme sur une couche de protocole de gestion de mobilité de service GPRS (GMM)/gestion de session (SM) du noeud SGSN et à générer une seconde clé, dans lequel le second identifiant d'algorithme est utilisé pour indiquer un second algorithme ;
à générer (302), au moyen du noeud SGSN, un message de demande d'accord de clé et d'authentification sur la couche de protocole de gestion GMM/SM du noeud SGSN en utilisant la seconde clé et le second algorithme et à envoyer le message de demande d'accord de clé et d'authentification à un équipement utilisateur (UE), dans lequel le
message de demande d'accord de clé et d'authentification comporte un premier code d'authentification de message et le second identifiant d'algorithme ;
à recevoir (303), au moyen du noeud SGSN en utilisant la couche de protocole de gestion GMM/SM du noeud SGSN, un message de réponse d'accord de clé et d'authentification en provenance de l'équipement utilisateur, dans lequel le message de réponse d'accord de clé et d'authentification comporte un second code d'authentification de message ; et
à vérifier (304), au moyen du noeud SGSN, le second code d'authentification de message sur la couche de protocole de gestion GMM/SM du noeud SGSN en utilisant la seconde clé et le second algorithme ;
dans lequel, après la vérification (304), par le noeud SGSN, du second code d'authentification de message sur la couche de protocole de gestion GMM/SM du noeud SGSN en utilisant la seconde clé et le second algorithme, le procédé consiste en outre :
à envoyer, au moyen du noeud SGSN, lorsque le noeud SGSN détermine que la vérification du second code d'authentification de message a réussi, la seconde clé et le second identifiant d'algorithme à une couche de protocole de commande de liaison logique (LLC) du noeud SGSN en utilisant la couche de protocole de gestion GMM/SM du noeud SGSN ;
à chiffrer, au moyen du noeud SGSN, des données de plan d'utilisateur et une signalisation de plan de commande sur la couche de protocole de commande LLC du noeud SGSN en utilisant la seconde clé de chiffrement et le second algorithme de chiffrement indiqué par un second identifiant d'algorithme de chiffrement ; et
à réaliser, au moyen du noeud SGSN, une protection d'intégrité pour la signalisation de plan de commande sur la couche de protocole de commande LLC du noeud SGSN en utilisant la seconde clé d'intégrité et le second algorithme de protection d'intégrité indiqué par un second identifiant d'algorithme de protection d'intégrité.

6. Procédé selon la revendication 5, dans lequel la seconde clé comprend une seconde clé de chiffrement et une seconde clé d'intégrité et le second algorithme comprend un second algorithme de chiffrement et un second algorithme de protection d'intégrité.

7. Procédé selon la revendication 5 ou 6, dans lequel, avant la génération d'un message de demande d'accord de clé et d'authentification sur la couche de protocole de gestion GMM/SM du noeud SGSN et l'envoi du message de demande d'accord de clé et d'authentification à un équipement utilisateur (UE), le procédé consiste en outre :
à recevoir, au moyen du noeud SGSN en utilisant la couche de protocole de gestion GMM/SM du noeud SGSN, un message de demande de rattachement en provenance de l'équipement utilisateur, dans lequel le message de demande de rattachement comporte un identifiant de l'équipement utilisateur et des informations de capacité de réseau de l'équipement d'utilisateur ; et
l'obtention, par un noeud SGSN, d'un second identifiant d'algorithme sur une couche de protocole de gestion GMM/SM du noeud SGSN et la génération d'une seconde clé consistent :
à obtenir, au moyen du noeud SGSN, le second algorithme en fonction des informations de capacité de réseau de l'équipement utilisateur ; et
à obtenir, au moyen du noeud SGSN, des informations de vecteur d'autorisation de l'équipement utilisateur en fonction de l'identifiant de l'équipement utilisateur et à générer la seconde clé en fonction des informations de vecteur d'autorisation.

8. Équipement utilisateur (UE), **caractérisé en ce qu'**il comprend :
un module de réception (601), configuré pour recevoir, en utilisant une couche de protocole de gestion de mobilité de service GPRS (GMM)/gestion de session (SM) de l'équipement utilisateur, un message de demande d'accord de clé et d'authentification en provenance d'un noeud de prise en charge de service GPRS de desserte (SGSN), dans lequel le message de demande d'accord de clé et d'authentification comporte un premier code d'authentification de message et un premier identifiant d'algorithme et le premier identifiant d'algorithme est utilisé pour indiquer un premier algorithme ;
un module d'obtention (602), configuré pour obtenir le premier identifiant d'algorithme sur la couche de protocole de gestion GMM/SM de l'équipement utilisateur en fonction du message de demande d'accord de clé et d'authentification reçu par le module de réception et pour générer une première clé ;
un module de vérification (603), configuré pour vérifier le premier code d'authentification de message sur la couche de protocole de gestion GMM/SM de l'équipement utilisateur en fonction de la première clé obtenue par le module d'obtention et du premier algorithme généré par le module d'obtention ;
un module de génération (604), configuré pour générer, lorsque le module de vérification détermine que la vérification du premier code d'authentification de message a réussi, un message de réponse d'accord de clé et d'authentification sur la couche de protocole de gestion GMM/SM de l'équipement utilisateur en fonction de la première clé et du premier algorithme, dans lequel le message de réponse d'accord de clé et d'authentification comporte un second code d'authentification de message ; et
un premier module d'envoi (605), configuré pour envoyer le message de réponse d'accord de clé et d'authentification généré par le module de génération au noeud SGSN en utilisant la couche de protocole de gestion GMM/SM de l'équipement utilisateur ;
dans lequel l'équipement utilisateur comprend en outre :
un troisième module d'envoi (608), configuré : après que le premier module d'envoi (605) envoie le message de réponse d'accord de clé et d'authentification au noeud SGSN en utilisant la couche de protocole de gestion GMM/SM de l'équipement utilisateur, pour envoyer la première clé et le premier identifiant d'algorithme à une couche de protocole de commande de liaison logique (LLC) de l'équipement utilisateur en utilisant la couche de protocole de gestion GMM/SM de l'équipement utilisateur ;
un module de chiffrement (609), configuré : après que le troisième module d'envoi (608) envoie la première clé et le premier identifiant d'algorithme à la couche de protocole de commande de liaison logique (LLC) de l'équipement utilisateur en utilisant la couche de protocole de gestion GMM/SM de l'équipement utilisateur, pour chiffrer des données de plan d'utilisateur et une signalisation de plan de commande sur la couche de protocole de commande LLC de l'équipement utilisateur en utilisant la première clé de chiffrement et le premier algorithme de chiffrement indiqué par le premier identifiant d'algorithme de chiffrement, et pour réaliser une protection d'intégrité pour la signalisation de plan de commande sur la couche de protocole de commande LLC de l'équipement utilisateur en utilisant la première clé d'intégrité et le premier algorithme de protection d'intégrité indiqué par le premier identifiant d'algorithme de protection d'intégrité.

9. Équipement utilisateur selon la revendication 8, dans lequel la première clé comprend une première clé de chiffrement et une première clé d'intégrité et le premier algorithme comprend un premier algorithme de chiffrement et un premier algorithme de protection d'intégrité.

10. Équipement utilisateur selon la revendication 9, dans lequel l'équipement utilisateur comprend en outre :
un module de traitement de message (606), configuré pour réaliser une protection d'intégrité pour le message de réponse d'accord de clé et d'authentification sur la couche de protocole de gestion GMM/SM de l'équipement utilisateur en utilisant la première clé d'intégrité et le premier algorithme de protection d'intégrité indiqué par un premier identifiant d'algorithme de protection d'intégrité.

11. Équipement utilisateur selon l'une quelconque des revendications 8 à 10, dans lequel l'équipement utilisateur comprend en outre :
un deuxième module d'envoi (607), configuré ; avant que le module de réception (601) ne reçoive, en utilisant la couche de protocole de gestion GMM/SM de l'équipement utilisateur, le message de demande d'accord de clé et d'authentification en provenance du noeud SGSN, pour envoyer un message de demande de rattachement à une couche de protocole de gestion GMM/SM du noeud SGSN en utilisant la couche de protocole de gestion GMM/SM de l'équipement utilisateur, dans lequel le message de demande de rattachement comporte un identifiant de l'équipement utilisateur et des informations de capacité de réseau de l'équipement utilisateur.

12. Dispositif **caractérisé en ce qu'**il comprend :
un module d'obtention (701), configuré pour obtenir un second identifiant d'algorithme sur une couche de protocole de gestion de mobilité de service GPRS (GMM)/gestion de session (SM) d'un noeud de prise en charge de service GPRS de desserte (SGSN) et pour générer une seconde clé, dans lequel le second identifiant d'algorithme est utilisé pour indiquer un second algorithme ;
un module de génération (702), configuré pour générer un message de demande d'accord de clé et d'authentification sur la couche de protocole de gestion GMM/SM du noeud SGSN en utilisant la seconde clé et le second algorithme qui sont obtenus par le module d'obtention, et pour envoyer le message de demande d'accord de clé et d'authentification à un équipement utilisateur (UE), dans lequel le message de demande d'accord de clé et d'authentification comporte un premier code d'authentification de message et le second identifiant d'algorithme ;
un premier module de réception (703), configuré pour recevoir, en utilisant la couche de protocole de gestion GMM/SM du noeud SGSN, un message de réponse d'accord de clé et d'authentification en provenance de l'équipement utilisateur, dans lequel le message de réponse d'accord de clé et d'authentification comporte un second code d'authentification de message ; et
un module de vérification (704), configuré pour vérifier le second code d'authentification de message reçu par le premier module de réception, sur la couche de protocole de gestion GMM/SM du noeud SGSN en utilisant la seconde clé et le second algorithme ;
dans lequel le dispositif comprend en outre :
un module d'envoi (706), configuré pour envoyer, si le module de vérification (704) détermine que la vérification du second code d'authentification de message a réussi, la seconde clé et le second identifiant d'algorithme à une couche de protocole de commande de liaison logique (LLC) du noeud SGSN en utilisant la couche de protocole de gestion GMM/SM du noeud SGSN ;
un module de chiffrement (707), configuré ; après que le module d'envoi (706) envoie la seconde clé et le second identifiant d'algorithme à la couche de protocole de commande de liaison logique (LLC) du noeud SGSN en utilisant la couche de protocole de gestion GMM/SM du noeud SGSN, pour chiffrer des données de plan d'utilisateur et une signalisation de plan de commande sur la couche de protocole de commande LLC du noeud SGSN en utilisant la seconde clé de chiffrement et le second algorithme de chiffrement indiqué par un second identifiant d'algorithme de chiffrement, et pour réaliser une protection d'intégrité pour la signalisation de plan de commande sur la couche de protocole de commande LLC du noeud SGSN en utilisant la seconde clé d'intégrité et le second algorithme de protection d'intégrité indiqué par un second identifiant d'algorithme de protection d'intégrité.

13. Dispositif selon la revendication 12, dans lequel la seconde clé comprend une seconde clé de chiffrement et une seconde clé d'intégrité et le second algorithme comprend un second algorithme de chiffrement et un second algorithme de protection d'intégrité.

14. Dispositif selon la revendication 12 ou 13, dans lequel le dispositif comprend en outre :
un second module de réception (705), configuré : avant que le module de génération (702) ne génère le message de demande d'accord de clé et d'authentification sur la couche de protocole de gestion GMM/SM du noeud SGSN et n'envoie le message de demande d'accord de clé et d'authentification à l'équipement utilisateur, pour recevoir, en utilisant la couche de protocole de gestion GMM/SM du noeud SGSN, un message de demande de rattachement en provenance de l'équipement utilisateur, dans lequel le message de demande de rattachement comporte un identifiant de l'équipement utilisateur et des informations de capacité de réseau de l'équipement d'utilisateur ; et
le module d'obtention (701) comprend :
une unité d'obtention, configurée pour obtenir le second algorithme en fonction des informations de capacité de réseau de l'équipement utilisateur ; et
une unité de génération, configurée pour obtenir des informations de vecteur d'autorisation de l'équipement utilisateur en fonction de l'identifiant de l'équipement utilisateur et pour générer la seconde clé en fonction des informations de vecteur d'autorisation.

15. Système de protection de message, **caractérisé en ce qu'**il comprend :
l'équipement utilisateur selon l'une quelconque des revendications 8 à 11 ; et
le dispositif selon l'une quelconque des revendications 12 à 14.
